(19) Europäisches Patentamt
European Patent Office
Office européen des brevets

(11) **EP 2 787 294 B1**

(12) **FASCICULE DE BREVET EUROPEEN**

(45) Date de publication et mention
de la délivrance du brevet:
**04.07.2018 Bulletin 2018/27**

(51) Int Cl.:
*F24F 3/147* *(2006.01)*     *F24F 5/00* *(2006.01)*
*F24F 12/00* *(2006.01)*     *F24F 3/044* *(2006.01)*

(21) Numéro de dépôt: **14154734.9**

(22) Date de dépôt: **11.02.2014**

(54) **Installation et procédé de régulation thermique multizone**

Anlage und Verfahren zur thermischen Mehrfachzonenregulierung

Installation and method for multi-zone thermal control

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **14.02.2013 FR 1351248**

(43) Date de publication de la demande:
**08.10.2014 Bulletin 2014/41**

(73) Titulaires:
• **La Performance Energétique**
**06560 Valbonne (FR)**
• **Lamouche, Thierry**
**06560 Valbonne (FR)**

(72) Inventeurs:
• **Lamouche, Thierry**
**06560 VALBONNE (FR)**
• **Brouchery, Hervé**
**06560 VALBONNE (FR)**

(74) Mandataire: **Chevalier, Renaud Philippe et al**
**Cabinet Germain & Maureau**
**BP 6153**
**69466 Lyon Cedex 06 (FR)**

(56) Documents cités:
**WO-A1-00/34719**     **FR-A1- 2 938 319**
**US-A- 5 579 647**     **US-A1- 2005 156 054**
**US-A1- 2006 186 213**     **US-B1- 8 151 578**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 2 787 294 B1

**Description**

La présente invention se rapporte à une installation de régulation thermique multizone, autrement dit une installation adaptée pour la régulation thermique sur plusieurs zones distinctes à réguler.

Elle se rapporte plus particulièrement à une installation de régulation thermique multizone employant une centrale d'air à dessiccation.

Les centrales d'air à dessiccation, également appelées système « dessicant cooling », sont généralement employées pour produire de l'air frais par la combinaison de techniques de rafraîchissement évaporatif et de déshumidification par dessiccant.

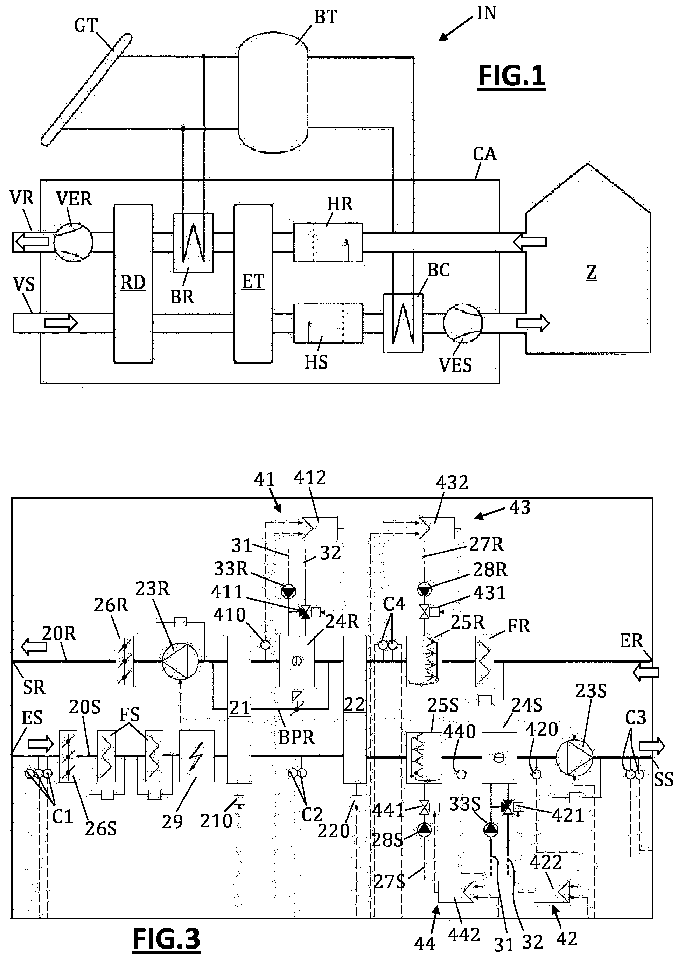

La figure 1 illustre une installation IN classique équipée d'une centrale d'air à dessiccation CA qui comporte deux voies de circulation d'air dites de reprise VR et de soufflage VS entre la zone Z et l'extérieur, une roue dessiccante RD et un échangeur thermique ET du type roue de récupération sensible, interposés sur les deux voies VR, VS, un ventilateur de reprise VER placé sur la voie de reprise VR pour rejeter l'air vers l'extérieur, une batterie chauffante dite de régénération BR placée sur la voie de reprise VR en amont de la roue dessiccante RD et en aval de l'échangeur thermique ET, un humidificateur dit de reprise HR placé sur la voie de reprise VR en amont de l'échangeur thermique ET, un ventilateur dit de soufflage VES placé sur la voie de soufflage VS pour souffler l'air dans la zone Z, une batterie chauffante dite de chauffage BC placée sur la voie de soufflage VS en aval de l'échangeur thermique ET et en amont du ventilateur de soufflage VES, un humidificateur de soufflage HS placé sur la voie de soufflage VS en aval de l'échangeur thermique ET.

L'installation classique comporte en outre un générateur thermique GT du type capteur solaire, qui est en liaison avec les batteries chauffantes de régénération BR et de chauffage BC via un ballon tampon BT.

La description qui suit porte sur le fonctionnement d'une telle installation IN dans un mode de rafraîchissement et dans un mode de chauffage.

En mode rafraîchissement, l'air extérieur (eg. air à une température de 30°C et une humidité relative de 14 g/kg) est aspiré dans la voie de soufflage VS grâce au ventilateur de soufflage VES et cet air extérieur entre dans la roue dessiccante RD. La roue dessiccante RD a pour fonction d'assécher ou déshumidifier l'air entrant par adsorption lors de son passage (eg. abaissement de l'humidité absolue entre 5 et 8 g/kg). L'air sortant de la roue dessicante RD est un air sec et chaud (eg. air à une température de 50°C et une humidité relative de 7 g/kg) qui est ensuite pré-refroidi dans l'échangeur thermique ET. Cet air pré-froidi en sortie de l'échangeur thermique ET (eg. air à une température de 30°C et une humidité relative de 7 g/kg) est ensuite refroidi lors de son passage dans l'humidificateur de soufflage HS, classiquement du type humidificateur à contact direct, pour atteindre le niveau de température et/ou d'humidité souhaitée (eg. air à une température de 18°C et une humidité relative de 11 g/kg), avant d'entrer dans la zone Z.

En parallèle, l'air sortant de la zone Z et entrant dans la voie de reprise VR, sous l'effet du ventilateur de reprise VER, est prélevé en partie haute de la zone (eg. air à une température de 25°C et une humidité relative de 13 g/kg). Cet air de reprise est refroidi par humidification dans l'humidificateur de reprise HR afin d'augmenter son potentiel de refroidissement de l'air neuf entrant. L'air sortant de l'humidificateur de reprise HR (eg. air à une température de 20°C et une humidité relative de 14 g/kg) est ensuite préchauffé dans l'échangeur thermique ET utilisé pour refroidir l'air neuf, en récupérant les calories de cet air neuf entrant. Cet air préchauffé (eg. air à une température de 40°C et une humidité relative de 14 g/kg) est ensuite chauffé dans la batterie chauffante de régénération BR (qui constitue un échangeur de chaleur) en utilisant la chaleur fournie par le générateur thermique GT. L'air chaud obtenu, dit « air de reprise » (eg. air à une température de 70-75 °C et une humidité relative de 14 g/kg), traverse ensuite la roue dessiccante RD de manière à régénérer l'adsorbant qu'elle contient et sécher l'air neuf avant d'être évacué vers l'extérieur. La régénération de l'adsorbant de la roue dessiccante RD nécessite une température de chauffage du générateur thermique GT de l'ordre de 45-95 °C, le ballon tampon BT étant implanté pour réguler ce chauffage.

En mode chauffage, l'air extérieur (eg. air à une température de 0°C) est aspiré dans la voie de soufflage, et ensuite préchauffé dans l'échangeur thermique ET qui récupère des calories de l'air prélevé dans la zone, afin de fournir un air préchauffé (eg. air à une température de 16°C). Puis, cet air préchauffé est chauffé dans la batterie chauffante de chauffage BC, grâce au générateur thermique GT, pour fournir un air chaud (eg. air à une température de 24-34°C) dans la zone Z. La roue dessicante RD, la batterie chauffante de régénération BR et les humidificateurs HR, HS ne sont pas utilisés pour chauffer l'air extérieur, mais ils peuvent être activés pour permettre un réglage fin du taux d'humidité à l'intérieur de la zone Z.

Cette installation IN permet d'assurer un air de soufflage entrant dans la zone Z à une température, une humidité et un débit de soufflage en adéquation avec les besoins d'une seule zone Z.

Cependant, une telle installation IN ne permet pas de conditionner un bâtiment présentant plusieurs zones thermiques ayant des besoins différents. Autrement dit, l'installation IN classique est inadaptée pour répondre à elle seule à des demandes distinctes, en termes de température et d'humidité relative, de plusieurs zones à réguler et est donc inopérante pour réaliser de la régulation thermique multizone. Ainsi, intégrer une telle installation IN pour la régulation thermique d'un bâtiment multizone engendrerait une dérive de confort pour la plupart des zones thermiques du bâtiment.

Il est également connu de l'état de la technique le document WO 00/34719 qui décrit une installation de régulation thermique comprenant une centrale d'air à dessiccation comportant deux voies de circulation d'air dites de reprise et de soufflage, une roue dessicante interposée sur les deux voies, au moins un échangeur thermique, un ventilateur dit de soufflage placé sur la voie de soufflage, un humidificateur dit de soufflage placée sur la voie de soufflage en aval de l'échangeur thermique.

La présente invention a pour but de résoudre cet inconvénient en proposant une installation de régulation thermique multizone qui intègre une centrale d'air à dessiccation et qui permette d'assurer une régulation thermique de plusieurs zones à réguler ayant des besoins distincts en termes de température et d'humidité relative.

La présente invention a également pour but de proposer un procédé de régulation thermique multizone, qui assure un pilotage de ladite installation pour offrir une réponse thermique adaptée à chaque zone.

A cet effet, elle propose une installation de régulation thermique multizone pour la régulation thermique sur plusieurs zones distinctes à réguler, ladite installation intégrant :

- une centrale d'air à dessiccation comportant deux voies de circulation d'air dites de reprise et de soufflage entre les zones et l'extérieur, une roue dessiccante et un échangeur thermique interposés sur les deux voies, un ventilateur de reprise placé sur la voie de reprise pour rejeter l'air vers l'extérieur, une batterie chauffante dite de régénération placée sur la voie de reprise en amont de la roue dessiccante et en aval de l'échangeur thermique, un humidificateur dit de reprise placé sur la voie de reprise en amont de l'échangeur thermique, un ventilateur dit de soufflage placé sur la voie de soufflage pour souffler l'air dans les zones, un humidificateur dit de soufflage placé sur la voie de soufflage en aval de l'échangeur thermique et une batterie chauffante dite de chauffage placée sur la voie de soufflage en aval de l'humidificateur de soufflage ;
- une canalisation de soufflage présentant une entrée connectée en sortie de la voie de soufflage et des sorties dans les différentes zones ;
- une canalisation de reprise présentant des entrées dans les différentes zones et une sortie connectée en entrée de la voie de reprise ;
- un générateur thermique en liaison avec les batteries chauffantes de régénération et de chauffage via un ballon tampon ;
- un premier système de mesure de la température, de la pression et de l'humidité relative dans la voie de soufflage, à son entrée en amont de la roue dessiccante ;
- un deuxième système de mesure de la température et de l'humidité relative dans la voie de soufflage, en aval de la roue dessiccante et en amont de l'échangeur thermique ;
- un troisième système de mesure de la température et de l'humidité relative dans la voie de soufflage, à sa sortie en aval du ventilateur de soufflage et de l'humidificateur de soufflage ;
- un quatrième système de mesure de la température et de l'humidité relative dans la voie de reprise, en aval de l'humidificateur de reprise et en amont de l'échangeur thermique ;
- un cinquième système de mesure de la température dans le ballon tampon ;
- un sixième système de mesure de la température et de l'humidité relative pour chacune des zones ;
- un premier système de régulation de la température en sortie de la batterie chauffante de régénération ;
- un deuxième système de régulation de la température en sortie de la batterie chauffante de chauffage ;
- un troisième système de régulation de la température en sortie de l'humidificateur de reprise ;
- un quatrième système de régulation de la température en sortie de l'humidificateur de soufflage ;
- un système aéraulique de réglage du débit d'air à chaque sortie de la canalisation de soufflage, pour régler de manière indépendante le débit d'air soufflé dans chacune des zones ;
- un dispositif d'entrée d'une plage de température de confort et d'une plage d'humidité relative de confort pour chacune des zones ;
- une unité de pilotage reliée :

  - aux systèmes de mesure pour recevoir leurs données de mesure ;
  - aux ventilateurs de reprise et de soufflage pour contrôler leurs débits respectifs de ventilation ;
  - à la roue dessiccante pour commander sa mise en marche/arrêt ;
  - à l'échangeur thermique pour commander sa mise en marche/arrêt ;
  - aux systèmes de régulation pour contrôler les températures de sortie correspondantes ;
  - aux systèmes aérauliques pour contrôler de manière indépendante les débits d'air soufflé dans les différentes zones ;
  - au dispositif d'entrée pour recevoir les plages de température et d'humidité relative de confort dans les différentes zones ;

ladite unité de pilotage étant conçue pour piloter de manière dynamique, à intervalles de temps déterminés et/ou réguliers, en fonction des données de mesure et des plages de température et d'humidité relative de confort :

- les composants de la centrale d'air à dessiccation, à savoir la roue dessiccante, l'échangeur thermique, les systèmes de régulation, les humidificateurs et les batteries de chauffage, pour que la centrale d'air à dessiccation délivre, en sortie de sa voie de soufflage, de l'air à une température et une humidité relative dites de soufflage prédéterminées ; et
- les ventilateurs et les systèmes aérauliques pour que les systèmes aérauliques soufflent chacun de l'air à ladite température de soufflage, à ladite humidité relative de soufflage et à un débit dit de soufflage propre à chacune des zones.

Ainsi, l'installation conforme à l'invention permet de piloter les différents composants de l'installation pour pouvoir réguler chaque zone de manière optimale afin de répondre aux besoins de chaque zone, en permettant d'assurer une température et une humidité relative de soufflage optimales par rapport aux demandes en chauffage et en rafraîchissement des zones, et des débits de soufflage propres à chaque zone.

Autrement dit, cette installation permet la mise en oeuvre d'une stratégie de pilotage de ses composants qui intègre la contrainte multizone de la régulation thermique, en faisant en sorte que, premièrement, la température unique de soufflage est choisie en tenant compte des besoins de chaque zone (optimisation de la température de soufflage tout en respectant les plages de température de confort propres à chaque zone) et, deuxièmement, le débit d'air soufflé (ou débit de soufflage) est calculé et/ou adapté zone par zone. Ce degré de réglage des débits de soufflage permet au final de réguler finement la puissance de chauffage/rafraîchissement pour chaque zone à partir d'une seule centrale d'air à dessiccation commune à toutes les zones.

L'invention se rapporte également à un procédé de régulation thermique multizone pour la régulation thermique sur plusieurs zones distinctes à réguler, ledit procédé consistant à piloter une installation conforme à l'invention par la mise en oeuvre des étapes suivantes :

- établissement d'une première mesure de la température, de la pression et de l'humidité relative dans la voie de soufflage en amont de la roue dessiccante ;
- établissement d'une deuxième mesure de la température et de l'humidité relative dans la voie de soufflage en aval de la roue dessiccante et en amont de l'échangeur thermique ;
- établissement d'une troisième mesure de la température et de l'humidité relative dans la voie de soufflage en aval du ventilateur de soufflage et en amont des zones ;
- établissement d'une quatrième mesure de la température et de l'humidité relative dans la voie de reprise en aval de l'humidificateur de reprise et en amont de l'échangeur thermique ;
- établissement d'une cinquième mesure de la température dans le ballon tampon ;
- établissement d'une sixième mesure de la température et de l'humidité relative pour chacune des zones ;
- entrée d'une plage de température de confort et d'une plage d'humidité relative de confort pour chacune des zones ;
- pilotage dynamique, à intervalles de temps déterminés et/ou réguliers, en fonction des données de mesure et des plages de température et d'humidité relative de confort :

  - d'une part et selon un pilotage principal, des composants de la centrale d'air à dessiccation, à savoir la roue dessiccante, l'échangeur thermique, les systèmes de régulation, les humidificateurs et les batteries de chauffage, pour que la centrale d'air à dessiccation délivre, en sortie de sa voie de soufflage, de l'air à une température et une humidité relative dites de soufflage prédéterminées ; et
  - d'autre part et selon un pilotage secondaire, des ventilateurs et des systèmes aérauliques pour que les systèmes aérauliques soufflent chacun de l'air à ladite température de soufflage, à ladite humidité relative de soufflage et à un débit dit de soufflage propre à chacune des zones.

Ainsi, ce procédé de régulation assure la stratégie de pilotage des composants de l'installation afin d'obtenir la température unique de soufflage ainsi que les débits de soufflage propres à chaque zone qui permettent de maintenir les consignes en température et humidité de chaque zone traitée, autrement dit rester dans les plages de confort.

Selon une caractéristique, dans le pilotage principal, on pilote les composants de la centrale d'air à dessiccation selon l'un des modes de fonctionnement suivants :

- un mode dit de ventilation qui consiste à assurer une ventilation libre des zones, où la roue dessiccante, l'échangeur thermique, les humidificateurs et les batteries de chauffage sont inactifs, et les ventilateurs sont actifs ;
- un mode dit de chauffage qui consiste à assurer le chauffage des zones où l'échangeur thermique, la batterie chauffante de chauffage et les deux ventilateurs sont actifs, tandis que la roue dessiccante, la batterie chauffante de régénération et les deux humidificateurs sont inactifs ;
- un premier mode de rafraîchissement où la batterie chauffante de chauffage et les deux ventilateurs sont actifs, tandis que la roue dessiccante, l'échangeur thermique, la batterie chauffante de régénération et les deux humidificateurs sont inactifs ;

- un deuxième mode de rafraîchissement où l'échangeur thermique, l'humidificateur de reprise et les deux ventilateurs sont actifs, tandis que la roue dessiccante, les batteries de chauffage et l'humidificateur de soufflage sont inactifs ;
- un troisième mode de rafraîchissement où l'échangeur thermique, les deux humidificateurs et les deux ventilateurs sont actifs, tandis que la roue dessiccante et les batteries de chauffage sont inactives ;
- un quatrième mode de rafraîchissement où l'échangeur thermique, les deux humidificateurs, la roue dessiccante, la batterie chauffante de régénération et les deux ventilateurs sont actifs, tandis que la batterie chauffante de chauffage est inactive.

L'avantage de travailler avec ces six modes de régulation est de permettre de répondre aux demandes en régulation des zones, tout en limitant la consommation énergétique pour la centrale d'air à dessiccation, car tel mode moins énergivore peut être suffisant pour répondre aux demandes par rapport à un autre mode plus consommateur en énergie. En effet, le premier mode de rafraîchissement est moins énergivore que le deuxième mode de rafraîchissement, lui-même moins énergivore que le troisième mode de rafraîchissement puis que le quatrième mode de rafraîchissement.

Selon une autre caractéristique, on exécute, à intervalles de temps déterminés et/ou réguliers, une séquence principale (« SEQ.A »), qui comporte successivement :

- une séquence dite de contrôle des conditions (« SEQ.B ») de chacune des zones qui consiste à comparer, pour chaque zone, les sixièmes mesures de la température et de l'humidité relative dans ladite zone avec la plage de température de confort et la plage d'humidité relative de confort de ladite zone, pour mettre à jour des données d'information qui traduisent un besoin général en augmentation ou en diminution du chauffage, un besoin général en augmentation ou en diminution du rafraîchissement, des besoins propres à chaque zone en diminution ou en augmentation du débit de soufflage, et des besoins propres à chaque zone en diminution ou en augmentation de l'humidité relative ;
- une séquence dite de pilotage (« SEQ.F ») des composants de l'installation qui consiste à traduire lesdites données d'information relevées à la séquence de contrôle des conditions (« SEQ.B ») en des consignes de fonctionnement pour chacun des composants de l'installation pour un fonctionnement dans l'un des modes de fonctionnement.

Dans une réalisation particulière, dans la séquence de contrôle des conditions (« SEQ.B »), on réalise une étape de vérification du mode de fonctionnement qui est cours de fonctionnement, puis :

- si c'est le mode de ventilation qui est en fonctionnement, on enchaine par une séquence de contrôle de ce mode de ventilation (« SEQ.C ») pour mettre à jour les données d'information qui traduisent un besoin général en augmentation du chauffage, un besoin général en augmentation du rafraîchissement et des besoins propres à chaque zone en augmentation du débit de soufflage ;
- si c'est l'un des quatre modes de rafraîchissement qui est en fonctionnement, on enchaine par une séquence de contrôle du mode de rafraîchissement (« SEQ.D ») pour mettre à jour les données d'information qui traduisent un besoin général en diminution ou en augmentation du rafraîchissement, et des besoins propres à chaque zone en diminution et en augmentation du débit de soufflage ;
- si c'est le mode de chauffage qui est en fonctionnement, on enchaine par une séquence de contrôle de ce mode de chauffage (« SEQ.E ») pour mettre à jour les données d'information qui traduisent un besoin général en diminution ou en augmentation du chauffage, et des besoins propres à chaque zone en diminution et en augmentation du débit de soufflage.

Avantageusement, lors de la séquence de contrôle du mode de rafraîchissement (« SEQ.D »), on étudie, pour chaque zone, les trois paramètres suivants pour la mise à jour des données d'information :

- $Prafri = TZi - TCmaxi$, où $TCmaxi$ est la valeur maximale de la plage température de confort ;
- $MOYrafri = TZimoy - TCmaxi$, où $TZimoy$ est une moyenne des températures $TZi$ mesurées sur des intervalles de temps précédents ;
- $TENDi = TZi$ mesurée sur l'intervalle de temps présent - $Tzi$ mesurée sur l'intervalle de temps précédent.

Dans un mode de réalisation particulier, lors de la séquence de contrôle du mode de chauffage (« SEQ.E »), on étudie, pour chaque zone, les trois paramètres suivants pour la mise à jour des données d'information :

- $Pchaufi = TZi - TCmini$, où $TCmini$ est la valeur minimale de la plage de température de confort ;
- $MOYchaufi = TZimoy - Tcmini$, où $TZimoy$ est une moyenne des températures $TZi$ mesurées sur des intervalles de temps précédents ;

- TENDi = TZi mesurée sur l'intervalle de temps présent - Tzi mesurée sur l'intervalle de temps précédent.

Selon une possibilité de l'invention, dans la séquence de pilotage (« SEQ.F »), on réalise :

- une première phase d'arbitrage entre les données d'information sur les besoins généraux en diminution ou en augmentation du rafraîchissement et sur les besoins généraux en diminution ou en augmentation du chauffage, en comparant les températures mesurées dans les zones avec leurs plages de température de confort respectives ; puis
- une seconde phase dans laquelle on met en oeuvre l'une des séquences suivantes en fonction de l'arbitrage réalisé dans la première phase :

  - une séquence (« SEQ.G ») d'augmentation du rafraîchissement à partir du mode de ventilation ;
  - une séquence (« SEQ.H ») d'augmentation du rafraîchissement à partir du premier mode de rafraîchissement ;
  - une séquence (« SEQ.I ») d'augmentation du rafraîchissement à partir du deuxième mode de rafraîchissement ;
  - une séquence (« SEQ.J ») d'augmentation du rafraîchissement à partir du troisième mode de rafraîchissement ;
  - une séquence (« SEQ.K ») d'augmentation du rafraîchissement à partir du quatrième mode de rafraîchissement ;
  - une séquence (« SEQ.L ») de diminution du rafraîchissement à partir du premier mode de rafraîchissement ;
  - une séquence (« SEQ.M ») de diminution du rafraîchissement à partir du deuxième mode de rafraîchissement ;
  - une séquence (« SEQ.N ») de diminution du rafraîchissement à partir du troisième mode de rafraîchissement ;
  - une séquence (« SEQ.O ») de diminution du rafraîchissement à partir du quatrième mode de rafraîchissement ;
  - une séquence (« SEQ.P ») d'augmentation du chauffage à partir du mode de ventilation ;
  - une séquence (« SEQ.Q ») d'augmentation du chauffage à partir du mode de chauffage ;
  - une séquence (« SEQ.R ») de diminution du chauffage à partir du mode de chauffage ;

- puis on poursuit la seconde phase avec l'une des deux séquences suivantes :

  - une séquence (« SEQ.S ») de diminution de l'humidité relative ;
  - une séquence (« SEQ.T ») d'augmentation de l'humidité relative.

Conformément à d'autres caractéristiques avantageuses de l'invention :

- dans la séquence (« SEQ.G ») d'augmentation du rafraîchissement à partir du mode de ventilation, on compare la température mesurée par le premier système de mesure avec une température seuil minimale de l'air soufflée pour établir si on bascule dans le premier mode de rafraîchissement ou dans le deuxième mode de rafraîchissement ;
- dans la séquence (« SEQ.H ») d'augmentation du rafraîchissement à partir du premier mode de rafraîchissement, on bascule dans le troisième mode de rafraîchissement avec une régulation de la température en sortie de l'humidificateur de reprise autour d'une température seuil minimale de l'air soufflée ;
- dans la séquence (« SEQ.I ») d'augmentation du rafraîchissement à partir du deuxième mode de rafraîchissement, on teste la capacité de l'humidificateur de reprise pour établir si on bascule dans le troisième mode de rafraîchissement ou si on reste dans le deuxième mode de rafraîchissement avec une diminution de la température de régulation en sortie de l'humidificateur de reprise ;
- dans la séquence (« SEQ.J ») d'augmentation du rafraîchissement à partir du troisième mode de rafraîchissement, on teste la capacité de l'humidificateur de reprise et la capacité de l'humidificateur de soufflage, pour établir si on bascule dans le quatrième mode de rafraîchissement ou si on reste dans le troisième mode de rafraîchissement, avec éventuellement une diminution de la température de régulation en sortie de l'un des humidificateurs ;
- dans la séquence (« SEQ.K ») d'augmentation du rafraîchissement à partir du quatrième mode de rafraîchissement, on teste la capacité de l'humidificateur de reprise et la capacité de l'humidificateur de soufflage, pour établir un ajustement dans le quatrième mode de rafraîchissement qui consiste à : soit diminuer la température de régulation en sortie de l'humidificateur de reprise, soit diminuer la température de régulation en sortie de l'humidificateur de soufflage, soit augmenter la température de régulation en sortie de la batterie chauffante de régénération ;
- dans la séquence (« SEQ.L ») de diminution du rafraîchissement à partir du premier mode de rafraîchissement, on vérifie si la demande en diminution du rafraîchissement est requise pour toutes les zones et si un débit minimal de soufflage est mis en oeuvre pour toutes les zones, pour établir si on bascule dans le mode de ventilation ou si on reste dans le premier mode de rafraîchissement sans ajustement ;
- dans la séquence (« SEQ.M ») de diminution du rafraîchissement à partir du deuxième mode de rafraîchissement, on commande l'augmentation de la température de régulation en sortie de l'humidificateur de reprise, puis on vérifie si la demande en diminution du rafraîchissement est requise pour toutes les zones et on compare la température de régulation en sortie de l'humidificateur de reprise avec le maximum des températures mesurées dans les zones, pour établir si on bascule dans le mode de ventilation ou si on reste dans le deuxième mode de rafraîchissement ;

- dans la séquence (« SEQ.N ») de diminution du rafraîchissement à partir du troisième mode de rafraîchissement, on commande l'augmentation de la température de régulation en sortie de l'humidificateur de soufflage, puis on compare la température de régulation en sortie de l'humidificateur de soufflage avec la température de régulation en sortie de l'humidificateur de reprise, pour établir si on bascule dans le deuxième mode de rafraîchissement ou si on reste dans le troisième mode de rafraîchissement ;
- dans la séquence (« SEQ.O ») de diminution du rafraîchissement à partir du quatrième mode de rafraîchissement, on calcule une température théorique de soufflage si la roue dessiccante n'était pas activée, puis on compare cette température théorique de soufflage avec la température de régulation en sortie de l'humidificateur de soufflage pour établir si on bascule dans le troisième mode de rafraîchissement ou si on reste dans le quatrième mode de rafraîchissement avec une augmentation de la température de régulation en sortie de l'humidificateur de soufflage ;
- dans la séquence (« SEQ.P ») d'augmentation du chauffage à partir du mode de ventilation, on bascule en mode de chauffage en fixant la température de régulation en sortie de la batterie chauffante de chauffage à une valeur prédéterminée d'initialisation ;
- dans la séquence (« SEQ.Q ») d'augmentation du chauffage à partir du mode de chauffage, on reste dans le mode de chauffage en augmentant la température de régulation en sortie de la batterie chauffante de chauffage ;
- dans la séquence (« SEQ.R ») de diminution du chauffage à partir du mode de chauffage, on diminue la température de régulation en sortie de la batterie chauffante de chauffage, puis on vérifie si la demande en diminution de chauffage est requise pour toutes les zones, on compare la température de régulation en sortie de la batterie chauffante de chauffage avec le minimum des températures dans les zones, et on vérifie si la température maximale de confort a été atteinte par au moins une zone, pour établir si on bascule dans le troisième mode de rafraîchissement, ou si on bascule dans le mode de ventilation ou si on reste dans le mode de chauffage ;
- dans la séquence (« SEQ.S ») de diminution de l'humidité relative, on met en marche l'échangeur et la roue dessiccante, puis on vérifie quel mode de fonctionnement est en cours de fonctionnement, afin de piloter les autres composants de la centrale d'air à dessiccation ;
- dans la séquence (« SEQ.T ») d'augmentation de l'humidité relative, on met en marche l'échangeur, puis on vérifie quel mode de fonctionnement est en cours de fonctionnement, afin de piloter les autres composants de la centrale d'air à dessiccation.

D'autres caractéristiques et avantages de la présente invention apparaîtront à la lecture de la description détaillée ci-après, d'un exemple de mise en oeuvre non limitatif, faite en référence aux figures annexées dans lesquelles :

- la figure 1, déjà commentée, est une vue schématique d'une installation de régulation classique ;
- la figure 2 est une vue schématique d'une installation de régulation conforme à l'invention ;
- la figure 3 est une vue schématique agrandie de la centrale d'air à dessiccation de l'installation de la figure 2 ;
- les figures 4 à 24 sont des schémas fonctionnels des étapes du procédé de régulation conforme à l'invention ;
- les figures 25 et 26 sont des simulations de la mise en oeuvre du procédé de régulation conforme à l'invention pour le traitement de quatre zones avec l'installation de la figure 2.

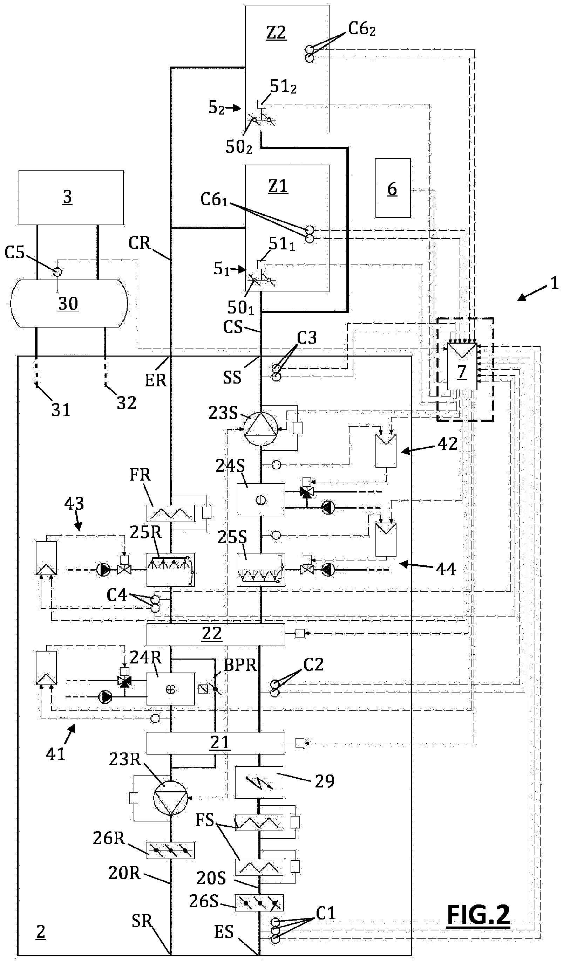

La figure 2 illustre une installation 1 conforme à l'invention pour la régulation thermique de plusieurs zones $Z_i$, $i$ étant un entier compris entre 1 et N avec N le nombre de zones à traiter, où N est supérieur ou égal à 2. Sur la figure 2, seules deux zones $Z_1$, $Z_2$ sont illustrées à titre d'exemple.

Cette installation 1 comporte une centrale 2 d'air à dessiccation, illustrée de manière plus détaillée sur la figure 3, qui présente deux voies parallèles de circulation d'air entre les zones $Z_i$ et l'extérieur EXT, à savoir :

- une voie dite de reprise 20R pour la circulation de l'air des zones $Z_i$ vers l'extérieur EXT ; et
- une voie dite de soufflage 20S pour la circulation de l'air de l'extérieur EXT vers les zones $Z_i$.

Pour la suite de la description, les notions « amont », « aval », « entrée » et « sortie » se réfèrent systématiquement au sens de circulation de l'air dans la voie concernée ou dans l'élément concerné. Ainsi, l'entrée ES de la voie de soufflage 20S se situe du côté de l'extérieur EXT, tandis que sa sortie SS se situe du côté des zones $Z_i$. A l'inverse, l'entrée ER de la voie de reprise 20R se situe du côté des zones $Z_i$, tandis que sa sortie ES se situe du côté de l'extérieur EXT. Un premier élément est disposé en amont d'un second élément sur une voie, lorsque ce premier élément est situé plus près de l'entrée de la voie que le second élément. A l'inverse, un premier élément est disposé en aval d'un second élément sur une voie, lorsque ce premier élément est situé plus près de la sortie de la voie que le second élément.

La centrale 2 intègre également une roue dessiccante 21 et un échangeur thermique 22 (notamment du type roue de récupération) interposés sur les deux voies VR, VS.

La roue dessiccante 21 intègre un système de mise en marche/arrêt 210, tel qu'un système motorisé, afin de pouvoir piloter à distance sa mise en marche/arrêt. De même, l'échangeur thermique 22 intègre un système de mise en marche/arrêt 220, tel qu'un système motorisé, afin de pouvoir piloter à distance sa mise en marche/arrêt.

La centrale 2 comporte également, sur sa voie de reprise VR, de son entrée ER jusqu'à sa sortie SR, les éléments suivants :

- un humidificateur dit de reprise 25R placé en amont de l'échangeur thermique 22 ;
- une batterie chauffante dite de régénération 24R placée entre l'échangeur thermique 22 et la roue dessicante 21, autrement dit en amont de la roue dessiccante 21 et en aval de l'échangeur thermique 22 ;
- un ventilateur de reprise 23R placé en aval de la roue dessicante 21, pour rejeter l'air de reprise aspiré dans les zones Zi vers l'extérieur EXT.

Le ventilateur de reprise 23R peut cependant être placé ailleurs sur la voie de reprise 20R, par exemple en amont de l'humidificateur de reprise 25R.

L'humidificateur de reprise 25R est alimenté en eau par une canalisation d'eau 27R branchée sur un réseau d'eau (eg. le réseau du bâtiment), et sur laquelle est placée une pompe 28R de mise en circulation de l'eau. Il est également avantageux de prévoir, sur cette canalisation d'eau 27R, un dispositif de traitement d'eau, allant d'un simple filtre jusqu'à un dispositif à osmose inverse, dont la technologie dépendra de la qualité de l'eau (dureté, pH, etc.).

En outre, au moins un filtre FR peut être placé sur la voie de reprise 20R, de préférence en amont de l'humidificateur de reprise 25R, pour filtrer l'air extrait des zones Zi avant d'entrer dans les composants de la centrale 2.

De plus, un bipasse BPR ou by-pass, par exemple calibré entre 10 et 30 %, peut être placé entre l'entrée de la batterie chauffante dite de régénération 24R et la sortie de la roue dessiccante 21, afin qu'une partie (par exemple 10 à 30 %) de l'air sortant de l'échangeur 22 soit directement évacué vers l'extérieur sans passer par la batterie 24R et la roue dessiccante 21, pour des questions de capacité de la roue dessiccante. Une vanne pilotée peut éventuellement être positionnée sur ce bipasse BPR pour pouvoir réguler la quantité d'air prélevé dans la voie de reprise 20R.

La centrale 2 comporte également, sur sa voie de soufflage 20S, de son entrée ES jusqu'à sa sortie SS, les éléments suivants :

- un humidificateur dit de soufflage 25S placé en aval de l'échangeur thermique 22 ;
- une batterie chauffante dite de chauffage 24S placée en aval de l'humidificateur de soufflage 25S ; et
- un ventilateur dit de soufflage 23S placé en aval de la batterie chauffante de chauffage 24S, pour souffler l'air neuf prélevé à l'extérieur EXT dans les zones Zi.

Le ventilateur de soufflage 23S peut cependant être placé ailleurs sur la voie de soufflage 20S, par exemple en amont la batterie chauffante de chauffage 24S ou en amont de l'humidificateur de soufflage 25S.

L'humidificateur de soufflage 23S est alimenté en eau par une canalisation d'eau 27S branchée sur un réseau d'eau, et sur laquelle est placée une pompe 28S de mise en circulation de l'eau. Il est également avantageux de prévoir, sur cette canalisation d'eau 27S, un dispositif de traitement d'eau.

En outre, au moins un filtre FS peut être placé sur la voie de soufflage 20S, de préférence en amont de la roue dessiccante 21, pour filtrer l'air neuf prélevé à l'extérieur avant d'entrer dans les composants de la centrale 2.

Il est également envisageable de disposer une batterie de préchauffage 29 électrique, disposée sur la voie de soufflage 20S en amont de la roue dessiccante 21, afin de préchauffer l'air neuf avant de passer dans la roue dessiccante 21.

La centrale 2 intègre des systèmes 26S, 26R de réglage de la quantité d'air entrant dans la voie de soufflage 20S et sortant de la voie de reprise 20R. Chaque système 26S, 26R est disposé sur la voie correspondante 20R, 20S, respectivement à l'entrée ES de la voie de soufflage 20S et à la sortie SR de la voie de reprise 20R.

Chaque système 26S, 26R peut être du type système motorisé, notamment du type système motorisé de papillon d'air, de volet d'air, de registre d'air, de grille d'air ou de clapet d'air. Chaque système 26S, 26R intègre un système mécanique réglable, notamment du type papillon, volet, registre, grille ou clapet, piloté par un moteur (non illustré) entre plusieurs positions de réglage de la quantité d'air ou du débit d'air.

La centrale 2 intègre également plusieurs systèmes de mesure C1, C2, C3, C4 détaillés ci-après.

Un premier système de mesure C1 de la température $T_{C1}$, de la pression $P_{C1}$ et de l'humidité relative $RH_{C1}$ est placé dans la voie de soufflage 20S, à son entrée ES en amont de la roue dessiccante 21, et de préférence en amont du système motorisé 26. Ces données $T_{C1}$, $P_{C1}$ et $RH_{C1}$ correspondent à aux données de l'air extérieur avant passage dans la centrale 2.

Un deuxième système de mesure C2 de la température $T_{C2}$ et de l'humidité relative $RH_{C2}$ est placé dans la voie de soufflage 20S, en aval de la roue dessiccante 21 et en amont de l'échangeur thermique 22. Ces données $T_{C2}$ et $RH_{C2}$ correspondent aux données de l'air de soufflage après passage dans la roue dessiccante 21.

Un troisième système de mesure C3 de la température $T_{C3}$ et de l'humidité relative $RH_{C3}$ est placé dans la voie de soufflage 20S, à sa sortie SS en aval du ventilateur de soufflage 23S et de l'humidificateur de soufflage 25S. Ces données $T_{C3}$ et $RH_{C3}$ correspondent aux données de l'air de soufflage en sortie de la centrale 2, et donc de l'air soufflé dans les zones Zi.

Un quatrième système de mesure C4 de la température $T_{C4}$ et de l'humidité relative $RH_{C4}$ est placé dans la voie de reprise 20R, en aval de l'humidificateur de reprise 25R et en amont de l'échangeur thermique 22. Ces données $T_{C4}$ et $RH_{C4}$ correspondent aux données de l'air de reprise après passage dans l'humidificateur de reprise 25R.

La centrale 2 comporte en outre plusieurs systèmes de régulation 41, 42, 43, 44 de température, à savoir :

- un premier système de régulation 41 de la température en sortie de la batterie chauffante de régénération 24R ;
- un deuxième système de régulation 42 de la température en sortie de la batterie chauffante de chauffage 24S ;
- un troisième système de régulation 43 de la température en sortie de l'humidificateur de reprise 25R ;
- un quatrième système de régulation 44 de la température en sortie de l'humidificateur de soufflage 25S.

Ces systèmes de régulation 41, 42, 43, 44 seront décrits ultérieurement en détail.

L'installation 1 comprend également deux canalisations CS, CR qui relient les voies VS, VR de la centrale 2 aux différentes zones Zi, avec :

- une canalisation de soufflage CS présentant une entrée connectée à la sortie SS de la voie de soufflage 20S et des sorties dans les différentes zones Zi, la canalisation de soufflage CS présentant des dérivations à destination de chaque zone Zi ; et
- une canalisation de reprise CR présentant des entrées dans les différentes zones Zi et une sortie connectée à l'entrée ER de la voie de reprise 20R, la canalisation de reprise CR présentant des dérivations en provenance de chaque zone Zi.

L'installation 1 comprend un générateur thermique 3 en liaison avec les batteries chauffantes 24R, 24S via un ballon tampon 30. Le générateur thermique 3 constitue une source de chaleur, de préférence du type durable comme par exemple des capteurs solaires, un dispositif de chauffage au bois, une unité biogaz, une unité d'incinération d'ordures ménagères, un dispositif de cogénération, une chaudière à condensation, un système de récupération de chaleur perdue, etc. ou la combinaison de plusieurs sources de chaleur distinctes.

Le ballon tampon 30 présente une canalisation chaude 31 et une canalisation froide 32, pour la circulation d'un fluide caloporteur respectivement réchauffé et refroidi. Ces voies 31, 32 sont raccordées aux batteries 24R, 24S pour réaliser le chauffage de l'air circulant à travers ces batteries 24R, 24S ; ces batteries 24R, 24S formant des échangeurs de chaleur entre la source chaude (le fluide caloporteur chaud provenant de la canalisation chaude 31) et l'air traversant les batteries 24R, 24S, le fluide caloporteur refroidi retournant au ballon tampon via la canalisation froide 32. Dans ces voies 31, 32, entre le ballon tampon 30 et les batteries 24R, 24S, le fluide caloporteur est par exemple de l'eau sans traitement antigel particulier, dans la mesure où ces voies 31, 32 seront de préférence disposées à l'intérieur d'un bâtiment. Par contre, dans les voies chaude 34 et froide 35 entre le ballon tampon 30 et le générateur thermique 3, le fluide est de préférence de l'eau complété d'un traitement antigel (par exemple de l'eau avec du glycol) car le générateur thermique 3 et ces voies 34, 35 sont généralement localisées à l'extérieur du bâtiment, et donc exposées au gel.

Plus précisément, la canalisation chaude 31 est reliée à une entrée de la batterie chauffante de régénération 24R pour le fluide caloporteur, et une pompe 33R est placée sur cette canalisation chaude 31 en amont de cette batterie 24R pour la mise en circulation du fluide caloporteur. La canalisation froide 32 est reliée à une sortie de la batterie 24R pour le retour du fluide caloporteur dans le ballon tampon 30.

De même, la canalisation chaude 31 est reliée à une entrée de la batterie chauffante de chauffage 24S pour le fluide caloporteur, et une pompe 33S est placée sur cette canalisation chaude 31 en amont de cette batterie 24S pour la mise en circulation du fluide caloporteur. La canalisation froide 32 est reliée à une sortie de la batterie 24R pour le retour du fluide caloporteur dans le ballon tampon 30.

L'installation 1 comprend également d'autres systèmes de mesure C5, $C6_i$ :

- un cinquième système de mesure C5 de la température $T_{C5}$ dans le ballon tampon 30 ;
- un sixième système de mesure $C6_i$ de la température TZi et de l'humidité relative RHZi pour chacune des zones Zi, autrement dit on a N sixièmes systèmes de mesure $C6_1$, $C6_2$, ..., $C6_N$.

La suite de la description porte sur les systèmes de régulation 41, 42, 43, 44 de température.

Le premier système de régulation 41 de la température en sortie de la batterie chauffante de régénération 24R comporte :

- une sonde de température 410 placée sur la voie de reprise 20R en sortie de la batterie chauffante 24R ;
- une vanne motorisée 411 à trois voies placée sur la canalisation froide 32, avec une première voie à débit variable placée sur une dérivation entre la canalisation chaude 31 et la canalisation froide 32 en aval de la pompe 33R, une deuxième voie à débit variable placée sur la canalisation froide 32 en amont et une troisième voie placée sur la canalisation froide 32 en aval ; et
- un organe de contrôle 412 (ou régulateur) qui est relié à la sonde de température 410 et qui pilote la vanne motorisée 411 en fonction de la température en sortie de la batterie chauffante 24R.

L'organe de contrôle 412 effectue une régulation en boucle fermée, notamment du type PID pour « proportionnel intégral dérivé », de la température en sortie de la batterie chauffante 24R, en contrôlant les débits dans les première et deuxième voie de la vanne motorisée 411.

Le deuxième système de régulation 42 de la température en sortie de la batterie chauffante de chauffage 24S comporte :

- une sonde de température 420 placée sur la voie de soufflage 20S en sortie de la batterie chauffante 24S ;
- une vanne motorisée 421 à trois voies placée sur la canalisation froide 32, avec une première voie à débit variable placée sur une dérivation entre la canalisation chaude 31 et la canalisation froide 32 en aval de la pompe 33S, une deuxième voie à débit variable placée sur la canalisation froide 32 en amont et une troisième voie placée sur la canalisation froide 32 en aval ; et
- un organe de contrôle 422 (ou régulateur) qui est relié à la sonde de température 420 et qui pilote la vanne motorisée 421 en fonction de la température en sortie de la batterie chauffante 24S.

L'organe de contrôle 422 effectue une régulation en boucle fermée, notamment du type PID, de la température en sortie de la batterie chauffante 24S, en contrôlant les débits dans les première et deuxième voie de la vanne motorisée 421.

Le troisième système de régulation 43 de la température en sortie de l'humidificateur de reprise 25R comporte :

- une sonde de température placée sur la voie de reprise 20R en sortie de l'humidificateur de reprise 25R, cette sonde de température faisant partie intégrante du quatrième système de mesure C4 ;
- une vanne motorisée 431 à deux voies placée sur la canalisation d'eau 27R en aval de la pompe 28R ;
- un organe de contrôle 432 (ou régulateur) qui est relié à la sonde de température du quatrième système de mesure C4 et qui pilote la vanne motorisée 431 en fonction de la température $T_{C4}$ en sortie de l'humidificateur de reprise 25R.

L'organe de contrôle 432 effectue une régulation en boucle fermée, notamment du type PID, de la température $T_{C4}$ en sortie de l'humidificateur de reprise 25R, en contrôlant le débit dans les voies de la vanne motorisée 431.

Le quatrième système de régulation 44 de la température en sortie de l'humidificateur de soufflage 25S comprend :

- une sonde de température 440 placée sur la voie de soufflage 20S en sortie de l'humidificateur de soufflage 25S ;
- une vanne motorisée 441 à deux voies placée sur la canalisation d'eau 27S en aval de la pompe 28R ;
- un organe de contrôle 442 (ou régulateur) qui est relié à la sonde de température 440 et qui pilote la vanne motorisée 441 en fonction de la température en sortie de l'humidificateur de soufflage 25S.

L'organe de contrôle 442 effectue une régulation en boucle fermée, notamment du type PID, de la température en sortie de l'humidificateur de soufflage 25S, en contrôlant le débit dans les voies de la vanne motorisée 441.

L'installation 1 comprend également un système aéraulique $5_i$ de réglage du débit d'air à chaque sortie de la canalisation de soufflage CS, pour régler de manière indépendante le débit d'air soufflé dans chacune des zones Zi ; autrement dit on a N systèmes aérauliques $5_1$, $5_2$, ..., $5_N$.

Chaque système aéraulique $5_i$ est positionné à une sortie de la canalisation de soufflage CS dans une zone Zi, et est du type motorisé pour permettre le réglage du débit DZi d'air (ou de la quantité d'air) entrant (ou soufflé) dans la zone Zi. Chaque système aéraulique $5_i$ motorisé peut être du type système motorisé de papillon d'air, de volet d'air, de registre d'air, de grille d'air ou de clapet d'air. Chaque système aéraulique $5_i$ intègre un système mécanique réglable $50_i$, notamment du type papillon, volet, registre, grille ou clapet, piloté par un moteur $51_i$ entre plusieurs positions de réglage de la quantité d'air ou du débit d'air.

Le dimensionnement de l'installation 1 permet de connaitre la plage de débits qui sera utilisée dans chaque zone Zi (en fonction notamment des puissances accessibles par la centrale 2 et des volumes des zones). Il est ainsi envisageable que chaque système aéraulique $5_i$ définit plusieurs débits de soufflage différents (par exemple entre 4 et 10) qui peuvent être réglés pour chaque zone. Ces débits différents sont accessibles par des positions d'ouverture différentes des systèmes mécaniques réglables $50_i$. Le débit minimal correspondra par exemple au débit hygiénique, assurant le renouvellement d'air, tandis que le débit maximal correspondra à la puissance maximale en froid qui peut être apportée à la zone Zi.

L'installation 1 comprend également un dispositif d'entrée 6 d'une plage de température de confort PTCi et d'une plage d'humidité relative de confort PRHCi pour chacune des zones Zi. Ce dispositif d'entrée par un opérateur associe à chaque zone Zi une plage PTCi et une plage PRHCi.

Comme illustré sur la figure 2, le dispositif d'entrée 6 peut être centralisé sur une centrale de gestion commune, de sorte qu'un gestionnaire peut entrer sur la centrale de gestion les plages PTCi, PRHCi pour toutes les zones Zi. En variante ou en complément, le dispositif d'entrée peut comprendre un système de saisie propre à chaque zone Zi, de préférence installé à l'intérieur de la zone Zi, permettant ainsi aux occupants de chaque zone Zi d'avoir la main sur tout ou parties des plages PTCi et PRHCi.

Chaque plage de confort PTCi, PRHCi est définie par un maximum et un minimum, comme suit :

- la plage PTCi de chaque zone Zi est définie par une température minimale de confort TCmini et une température maximale de confort TCmaxi, et
- la plage PRHCi de chaque zone Zi est définie par une humidité relative température minimale de confort RHCmini et une humidité relative maximale de confort RHCmaxi.

En outre, sont également entrées des plages de fonctionnement PTFi, PRHFi pour chaque zone Zi, qui ne correspondent pas aux plages de confort mais qui correspondent à des plages à ne pas dépasser pour des raisons techniques et/ou sanitaires et/ou de protection des appareils. Ces plages de fonctionnement PTFi, PRHFi servent à la mise en oeuvre du procédé de régulation décrit ci-après lors de périodes d'inoccupation des zones, par exemple pendant la nuit ou pendant une période de fermeture ou d'inexploitation des zones. Autrement dit, ces plages de fonctionnement PTFi, PRHFi se substituent aux plages de confort PTCi, PRHCi pendant les périodes d'inoccupation.

Chaque plage de fonctionnement PTFi, PRHFi est définie par un maximum et un minimum, comme suit :

- la plage PTFi de chaque zone Zi est définie par une température minimale de fonctionnement TFmini et une température maximale de fonctionnement TFmaxi, avec Tmini > TFmini et Tmaxi < TFmaxi ; et
- la plage PRHFi de chaque zone Zi est définie par une humidité relative minimale de fonctionnement RHFmini et une humidité relative maximale de fonctionnement RHFmaxi, avec RHCmini > RHFmini et RHCmaxi < RHFmaxi.

L'installation 1 comprend une unité de pilotage 7 qui assure le pilotage d'une partie des éléments de l'installation 1 décrits ci-dessus pour mettre en oeuvre le procédé de régulation conforme à l'invention. Pour cela, l'unité de pilotage 7 est reliée :

- aux systèmes de mesure C1, C2, C3, C4, C5, $C6_1$, $C6_2$, ..., $C6_N$ pour recevoir leurs données de mesure $T_{C1}$, $P_{C1}$, $RH_{C1}$, $T_{C2}$, $RH_{C2}$, $T_{C3}$, $RH_{C3}$, $T_{C4}$, $RH_{C4}$, $T_{C5}$, TZi (TZ1, TZ2, ..., TZN) ;
- aux ventilateurs de reprise et de soufflage 23R, 23S pour contrôler leurs débits respectifs de ventilation, et d'assurer un équilibrage aéraulique dans l'installation ;
- à la roue dessiccante 21 pour commander sa mise en marche/arrêt, et plus spécifiquement reliée à son système de mise en marche/arrêt 210 ;
- à l'échangeur thermique 22 pour commander sa mise en marche/arrêt, et plus spécifiquement reliée à son système de mise en marche/arrêt 220 ;
- aux systèmes de régulation 41, 42, 43, 44 pour contrôler les températures de sortie correspondantes ;
- aux systèmes aérauliques $5_i$ ($5_1$, $5_2$, ..., $5_N$) pour contrôler de manière indépendante les débits d'air soufflé DZi dans les différentes zones Zi ;
- au dispositif d'entrée 6 pour recevoir les plages de température et d'humidité relative de confort PTCi, PRHCi dans les différentes zones Zi, ainsi que les plages de température et d'humidité relative de fonctionnement PTFi, PRHFi ;
- éventuellement aux systèmes 26S, 26R pour piloter leurs ouverture/fermeture ;
- éventuellement à la batterie de préchauffage 29 électrique.

Cette unité de pilotage 7 est conçue pour piloter de manière dynamique, à intervalles de temps déterminés et/ou réguliers, en fonction des données de mesure $T_{C1}$, $P_{C1}$, $RH_{C1}$, $T_{C2}$, $RH_{C2}$, $T_{C3}$, $RH_{C3}$, $T_{C4}$, $RH_{C4}$, $T_{C5}$, TZi, RHZi et des plages de température et d'humidité relative de confort PTCi, PRHCi :

- la roue dessiccante 21, l'échangeur thermique 22 et les systèmes de régulation 41, 42, 43, 44 pour que la centrale d'air à dessiccation 2 délivre, à la sortie SS de la voie de soufflage 20S, de l'air à une température $T_{C3}$ et une humidité relative $RH_{C3}$ dites de soufflage prédéterminées ; et

- les ventilateurs 23R, 23S et les systèmes aérauliques $5_i$ pour que les systèmes aérauliques $5_i$ soufflent chacun de l'air à cette température de soufflage $T_{C3}$, à cette humidité relative $RH_{C3}$ de soufflage et à un débit dit de soufflage $D_{Zi}$ propre à chacune des zones Zi.

En effet, la puissance thermique (en chaud ou en froid) apportée à chaque zone Zi par l'installation dépend principalement de deux grandeurs :

- la température $T_{C3}$ de l'air soufflé (qui est sensiblement la même pour toutes les zones Zi, aux déperditions thermiques près dans la canalisation de soufflage CS) ; et
- le débit DZi d'air soufflé dans la zone Zi.

L'unité de pilotage 7 met donc en oeuvre une stratégie de pilotage visant donc à choisir une température $T_{C3}$ optimale et des débits DZi propres à chaque zone Zi pour couvrir les besoins thermiques de chaque zone Zi, autrement dit pour entrer dans les plages de confort PTCi, PRHCi.

La température $T_{C3}$ de l'air soufflé dépend directement des composants de la centrale 2, imposant donc une pilotage dynamique de la roue dessiccante 21, de l'échangeur thermique 22, des batteries chauffantes 24R, 24S via le pilotage des systèmes de régulation 41, 42, et des deux humidificateurs 25R, 25S via le pilotage des systèmes de régulation 43, 44. Ainsi, cette température $T_{C3}$ de l'air soufflé est commune à toutes les zones Zi du bâtiment.

Par contre, le débit d'air DZi d'air soufflé dans chaque zone Zi est lui le résultat du pilotage des systèmes aérauliques $5_i$ pour gérer des débits variables dans les différentes zones Zi, et des deux ventilateurs 23R, 23S pour mettre en oeuvre un équilibrage des réseaux aérauliques adapté. Ainsi, ces débits DZi sont donc bien propres à chaque zone Zi.

Le procédé de régulation mis en oeuvre par l'unité de pilotage 7 vise donc à définir en temps réel la température $T_{C3}$ unique de soufflage ainsi que le débit DZi d'air soufflé dans chaque zone Zi afin de maintenir, pour chaque zone Zi, une température TZi et une humidité relative RHZi dans les plages de confort PTCi, PRHCi respectives.

La suite de la description porte sur le procédé de régulation et, en premier lieu, sur les modes de fonctionnement mis en oeuvre.

Un mode dit de ventilation, appelé par la suite mode « VENTILATION », consiste à assurer une ventilation libre des zones Zi, pour assurer le renouvellement d'air hygiénique dans ces zones Zi. Dans le mode « VENTILATION », la roue dessiccante 21, l'échangeur 22, les humidificateurs 25R, 25S, les batteries 24R, 24S sont inactifs, et seuls les ventilateurs 23R, 23S sont actifs.

Un mode dit de chauffage, appelé par la suite mode « CHAUFFAGE », consiste à assurer le chauffage des zones Zi, tout en effectuant un renouvellement d'air hygiénique. Dans le mode « CHAUFFAGE », l'échangeur 22, la batterie chauffante de chauffage 24S et les deux ventilateurs 23R, 23S sont actifs, tandis que la roue dessiccante 21, la batterie chauffante de régénération 24R et les deux humidificateurs 25R, 25S sont inactifs. Eventuellement, la roue dessicante 21, la batterie chauffante de régénération 24R et les humidificateurs 25R, 25S peuvent être activés pour permettre un réglage fin de l'humidité relative de soufflage $RH_{C3}$.

Un mode dit de rafraîchissement appelé par la suite mode « RAFRAÎCHISSEMENT », consiste à assurer le rafraîchissement des zones Zi, tout en effectuant un renouvellement d'air hygiénique.

Ce mode « RAFRAÎCHISSEMENT » se décompose en quatre modes, selon la puissance thermique de rafraîchissement mis en oeuvre et donc suivant les composants de la centrale 2 qui entrent en jeu ; ces quatre modes de rafraîchissement étant détaillés ci-après, en allant du mode le moins énergivore jusqu'au mode le plus énergivore.

Un premier mode de rafraîchissement, appelé par la suite mode « RAFRAÎCHISSEMENT UN », consiste à assurer un rehaussement de l'air neuf; ce mode « RAFRAÎCHISSEMENT UN » étant principalement utilisé quand la température $T_{C1}$ de l'air extérieur est suffisamment faible pour assurer le rafraîchissement des zones Zi. Dans ce mode « RAFRAÎCHISSEMENT UN », la batterie chauffante de chauffage 24S et les deux ventilateurs 23R, 23S sont actifs, tandis que la roue dessiccante 21, l'échangeur 22, la batterie chauffante de régénération 24R et les deux humidificateurs 25R, 25S sont inactifs.

Un deuxième mode de rafraîchissement, appelé par la suite mode « RAFRAÎCHISSEMENT DEUX », consiste à assurer une humidification indirecte de l'air. Dans ce mode « RAFRAÎCHISSEMENT DEUX », l'échangeur 22, l'humidificateur de reprise 25R et les deux ventilateurs 23R, 23S sont actifs, tandis que la roue dessiccante 21, les batteries 24R, 24S et l'humidificateur de soufflage 25S sont inactifs.

Un troisième mode de rafraîchissement, appelé par la suite mode « RAFRAÎCHISSEMENT TROIS », consiste à assurer une humidification combinée. Dans ce mode « RAFRAÎCHISSEMENT TROIS », l'échangeur 22, les deux humidificateurs 25R, 25S et les deux ventilateurs 23R, 23S sont actifs, tandis que la roue dessiccante 21 et les batteries 24R, 24S sont inactives.

Un quatrième mode de rafraîchissement, appelée par la suite mode « RAFRAÎCHISSEMENT QUATRE », consiste à assurer un rafraîchissement poussé par la mise en oeuvre du procédé de dessiccation. Dans ce mode « RAFRAÎCHISSEMENT QUATRE », l'échangeur 22, les deux humidificateurs 25R, 25S, la roue dessicante 21, la batterie chauffante de régénération 24R et les deux ventilateurs 23R, 23S sont actifs, tandis que seule la batterie chauffante de chauffage 24S est inactive.

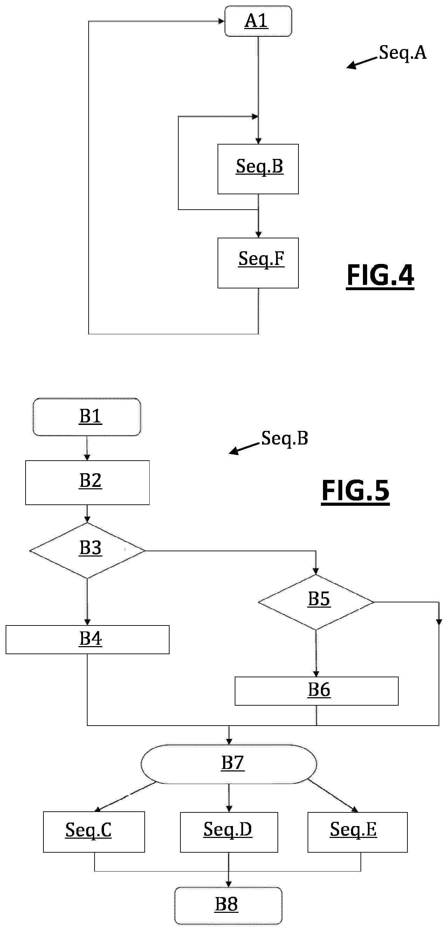

La suite de la description porte sur les différentes séquences mis en oeuvre par le procédé de régulation, en référence aux figures 4 à 24.

En référence à la figure 4, le procédé met en oeuvre une séquence principale « SEQ.A ». Cette séquence principale « SEQ.A » est exécutée régulièrement, à période fixe (par exemple toutes les 5 minutes), par l'unité de pilotage 7. Cette séquence principale « SEQ.A » est le programme principal qui appelle toutes les séquences suivantes (ou sous-programmes) décrites ultérieurement. Le but est de mettre à jour les consignes de chacun des composants de l'installation 1 (humidificateurs 25R, 25S, ventilateurs 23R, 23S, batterie 24R, 24S, échangeur 22, roue dessiccante 21, systèmes aérauliques 5i) en fonction de l'évolution des conditions intérieures de chaque zone Zi.

La séquence principale « SEQ.A » démarre avec une étape A1 de départ, suivie par une séquence « SEQ.B » dite de contrôle des conditions de chaque zone Zi, la séquence « SEQ.B » étant répétée pour toutes les zones Zi, avant d'enchaîner par la séquence « SEQ.F » de pilotage des composants de l'installation 1.

En référence à la figure 5, la séquence « SEQ.B » est pour rappel répété pour chaque zone Zi, chaque zone Zi possédant ses propres plages de confort PTCi, PRHCi. Pour une zone Zi, la séquence « SEQ.B » démarre avec une étape B1 de départ, suivie d'une étape B2 de lecture de la température TZi et de l'humidité relative RHZi pour la zone Zi issue du sixième système de mesure $C6_i$.

Ensuite, la séquence « SEQ.B » comprend une étape B3 de comparaison entre l'humidité relative RHZi mesurée dans la zone Zi et l'humidité relative minimale de confort RHCmini.

Si RHZi < RHCmini, alors, dans une étape B4, on consigne, pour la zone Zi, une valeur 1 ou vrai (TRUE) à une donnée d'information « Augmenter l'humidité dans la zone Zi ». Cette donnée d'information et toutes les données d'information décrites ci-après sont par défaut à une valeur 0 ou faux (FALSE). Ainsi, si le test RHZi < RHCmini est vrai, alors la donnée d'information « Augmenter l'humidité dans la zone Zi » bascule de l'état 0 (faux) par défaut à l'état 1 (vrai).

Par contre, si RHZi ≥ RHCmini, alors, dans une étape B5, on réalise cette fois une comparaison entre l'humidité relative RHZi mesurée dans la zone Zi et l'humidité relative maximale de confort RHCmaxi.

Si RHZi > RHCmaxi, alors, dans une étape B6, on consigne, pour la zone Zi, une valeur 1 ou vrai (TRUE) à une donnée d'information « Diminuer l'humidité dans la zone Zi ». Ainsi, si le test RHZi > RHCmaxi est vrai, alors la donnée d'information « Diminuer l'humidité dans la zone Zi » bascule de l'état 0 (faux) par défaut à l'état 1 (vrai).

Par contre, si RHZi ≤ RHCmaxi, alors aucune donnée d'information ne voit son état modifié.

A la suite des étapes B4 et B6, on réalise une étape B7 de vérification du mode principal « VENTILATION », « CHAUFFAGE » ou « RAFRAÎCHISSEMENT » qui est cours de fonctionnement.

Si c'est le mode principal « VENTILATION » qui est en fonctionnement, alors on enchaîne avec une séquence « SEQ.C » de contrôle du mode « VENTILATION ».

Si c'est le mode principal « RAFRAÎCHISSEMENT » qui est en fonctionnement (autrement dit si l'un des sous-modes « RAFRAÎCHISSEMENT UN », « RAFRAÎCHISSEMENT DEUX », « RAFRAÎCHISSEMENT TROIS » ou « RAFRAÎCHISSEMENT QUATRE » fonctionne) alors on enchaîne avec une séquence « SEQ.D » de contrôle du mode « RAFRAÎCHISSEMENT ».

Si c'est le mode principal « CHAUFFAGE » qui est en fonctionnement, alors on enchaîne avec une séquence « SEQ.E » de contrôle du mode « CHAUFFAGE ».

On conclut cette séquence « SEQ.B » par une étape B8 de fin. Ainsi, la séquence « SEQ.B » a consisté principalement à mettre à jour les données d'information « Diminuer l'humidité dans la zone Zi » et « Augmenter l'humidité dans la zone Zi » qui traduisent si une ou plusieurs zones Zi sont hors de la plage de confort en humidité relative PRHCi.

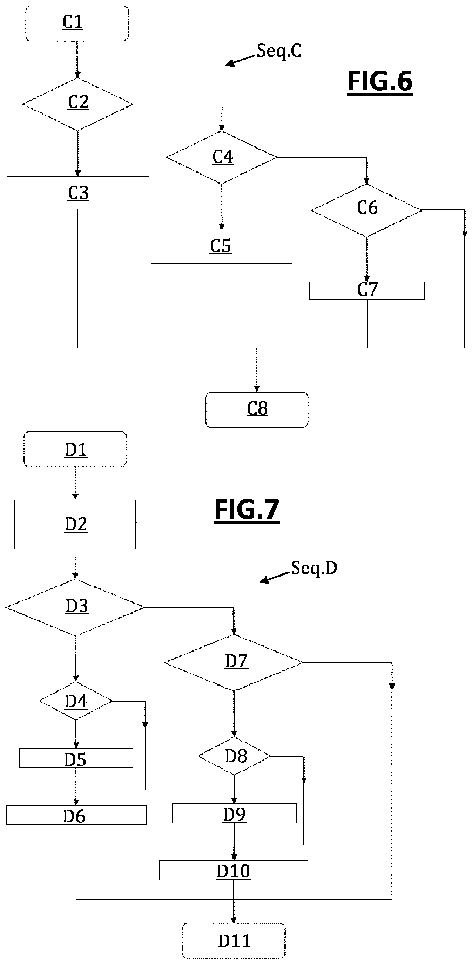

En référence à la figure 6, la séquence « SEQ.C » de contrôle du mode « VENTILATION » démarre avec une étape C1 de départ. Pour rappel, le mode « VENTILATION » est actif quand aucune zone Zi n'a besoin de chauffage ou de rafraîchissement.

Après l'étape C1 de départ, la séquence « SEQ.C » comprend une étape C2 de comparaison entre la température TZi mesurée dans la zone Zi et la température maximale de confort TCmaxi.

Si TZi > TCmaxi, alors, dans une étape C3, on consigne, pour la zone Zi, une valeur 1 ou vrai (TRUE) à une donnée d'information « Augmenter le rafraîchissement » et une valeur 1 ou vrai (TRUE) à une donnée d'information « Augmenter le débit de l'air soufflé dans la zone Zi ». Ainsi, si le test TZi > TCmaxi est vrai, alors les données d'information « Augmenter le rafraîchissement » et « Augmenter le débit de l'air soufflé dans la zone Zi » basculent chacune de l'état 0 (faux) par défaut à l'état 1 (vrai).

Par contre, si TZi ≤ TCmaxi, alors, dans une étape C4, on réalise cette fois une comparaison entre la température TZi mesurée dans la zone Zi et la température minimale de confort TCmini.

Si TZi < TCmini, alors on consigne, dans une étape C5, pour la zone Zi, une valeur 1 ou vrai (TRUE) à une donnée d'information « Augmenter le chauffage » et une valeur 1 ou vrai (TRUE) à une donnée d'information « Augmenter le débit de l'air soufflé dans la zone Zi ».

Par contre, si TZi ≥ TCmini, alors on réalise une étape C6 de vérification si un rafraîchissement par l'air extérieur est adapté pour la zone Zi, ce qui revient notamment à contrôler si l'air extérieur est suffisamment frais pour permettre un rafraîchissement de la zone Zi (valable en particulier pendant la nuit).

Cette vérification de l'étape C6 nécessite trois tests cumulatifs. Autrement dit, il faut que les trois tests suivants soient vérifiés (vrais) pour conclure que l'air extérieur est suffisamment frais pour permettre un rafraîchissement de la zone Zi :

- premier test : on vérifie si TZi > TSupplyMin, ce qui revient à vérifier si la température TZi dans la zone Zi est suffisamment élevée ;
- deuxième test : on vérifie si $T_{C1}$ < (TZi - Ecex), où ECex correspond à un écart de température par exemple fixé à 2°C, ce qui revient à vérifier si la température $T_{C1}$ de l'air extérieur est suffisamment basse ;
- troisième test : on vérifie si le rafraîchissement par l'air extérieur de la zone Zi est autorisé par le gestionnaire de l'installation. En effet, l'utilisation du rafraîchissement par l'air extérieur est de préférence autorisée par le gestionnaire, suivant la période correspondant à ce type de rafraîchissement. Cette période d'autorisation (fournie par le gestionnaire de l'installation) est en général l'été, de juin à septembre et peut s'étendre plus ou moins suivant la localisation du site.

Dans le premier test, TSupplyMin correspond à une température seuil minimale de l'air soufflée, soit une valeur seuil prédéterminée minimale pour l'air soufflé dans les zones Zi. Cette température seuil minimale de l'air soufflée TSupplyMin peut par exemple être fixée à 18°C pour respecter le confort des occupants, car une température de soufflage inférieure à 18 °C serait inconfortable.

Si le rafraîchissement par l'air extérieur est adapté pour la zone Zi (les trois tests de l'étape C6 sont vrais), alors, dans une étape C7, on consigne, pour la zone Zi, une valeur 1 ou vrai (TRUE) à une donnée d'information « Rafraîchissement par l'air extérieur dans la zone Zi ».

Par contre, si le rafraîchissement par l'air extérieur n'est pas adapté pour la zone Zi (l'un au moins des trois tests de l'étape C6 n'est pas vrai), alors aucune donnée d'information ne voit son état modifié.

On conclut cette séquence « SEQ.C » par une étape C8 de fin. Ainsi, la séquence « SEQ.C » a consisté principalement à mettre à jour pour le mode « VENTILATION » les données d'information « Augmenter le rafraîchissement », « Augmenter le chauffage », « Augmenter le débit de l'air soufflé dans la zone Zi » et « Rafraîchissement par l'air extérieur dans la zone Zi ».

Il est à noter que les données d'information « Augmenter le rafraîchissement » et « Augmenter le chauffage » ne sont pas associées à des zones Zi, mais sont générales, car pour rappel la température TC3 de soufflage de l'air est commune aux zones Zi. Ces données d'information « Augmenter le rafraîchissement » et « Augmenter le chauffage » serviront ultérieurement à pouvoir optimiser la température $T_{C3}$ unique de soufflage dans ce mode « VENTILATION ».

En référence à la figure 7, la séquence « SEQ.D » de contrôle du mode « RAFRAÎCHISSEMENT » démarre avec une étape D1 de départ.

Ensuite, une étape de calcul D2 de trois paramètres Prafri, MOYrafri et TENDi est réalisée, avec :

- Prafri = TZi - TCmaxi ;
- MOYrafri = TZimoy - Tcmaxi, où TZimoy est une moyenne des températures TZi mesurées sur les x derniers intervalles de temps, avec par exemple x=3 ;
- TENDi = TZi mesurée sur l'intervalle de temps présent - Tzi mesurée sur l'intervalle de temps précédent, de sorte que TENDi > 0 si TZi a augmenté depuis le dernier intervalle, et TENDi < 0 si TZi a diminué depuis le dernier intervalle.

L'étape de calcul D2 est suivie d'une étape de comparaison D3 dans laquelle on réalise le double test suivant : [(Prafri > 0 et TENDi > 0) ou (Prafri > Srafrmax)], Srafrmax correspondant à un écart seuil de température qui prend une valeur positive, et qui est par exemple fixé à 1 °C.

Le premier test (Prafri > 0 et TENDi > 0) traduit que TZi > TCmaxi (on est au-delà de la plage de confort PTCi) et en plus la tendance est à l'augmentation de la température depuis l'intervalle précédent.

Le deuxième test (Prafri > Srafrmax) traduit que TZi > TCmaxi + Srafrmax, ce qui signifie que TZi est au-delà de la plage de confort PTCi d'un écart supérieur à un seuil Srafrmax fixé.

Si le double test de l'étape D3 est vrai (autrement dit si l'un et/ou l'autre des deux tests est validé), alors on réalise, dans une étape D4 qui suit, une autre étape de comparaison dans laquelle on réalise le test suivant : MOYrafri > 0, pour vérifier si TZimoy > Tcmaxi.

Si MOYrafri > 0, alors, dans une étape D5, on consigne, pour la zone Zi, une valeur 1 ou vrai (TRUE) à une donnée d'information « Augmenter le rafraîchissement », traduisant un besoin en rafraîchissement accru.

Par contre, si MOYrafri ≤ 0 (soit TZimoy ≤ Tcmaxi), alors on laisse la donnée d'information « Augmenter le rafraîchissement » à la valeur 0 (faux), traduisant que l'on n'a pas besoin d'accroître le rafraîchissement.

Ensuite, quelque que soit le résultat du test de l'étape D4, on consigne dans une étape D6, pour la zone Zi, une valeur 1 ou vrai (TRUE) à une donnée d'information « Augmenter le débit de l'air soufflé dans la zone Zi ».

Si le double test de l'étape D3 est faux ou négatif (autrement dit si ces deux tests ne sont pas validés), alors, dans une étape D7, on réalise le double test suivant : [(Prafri < 0 et TENDi < 0) ou (Prafri < - Srafrmin)], Srafrmin correspondant à un écart seuil de température qui prend une valeur positive, et qui est par exemple fixé à 1 °C.

Le premier test (Prafri < 0 et TENDi < 0) traduit que TZi < TCmaxi (on est dans la plage de confort PTCi) et en plus la tendance est à la baisse de la température depuis l'intervalle précédent.

Le deuxième test (Prafri < - Srafrmin) traduit que TZi < TCmaxi - Srafrmin, ce qui signifie que TZi est en-dessous de TCmaxi d'un écart supérieur à un seuil Srafrmin fixé.

Si le double test de l'étape D7 est vrai (autrement dit si l'un et/ou l'autre des deux tests est validé), alors on réalise, dans une étape D8 qui suit, une autre étape de comparaison dans laquelle on réalise le test suivant : MOYrafri < 0, pour vérifier si TZimoy < Tcmaxi.

Si MOYrafri < 0, alors, dans une étape D9, on consigne, pour la zone Zi, une valeur 1 ou vrai (TRUE) à une donnée d'information « Diminuer le rafraîchissement », traduisant un besoin en rafraîchissement réduit.

Par contre, si MOYrafri ≥ 0 (soit TZimoy ≥ Tcmaxi), alors on laisse la donnée d'information « Diminuer le rafraîchissement » à la valeur 0 (faux), traduisant que l'on n'a pas besoin de réduire le rafraîchissement.

Ensuite, quelque que soit le résultat du test de l'étape D8, on consigne dans une étape D10, pour la zone Zi, une valeur 1 ou vrai (TRUE) à une donnée d'information « Diminuer le débit de l'air soufflé dans la zone Zi ».

Si le double test de l'étape D7 est faux ou négatif (aucun des deux tests n'est validé), alors aucune donnée d'information ne voit son état modifié.

On conclut cette séquence « SEQ.D » par une étape D11 de fin. Ainsi, la séquence « SEQ.D » a consisté principalement à mettre à jour pour le mode « RAFRAÎCHISSEMENT » les données d'information « Augmenter le rafraîchissement », « Diminuer le rafraîchissement », « Augmenter le débit de l'air soufflé dans la zone Zi » et « Diminuer le débit de l'air soufflé dans la zone Zi ».

Il est à noter, à nouveau, que les données d'information « Augmenter le rafraîchissement » et « Diminuer le rafraîchissement » ne sont pas associées à des zones Zi, mais sont générales, et elles serviront ultérieurement à pouvoir optimiser la température $T_{C3}$ unique de soufflage dans ce mode « RAFRAÎCHISSEMENT ».

En résumé pour cette séquence « SEQ.D », le choix d'augmenter (val(« Diminuer le rafraîchissement ») = 1) ou de diminuer (val(« Augmenter le rafraîchissement ») = 1) la température $T_{C3}$ unique de l'air soufflé dépend donc de l'évolution de la température intérieure TZi de chaque zone Zi ; cette évolution étant représentée par les paramètres Prafri, MOYrafri et TENDi calculés pour chaque zone à l'étape D2. Dans cette même séquence « SEQ.D », on détermine également l'évolution du débit d'air soufflé dans chaque zone Zi par les commandes val(« Augmenter le débit de l'air soufflé dans la zone Zi ») = 1 et val(« Diminuer le débit de l'air soufflé dans la zone Zi ») = 1 ; l'équilibrage du réseau aéraulique fournissant ensuite la consigne finale pour chacun des ventilateurs 23R, 23S de la centrale 2.

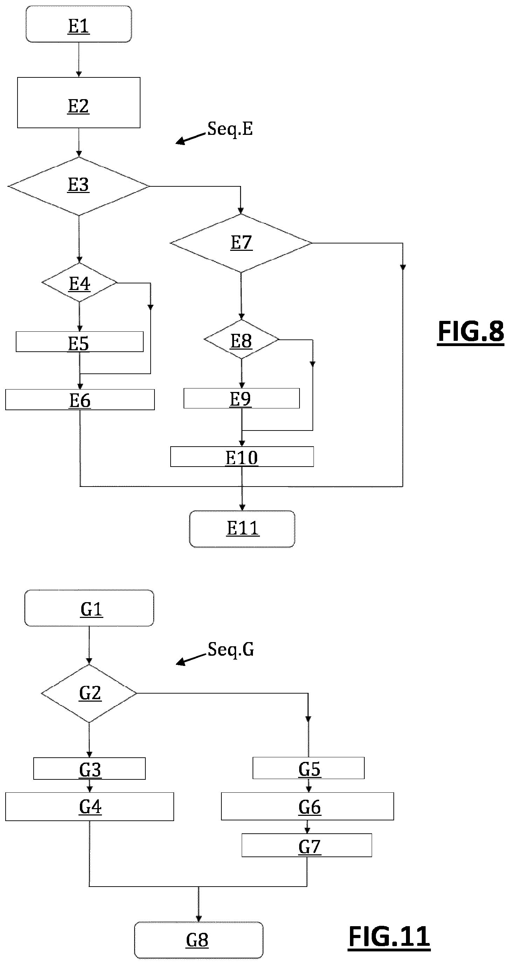

En référence à la figure 8, la séquence « SEQ.E » de contrôle du mode « CHAUFFAGE » démarre avec une étape E1 de départ.

Ensuite, une étape de calcul E2 de trois paramètres Pchaufi, MOYchaufi et TENDi est réalisée, avec :

- Pchaufi = TZi - TCmini ;
- MOYchaufi = TZimoy - Tcmini, où TZimoy est une moyenne des températures TZi mesurées sur les x derniers intervalles de temps, avec par exemple x=3 ;
- TENDi = TZi mesurée sur l'intervalle de temps présent - Tzi mesurée sur l'intervalle de temps précédent, de sorte que TENDi > 0 si TZi a augmenté depuis le dernier intervalle, et TENDi < 0 si TZi a diminué depuis le dernier intervalle.

L'étape de calcul E2 est suivie d'une étape de comparaison E3 dans laquelle on réalise le double test suivant : [(Pchaufi > 0 et TENDi > 0) ou (Pchaufi > Schaufmax)], Schaufmax correspondant à un écart seuil de température qui prend une valeur positive, et qui est par exemple fixé à 1 °C.

Le premier test (Pchaufi > 0 et TENDi > 0) traduit que TZi > TCmini (on est dans la plage de confort PTCi) et en plus la tendance est à l'augmentation de la température depuis l'intervalle précédent.

Le deuxième test (Pchaufi > Schaufmax) traduit que TZi > TCmini + Schaufmax, ce qui signifie que TZi est au-dessus de TCmini d'un écart supérieur au seuil Schaufmax fixé.

Si le double test de l'étape E3 est vrai (autrement dit si l'un et/ou l'autre des deux tests est validé), alors on réalise, dans une étape E4 qui suit, une autre étape de comparaison dans laquelle on réalise le test suivant : MOYchaufi > 0, pour vérifier si TZimoy > Tcmini.

Si MOYchaufi > 0, alors, dans une étape E5, on consigne, pour la zone Zi, une valeur 1 ou vrai (TRUE) à une donnée d'information « Diminuer le chauffage », traduisant un besoin en baisse de chauffage.

Par contre, si MOYchaufi ≤ 0 (soit TZimoy ≤ Tcmini), alors on laisse la donnée d'information « Diminuer le chauffage » à la valeur 0 (faux), traduisant que l'on n'a pas besoin de baisser le chauffage.

Ensuite, quelque que soit le résultat du test de l'étape E4, on consigne dans une étape E6, pour la zone Zi, une valeur 1 ou vrai (TRUE) à une donnée d'information « Abaisser le débit de l'air soufflé dans la zone Zi ».

Si le double test de l'étape E3 est faux ou négatif (autrement dit si ces deux tests ne sont pas validés), alors, dans une étape E7, on réalise le double test suivant : [(Pchaufi < 0 et TENDi < 0) ou (Pchaufi < - Schaufmin)], Schaufmin correspondant à un écart seuil de température qui prend une valeur positive, et qui est par exemple fixé à 1 °C.

Le premier test (Pchaufi < 0 et TENDi < 0) traduit que TZi < TCmini (on est en-dessous de la plage de confort PTCi) et en plus la tendance est à la baisse de la température depuis l'intervalle précédent.

Le deuxième test (Pchaufi < - Srafrmin) traduit que TZi < TCmini - Schaufmin, ce qui signifie que TZi est en-dessous de TCmini d'un écart supérieur à un seuil Schaufmin fixé.

Si le double test de l'étape E7 est vrai (autrement dit si l'un et/ou l'autre des deux tests est validé), alors on réalise, dans une étape E8 qui suit, une autre étape de comparaison dans laquelle on réalise le test suivant : MOYchaufi < 0, pour vérifier si TZimoy < Tcmini.

Si MOYchaufi < 0, alors, dans une étape E9, on consigne, pour la zone Zi, une valeur 1 ou vrai (TRUE) à une donnée d'information « Augmenter le chauffage », traduisant un besoin en chauffage accru.

Par contre, si MOYchaufi ≥ 0 (soit TZimoy ≥ Tcmini), alors on laisse la donnée d'information « Augmenter le chauffage » à la valeur 0 (faux), traduisant que l'on n'a pas besoin d'augmenter le chauffage.

Ensuite, quelque que soit le résultat du test de l'étape E9, on consigne dans une étape E10, pour la zone Zi, une valeur 1 ou vrai (TRUE) à une donnée d'information « Augmenter le débit de l'air soufflé dans la zone Zi ».

Si le double test de l'étape E7 est faux ou négatif (aucun des deux tests n'est validé), alors aucune donnée d'information ne voit son état modifié.

On conclut cette séquence « SEQ.E » par une étape E11 de fin. Ainsi, la séquence « SEQ.E » a consisté principalement à mettre à jour pour le mode « CHAUFFAGE » les données d'information « Augmenter le chauffage », « Diminuer le chauffage », « Augmenter le débit de l'air soufflé dans la zone Zi » et « Diminuer le débit de l'air soufflé dans la zone Zi ».

Il est à noter, à nouveau, que les données d'information « Augmenter le chauffage » et « Diminuer le chauffage » ne sont pas associées à des zones Zi, mais sont générales, et elles serviront ultérieurement à pouvoir optimiser la température $T_{C3}$ unique de soufflage dans ce mode « CHAUFFAGE ».

En résumé pour cette séquence « SEQ.E », le choix d'augmenter (val(« Augmenter le chauffage ») = 1) ou de diminuer (val(« Diminuer le chauffage ») = 1) la température $T_{C3}$ unique de l'air soufflé dépend donc de l'évolution de la température intérieure TZi de chaque zone Zi ; cette évolution étant représentée par les paramètres Pchaufi, MOYchaufi et TENDi calculés pour chaque zone à l'étape E2. Dans cette même séquence « SEQ.E », on détermine également l'évolution du débit d'air soufflé dans chaque zone Zi par les commandes val(« Augmenter le débit de l'air soufflé dans la zone Zi ») = 1 et val(« Diminuer le débit de l'air soufflé dans la zone Zi ») = 1 ; l'équilibrage du réseau aéraulique fournissant ensuite la consigne finale pour chacun des ventilateurs 23R, 23S de la centrale 2.

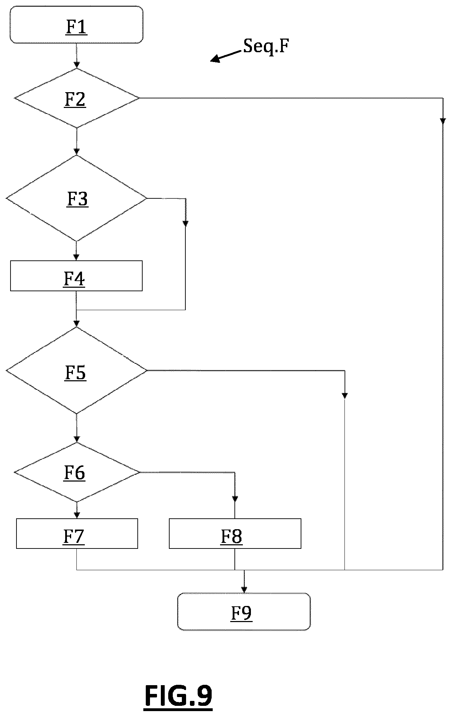

La séquence « SEQ.F » de pilotage des composants de l'installation 1 est détaillée sur les figures 9 (première phase) et 10 (seconde phase), cette séquence appelant d'autres séquences qui seront ultérieurement détaillées. Cette séquence « SEQ.F » a pour but de traduire les données d'information relevées à la séquence « SEQ.B » précédente répétée pour toutes les zones Zi, en des consignes de fonctionnement pour chacun des composants de l'installation 1.

En référence à la figure 9, la première phase de la séquence « SEQ.F » démarre avec une étape F1 de départ, suivie d'une étape F2 de vérification, pour chaque zone Zi, si la température maximale de confort TCmaxi a été atteinte voire dépassée. Ainsi, l'étape F2 consiste à tester pour chaque zone Zi si TZi>TCmaxi (ou si TZi ≥ TCmaxi).

Si le test de l'étape F2 est positif (autrement dit, pour au moins une zone Zk, on a TZk > TCmaxk), alors on passe à l'étape suivante F3. Lors de l'étape F3, on vérifie si, lors des séquences « SEQ.C » et « SEQ.D », au moins une zone Zi a été en demande d'une diminution du rafraîchissement et si aucune zone Zi n'a été en demande d'une augmentation du rafraîchissement.

Ainsi, l'étape F3 consiste à tester si la donnée d'information « Diminuer le rafraîchissement » est à la valeur 1 (vrai) et si la donnée d'information « Augmenter le rafraîchissement » est à la valeur 0 (faux), soit la question : val(« Diminuer le rafraîchissement ») = 1 et val(« Augmenter le rafraîchissement ») = 0 ?

Si le test de l'étape F3 est vrai (autrement dit si val (« Diminuer le rafraîchissement ») = 1 et val(« Augmenter le rafraîchissement ») = 0) alors, dans l'étape F4 qui suit, on consigne la valeur 0 (faux) à la donnée d'information « Diminuer le rafraîchissement ». Autrement dit, on impose que la donnée d'information « Diminuer le rafraîchissement » prenne la valeur 0 (faux). L'objectif est de privilégier le fait qu'au moins une zone Zk a sa température TZk qui a dépassé TCmaxk (test de l'étape F2) et que donc on va ignorer la demande en diminution du rafraîchissement en modifiant l'état de la donnée d'information « Diminuer le rafraîchissement ».

Par contre, si le test de l'étape F3 est faux, on ne modifie pas de donnée d'information.

Ensuite, quel que soit le résultat du test de l'étape F3, on poursuit avec une étape F5 dans laquelle on vérifie si, lors des séquences « SEQ.C » et « SEQ.E », au moins une zone Zi a été en demande d'une diminution du chauffage et si une zone Zi a été en demande d'une augmentation du chauffage.

Ainsi, l'étape F5 consiste à tester si la donnée d'information « Diminuer le chauffage » est à la valeur 1 (vrai) et si la donnée d'information « Augmenter le chauffage » est à la valeur 1 (vrai), soit la question : val (« Diminuer le chauffage ») = 1 et val(« Augmenter le chauffage ») = 1 ?

Si le test de l'étape F5 est vrai (autrement dit si val (« Diminuer le chauffage ») = 1 et val(« Augmenter le chauffage ») = 1) alors on est dans une situation dans laquelle une zone a demandé une baisse du chauffage et une autre zone a demander une hausse du chauffage.

Pour réaliser un arbitrage entre ces deux informations, on réalise lors de l'étape F6 qui suit, une comparaison entre deux écarts de température :

- GAP1 = Max (TZi - Tcmaxi) ;
- GAP2 = Max (Tmini - TZi).

Autrement dit, on vérifie si on est plus au-dessus d'une température maximale de confort Tcmaxi que l'on est en-dessous d'une température minimale de confort Tcmini.

Si GAP1 > GAP2, alors, dans une étape F7, on consigne la valeur 0 (faux) à la donnée d'information « Augmenter le chauffage ». Autrement dit, on impose que la donnée d'information « Augmenter le chauffage » prenne la valeur 0 (faux). L'objectif est de privilégier la baisse du chauffage car GAP1 > GAP2 (on a donc plus besoin de voir la température $T_{C3}$ de soufflage diminuer que de la voir augmenter). Ainsi, on va ignorer qu'une zone a émis une demande en augmentation du chauffage ; le principe sous-jacent étant de faire des arbitrages entre telles et telles demandes pour optimiser la température $T_{C3}$ de soufflage.

Par contre, si GAP1 ≤ GAP2, alors, dans une étape F8, on consigne la valeur 0 (faux) à la donnée d'information « Diminuer le chauffage ». Autrement dit, on impose que la donnée d'information « Diminuer le chauffage » prenne la valeur 0 (faux). L'objectif est de privilégier la hausse du chauffage car GAP1 ≤ GAP2 (on a donc plus besoin de voir la température $T_{C3}$ de soufflage augmenter que de la voir baisser). Ainsi, on va ignorer qu'une zone a émis une demande en baisse du chauffage, toujours selon le principe d'un arbitrage entre les demandes des zones.

Si le test de l'étape F5 est faux, alors on ne modifie pas de donnée d'information.

De même, si le test de l'étape F2 est négatif (autrement dit on a TZi ≤ TCmaxi pour toutes les zones Zi), alors on ne modifie pas de donnée d'information.

La première phase de la séquence « SEQF » a donc consisté à réaliser un arbitrage sur les demandes en rafraîchissement et en chauffage, en s'intéressant d'abord à la question d'un éventuel dépassement en température hors de la plage de confort (étape F2).

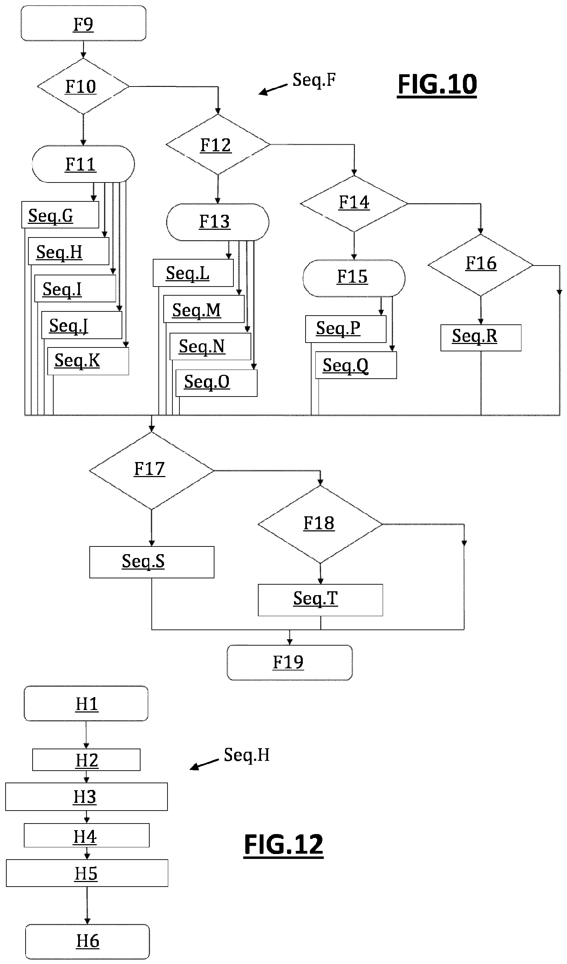

A la suite de cette première phase (étapes F1 à F8), on bascule sur une seconde phase illustrée sur la figure 10, avec une étape F9 illustrée uniquement pour visualiser la continuité entre les figures 9 et 10. Donc, à la suite des étapes F1 à F8, on réalise une étape F10 de test sur la valeur de la donnée d'information « Augmenter le rafraîchissement » ; ce qui traduit qu'on privilégie l'augmentation du rafraîchissement en commençant par ce test.

Si val(« Augmenter le rafraîchissement ») = 1 (vrai), alors on poursuit avec une étape F11 de vérification du mode « VENTILATION », « RAFRAÎCHISSEMENT UN », « RAFRAÎCHISSEMENT DEUX », « RAFRAÎCHISSEMENT TROIS », « RAFRAÎCHISSEMENT QUATRE » qui est cours de fonctionnement. On est dans une demande en augmentation du rafraîchissement, donc on est nécessairement dans l'un de ces cinq modes.

A l'issue de cette vérification, on a :

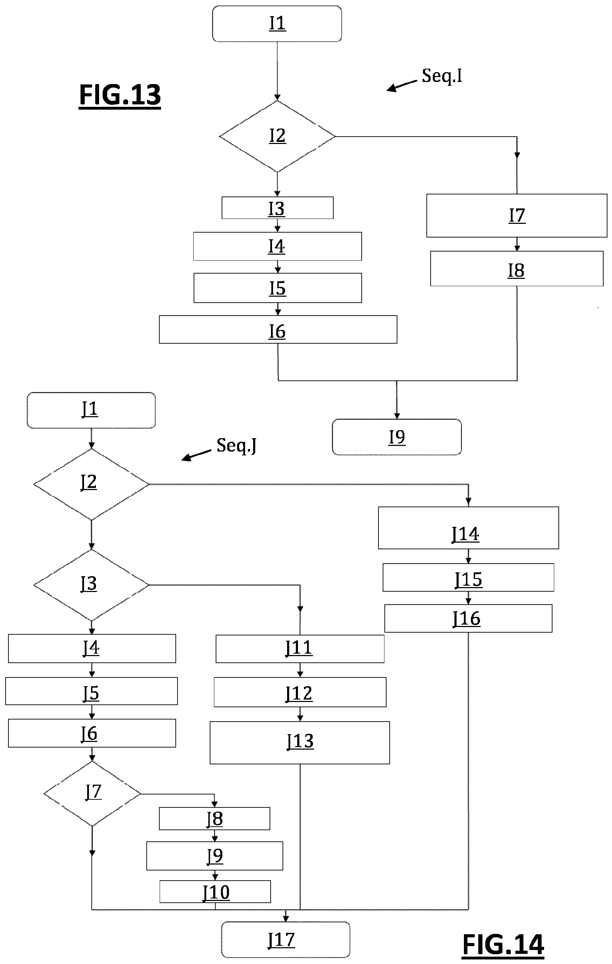

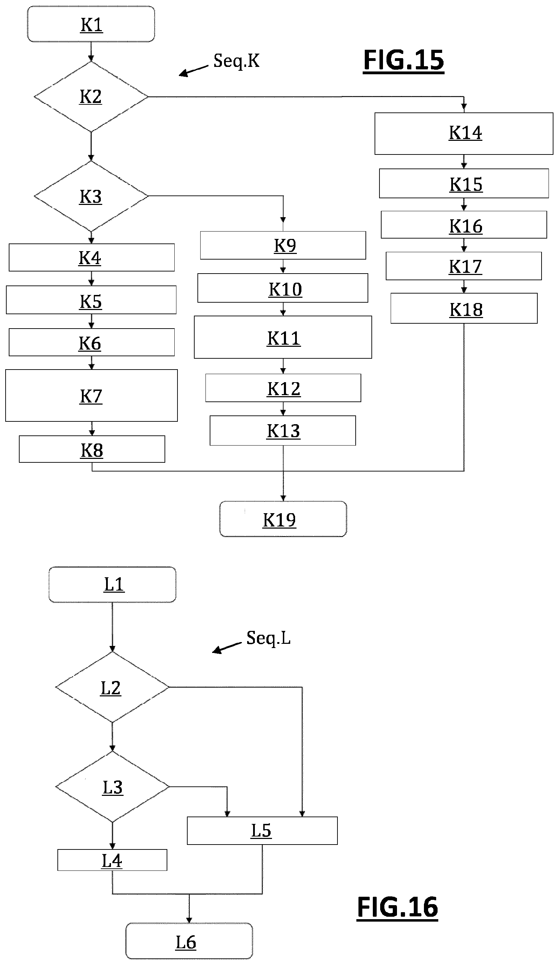

- si c'est le mode « VENTILATION » qui fonctionne, on enchaîne avec une séquence « SEQ.G » d'augmentation du rafraîchissement à partir du mode « VENTILATION » (figure 11);
- si c'est le mode « RAFRAÎCHISSEMENT UN » qui fonctionne, on enchaîne avec une séquence « SEQ.H » d'augmentation du rafraîchissement à partir du mode « RAFRAÎCHISSEMENT UN » (figure 12) ;
- si c'est le mode « RAFRAÎCHISSEMENT DEUX » qui fonctionne, on enchaîne avec une séquence « SEQ.I » d'augmentation du rafraîchissement à partir du mode « RAFRAÎCHISSEMENT DEUX » (figure 13) ;
- si c'est le mode « RAFRAÎCHISSEMENT TROIS » qui fonctionne, on enchaîne avec une séquence « SEQ.J » d'augmentation du rafraîchissement à partir du mode « RAFRAÎCHISSEMENT TROIS » (figure 14) ;
- si c'est le mode « RAFRAÎCHISSEMENT QUATRE » qui fonctionne, on enchaîne avec une séquence « SEQ.K » d'augmentation du rafraîchissement à partir du mode « RAFRAÎCHISSEMENT QUATRE » (figure 15).

Si val(« Augmenter le rafraîchissement ») = 0 (faux), alors on réalise une étape F12 de test sur la valeur de la donnée d'information « Diminuer le rafraîchissement ».

Si val(« Diminuer le rafraîchissement ») = 1 (vrai), alors on poursuit avec une étape F13 de vérification du mode « RAFRAÎCHISSEMENT UN », « RAFRAÎCHISSEMENT DEUX », « RAFRAÎCHISSEMENT TROIS », « RAFRAÎCHISSEMENT QUATRE » qui est cours de fonctionnement. On n'est pas dans une demande en augmentation du rafraîchissement, mais on est dans une demande en baisse du rafraîchissement, donc on est dans l'un de ces quatre modes.

A l'issue de cette vérification, on a :

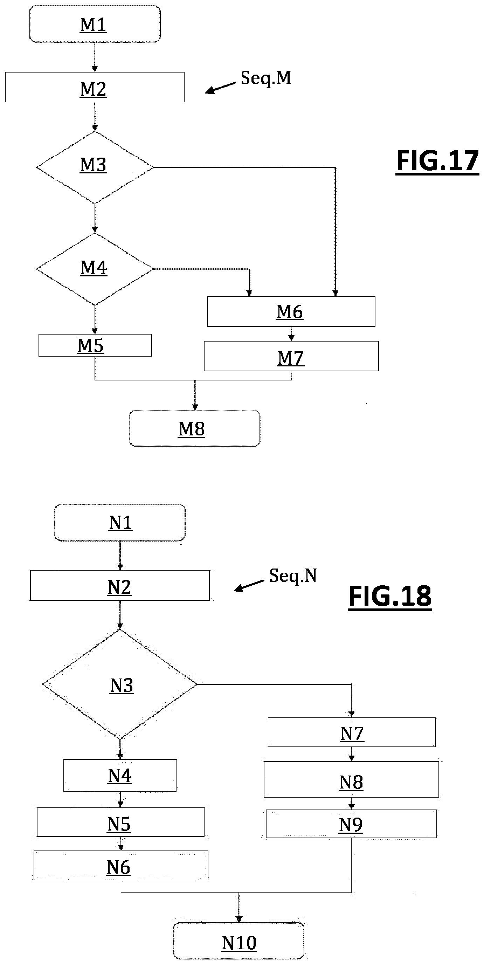

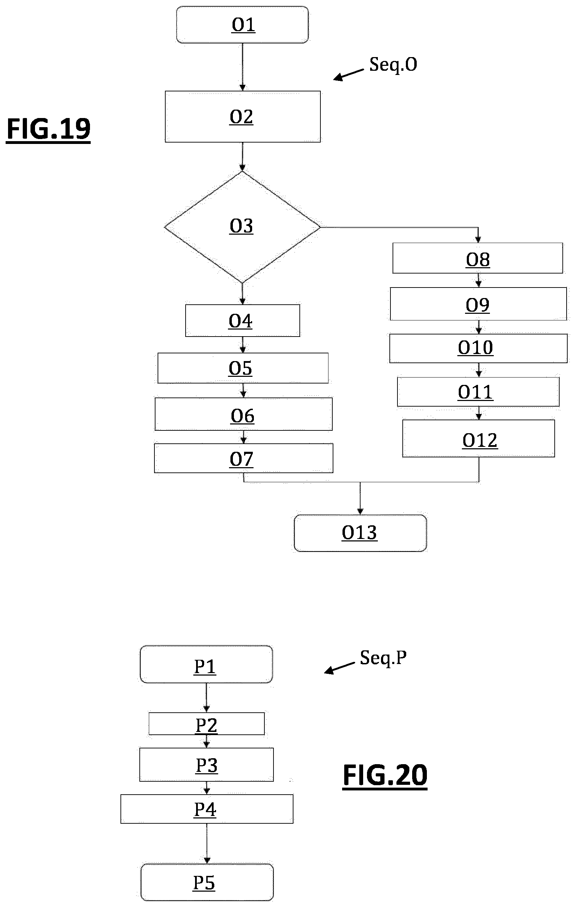

- si c'est le mode « RAFRAÎCHISSEMENT UN » qui fonctionne, on enchaîne avec une séquence « SEQ.L » de diminution du rafraîchissement à partir du mode « RAFRAÎCHISSEMENT UN » (figure 16) ;
- si c'est le mode « RAFRAÎCHISSEMENT DEUX » qui fonctionne, on enchaîne avec une séquence « SEQ.M » de diminution du rafraîchissement à partir du mode « RAFRAÎCHISSEMENT DEUX » (figure 17) ;
- si c'est le mode « RAFRAÎCHISSEMENT TROIS » qui fonctionne, on enchaîne avec une séquence « SEQ.N » de diminution du rafraîchissement à partir du mode « RAFRAÎCHISSEMENT TROIS » (figure 18) ;
- si c'est le mode « RAFRAÎCHISSEMENT QUATRE » qui fonctionne, on enchaîne avec une séquence « SEQ.O » de diminution du rafraîchissement à partir du mode « RAFRAÎCHISSEMENT QUATRE » (figure 19).

Si val(« Diminuer le rafraîchissement ») = 0 (faux), alors on réalise une étape F14 de test sur la valeur de la donnée d'information « Augmenter le chauffage ».

Si val(« Augmenter le chauffage ») = 1 (vrai), alors on poursuit avec une étape F15 de vérification du mode « VENTILATION » ou « CHAUFFAGE » qui est cours de fonctionnement. On n'est ni dans une demande en augmentation du rafraîchissement ni dans une demande en baisse du rafraîchissement, mais on est dans une demande en augmentation du chauffage, donc on est dans l'un de ces deux modes.

A l'issue de cette vérification, on a :

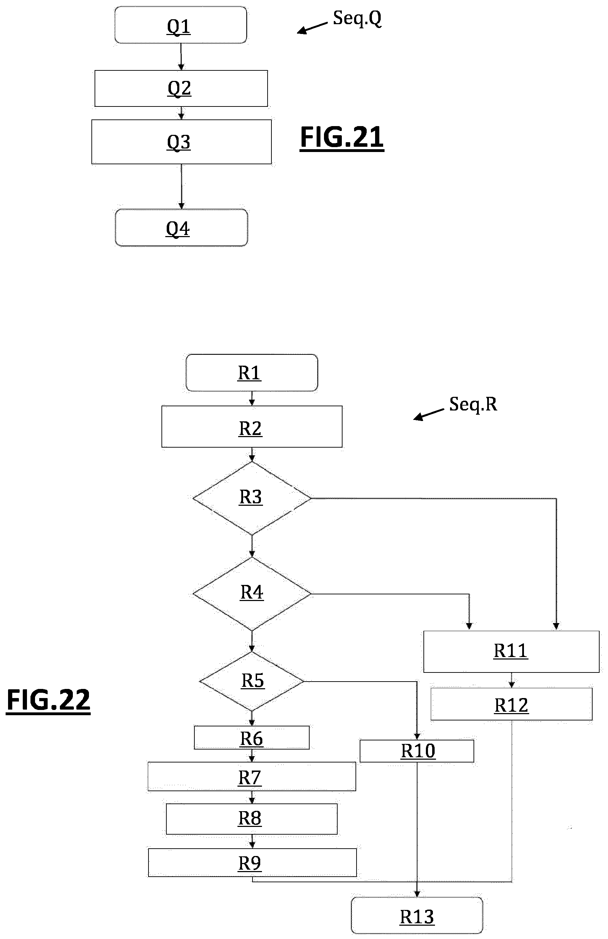

- si c'est le mode « VENTILATION » qui fonctionne, on enchaîne avec une séquence « SEQ.P » d'augmentation du chauffage à partir du mode « VENTILATION » (figure 20) ;
- si c'est le mode « CHAUFFAGE » qui fonctionne, on enchaîne avec une séquence « SEQ.Q » d'augmentation du chauffage à partir du mode « CHAUFFAGE » (figure 21).

Si val(« Augmenter le chauffage ») = 0 (faux), alors on réalise une étape F16 de test sur la valeur de la donnée d'information « Diminuer le chauffage ».

Si val(« Diminuer le chauffage ») = 1 (vrai), alors on enchaine avec une séquence « SEQ.R » de diminution du chauffage à partir du mode « CHAUFFAGE » (figure 22).

Si val(« Diminuer le chauffage ») = 0 (faux), cela signifie qu'aucune demande en rafraîchissement et en chauffage n'a été faite, et dans ce cas on poursuit sur l'étape F17.

Cette étape F17 vient à la suite de l'étape F16 et à la suite des séquences « SEQ.G à R ». Avant de décrire la suite de la seconde phase de la séquence « SEQ.F », on précise que jusque là, cette séquence « SEQ.F » a consisté à faire des arbitrages entre les différentes demandes, à privilégier telle ou telle demande pour ensuite lancer la séquence adéquate pour répondre à la demande que l'on aura privilégiée.

La suite de la seconde phase de la séquence « SEQ.F », qui commence par l'étape F17, s'intéresse à l'humidité relative dans les zones Zi pour affiner le pilotage dynamique.

L'étape F17 consiste à vérifier si une diminution de l'humidité est requise pour au moins une zone Zi. Autrement dit, on vérifie si au moins une zone a émis une demande en baisse d'humidité. Cela revient à vérifier si, à l'issue de la séquence « SEQ.B » de contrôle des conditions de chaque zone Zi, au moins une donnée d'information « Diminuer l'humidité dans la zone Zi » est à la valeur 1 (vrai).

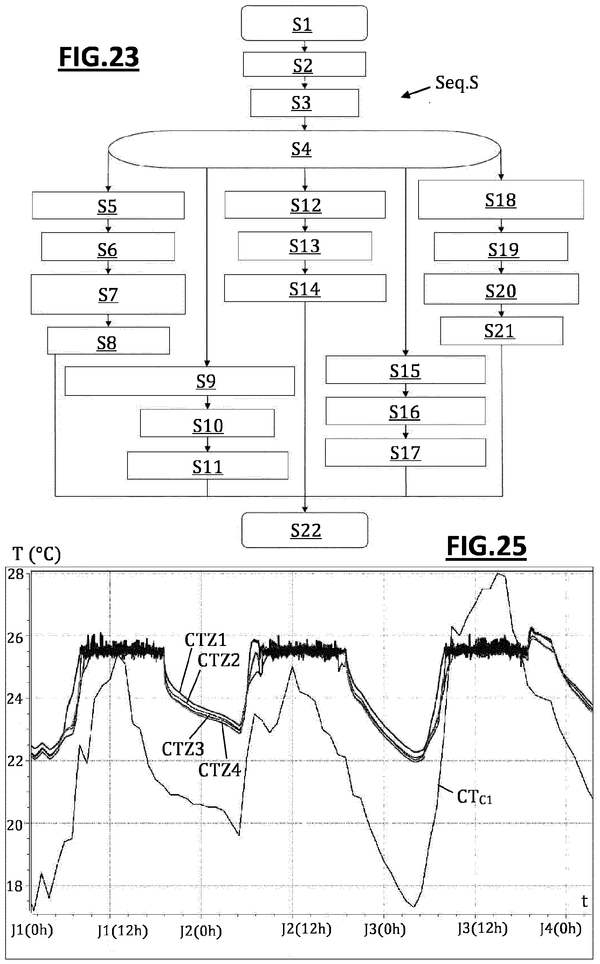

Si le test de F17 est vrai (autrement dit si val(« Diminuer l'humidité dans la zone Zi ») = 1 pour au moins une zone Zi), alors on poursuit avec une séquence « SEQ.S » de diminution de l'humidité relative (figure 23).

Par contre si le test de F17 est faux (autrement dit val(« Diminuer l'humidité dans la zone Zi ») = 0 pour toutes les zones Zi), alors on poursuit avec une étape F18 qui consiste à vérifier si une augmentation de l'humidité est requise pour au moins une zone Zi. Ainsi, en commençant par le test de F17, on privilégie la baisse de l'humidité, car un excès d'humidité est beaucoup plus gênant et inconfortable qu'un déficit d'humidité.

Dans l'étape F18, on vérifie donc si au moins une zone a émis une demande en augmentation d'humidité. Cela revient à vérifier si, à l'issue de la séquence « SEQ.B » de contrôle des conditions de chaque zone Zi, au moins une donnée d'information « Augmenter l'humidité dans la zone Zi » est à la valeur 1 (vrai).

Si le test de F18 est vrai (autrement dit si val(« Augmenter l'humidité dans la zone Zi ») = 1 pour au moins une zone Zi), alors on poursuit avec une séquence « SEQ.T » d'augmentation de l'humidité relative.

Par contre si le test de F18 est faux (autrement dit val(« Augmenter l'humidité dans la zone Zi ») = 0 pour toutes les zones Zi), alors cela signifie qu'aucune demande en baisse et en augmentation de l'humidité relative n'a été faite, et dans ce cas on poursuit sur l'étape F19 de fin.

Dans tous les cas, on conclut la séquence « SEQ.F » par l'étape F19 de fin.

Pour la suite de la description, on va décrire les séquences « SEQ.G » à « SEQ.T » de fonctionnement, établissant des consignes pour les composants de l'installation 1.

En référence à la figure 11, la séquence « SEQ.G » a pour objectif d'augmenter la capacité de rafraîchissement de l'installation 1 à partir du mode « VENTILATION ».

Pour la suite, la température de consigne TExhaustinit utilisée dans cette séquence « SEQ.G », est une valeur d'initialisation qui est choisie de manière judicieuse en tenant compte des températures de consigne (ou de confort) à respecter dans chaque zone Zi. Par exemple, si les températures maximales de confort TCmaxi acceptées sont similaires entre toutes les zones Zi, on peut par exemple prendre 5°C de moins que la température maximale pour définir TExhaustinit, autrement dit TExhaustinit = max(TCmaxi) - 5°C. De manière générale TExhaustinit est placée dans les plages de confort PTCi.

De plus, la température seuil minimale de l'air soufflée TSupplyMin utilisée dans cette séquence « SEQ.G », correspond pour rappel à une valeur seuil prédéterminée minimale pour l'air soufflé dans les zones Zi. Cette température seuil minimale de l'air soufflée TSupplyMin peut par exemple être fixée à 18°C pour respecter le confort des occupants, car une température de soufflage inférieure à 18 °C serait inconfortable.

En outre, par défaut dans le procédé, si un composant de l'installation 1 n'est pas mis en marche par la commande « Mise en marche », ou n'est pas maintenu en marche par la commande « Maintien en marche », alors ce composant est considéré comme étant mis à l'arrêt ; ce point étant valable pour l'ensemble des séquences « SEQ.G » à « SEQ.T ».

La séquence « SEQ.G » commence par une étape G1 de départ, suivie d'une étape G2 de test sur la température $T_{C1}$, qui est pour rappel la température de l'air extérieur avant passage dans la centrale 2. On compare la température $T_{C1}$ avec la température seuil minimale de l'air soufflée TSupplyMin.

Si $T_{C1}$ < TSupplyMin, alors, dans une étape G3, on commande le basculement vers le mode « RAFRAÎCHISSEMENT UN » qui est suffisant pour augmenter la capacité de rafraîchissement.

Dans l'étape G4 qui suit, pour basculer dans le mode « RAFRAÎCHISSEMENT UN », on établit la commande « Mise en marche de la batterie chauffante de chauffage 24S » pour mettre en marche cette batterie 24S, avec une régulation de la température en sortie de la batterie 24S autour de la température TSupplyMin, en pilotant le deuxième système de régulation 42 sur cette consigne TSupplyMin. En effet, comme $T_{C1}$ < TSupplyMin, il suffit de réchauffer cet air extérieur froid pour fournir un air soufflé à une température $T_{C3}$ = TSupplyMin. Puis, on conclut par l'étape G8 de fin.

Par contre, si $T_{C1}$ ≥ TSupplyMin, alors, dans une étape G5, on commande le basculement vers le mode « RAFRAÎCHISSEMENT DEUX » pour pouvoir répondre à la demande en augmentation du rafraîchissement par une humidification indirecte de l'air.

Pour basculer dans le mode « RAFRAÎCHISSEMENT DEUX », on réalise les deux étapes suivantes G6 et G7.

Dans l'étape G6 qui suit, on établit la commande « Mise en marche de l'humidificateur de reprise 25R » pour mettre en marche cet humidificateur 25R, avec une régulation de la température en sortie de l'humidificateur 25R autour de la température de consigne TExhaustinit, en pilotant le troisième système de régulation 43 sur cette consigne TExhaustinit.

Puis, dans l'étape G7 qui suit, on établit la commande « Mise en marche de l'échangeur 22 » pour mettre en marche cet échangeur 22 qui récupère les calories de l'air de reprise pour refroidir l'air extérieur neuf.

Enfin, on conclut la séquence « SEQ.G » par l'étape G8 de fin.

En référence à la figure 12, la séquence « SEQ.H » a pour objectif d'augmenter la capacité de rafraîchissement de l'installation 1 à partir du mode « RAFRAÎCHISSEMENT UN ».

La séquence « SEQ.H » commence par une étape H1 de départ, suivie d'une étape H2 dans laquelle on commande le basculement vers le mode « RAFRAÎCHISSEMENT TROIS » qui est nécessaire pour augmenter la capacité de rafraîchissement.

Dans l'étape H3 qui suit, pour basculer dans le mode « RAFRAÎCHISSEMENT TROIS », on établit la commande « Mise en marche de l'humidificateur de reprise 25R » pour mettre en marche cet humidificateur 25R, avec une régulation de la température en sortie de l'humidificateur 25R autour de la température TSupplyMin, en pilotant le troisième système de régulation 43 sur cette consigne TSupplyMin.

Puis, dans l'étape H4 qui suit, on établit la commande « Mise en marche de l'échangeur 22 » pour mettre en marche cet échangeur 22 qui récupère les calories de l'air de reprise pour refroidir l'air extérieur neuf.

Puis, dans l'étape H5 qui suit, on établit la commande « Mise en marche de l'humidificateur de soufflage 25S » pour mettre en marche cet humidificateur 25S, avec une régulation de la température en sortie de l'humidificateur 25S autour de la température TSupplyMin, en pilotant le quatrième système de régulation 44 sur cette consigne TSupplyMin.

Enfin, on conclut la séquence « SEQ.H » par l'étape H6 de fin.

En référence à la figure 13, la séquence « SEQ.I » a pour objectif d'augmenter la capacité de rafraîchissement de l'installation 1 à partir du mode « RAFRAÎCHISSEMENT DEUX ».

La séquence « SEQ.I » commence par une étape I1 de départ, suivie d'une étape I2 de test sur la capacité de l'humidificateur de reprise 25R. On vérifie lors de cette étape I2 si l'humidificateur de reprise 25R a atteint sa capacité maximale de fonctionnement.

Ce test sur la capacité maximale de fonctionnement de l'humidificateur de reprise 25R consiste à vérifier si l'une des deux conditions est remplie :

- l'air en sortie de l'humidificateur de reprise 25R est saturé, autrement dit l'humidité relative $RH_{C4}$ est supérieure à une valeur de saturation (par exemple fixée à 90 %) ; ou
- l'air en sortie de l'humidificateur de reprise 25R a une température égale à la température TSupplyMin, soit $T_{C4}$ = TSupplyMin.

Si l'humidificateur de reprise 25R a atteint sa capacité maximale de fonctionnement, alors, dans une étape I3 qui suit, on commande le basculement vers le mode « RAFRAÎCHISSEMENT TROIS » qui est nécessaire pour augmenter la capacité de rafraîchissement.

Pour basculer dans le mode « RAFRAÎCHISSEMENT TROIS », on réalise les étapes I4, I5 et I6 suivantes.

Dans l'étape I4, on établit la commande « Maintien en marche de l'humidificateur de reprise 25R » pour maintenir en marche cet humidificateur 25R, sans modifier la température de régulation pour le troisième système de régulation 43 (en sortie de cet humidificateur 25R).

Puis, dans l'étape I5 qui suit, on établit la commande « Maintien en marche de l'échangeur 22 » pour maintenir en marche cet échangeur 22.

Puis, dans l'étape I6 qui suit, on établit la commande « Mise en marche de l'humidificateur de soufflage 25S » pour mettre en marche cet humidificateur 25S, avec une régulation de la température de régulation (ou de consigne) Treghsouf en sortie de l'humidificateur 25S autour de la même température de régulation Treghrepr que pour l'humidificateur de reprise 25R, soit Treghsouf = Treghrepr. Et on conclut par l'étape I9 de fin.

Par contre, si l'humidificateur de reprise 25R n'a pas atteint sa capacité maximale de fonctionnement, alors on reste dans le mode « RAFRAÎCHISSEMENT DEUX » avec un ajustement pour l'humidificateur de reprise 25R.

Pour rester dans le mode « RAFRAÎCHISSEMENT DEUX », on réalise les étapes I7 et I8 suivantes.

Dans l'étape I7, on procède à l'ajustement : on établit la commande « Maintien en marche de l'humidificateur de reprise 25R » pour maintenir en marche cet humidificateur 25R, et on diminue la température de régulation en sortie de l'humidificateur de reprise 25R, par exemple de 1°C, tout en vérifiant que cette nouvelle température de régulation reste supérieure ou égale à la température TSupplyMin.

Puis, dans l'étape I8 qui suit, on établit la commande « Maintien en marche de l'échangeur 22 » pour maintenir en marche cet échangeur 22.

Enfin, on conclut la séquence « SEQ.I » par l'étape I9 de fin.

En référence à la figure 14, la séquence « SEQ.J » a pour objectif d'augmenter la capacité de rafraîchissement de l'installation 1 à partir du mode « RAFRAÎCHISSEMENT TROIS ».

La séquence « SEQ.J » commence par une étape J1 de départ, suivie d'une étape J2 de test sur la capacité de l'humidificateur de reprise 25R. On vérifie lors de cette étape J2 si l'humidificateur de reprise 25R a atteint sa capacité maximale de fonctionnement, selon la même approche que développée ci-dessus à l'étape I2.

Si l'humidificateur de reprise 25R a atteint sa capacité maximale de fonctionnement, alors, dans une étape J3 qui suit, on réalise un test sur la capacité de l'humidificateur de soufflage 25S. On vérifie lors de cette étape J3 si l'humidificateur de soufflage 25S a atteint sa capacité maximale de fonctionnement.

Ce test sur la capacité maximale de fonctionnement de l'humidificateur de soufflage 25S consiste à vérifier si l'une des deux conditions est remplie :

- l'air en sortie de l'humidificateur de soufflage 25S est saturé, autrement dit l'humidité relative $RH_{C3}$ est supérieure à une valeur de saturation (par exemple fixée à 90 %) ; ou
- l'air en sortie de la centrale 2 a une température égale à la température TSupplyMin, soit $T_{C3}$ = TSupplyMin.

Si l'humidificateur de soufflage 25S a atteint sa capacité maximale de fonctionnement, alors, on maintient activés les composants du mode « RAFRAÎCHISSEMENT TROIS » dans les étapes J4, J5 et J6 suivantes.

Dans l'étape J4 qui suit, on établit la commande « Maintien en marche de l'humidificateur de reprise 25R » pour maintenir en marche cet humidificateur 25R, sans modifier la température de régulation en sortie de cet humidificateur 25R.

Puis, dans l'étape J5 qui suit, on établit la commande « Maintien en marche de l'échangeur 22 » pour maintenir en marche cet échangeur 22.

Puis, dans l'étape J6 qui suit, on établit la commande « Maintien en marche de l'humidificateur de soufflage 25S » pour maintenir en marche cet humidificateur 25S, sans modifier la température de régulation en sortie de cet humidificateur 25S.

A la suite de l'étape J6, on vérifie lors d'une étape J7 si la température de l'air soufflé $T_{C3}$ est égale à la température TSupplyMin, soit $T_{C3}$ = TSupplyMin. Ce test de l'étape J7 va permettre de choisir si on peut rester dans le mode « RAFRAÎCHISSEMENT TROIS » ou si on doit basculer dans le mode « RAFRAÎCHISSEMENT QUATRE ».

Si $T_{C3}$ = TSupplyMin, alors on reste dans le mode « RAFRAÎCHISSEMENT TROIS » et on termine la séquence « SEQ.J » en allant à l'étape J17 de fin.

Par contre, si $T_{C3}$ n'est pas égale à TSupplyMin (soit $T_{C3}$ > TSupplyMin), alors, dans une étape J8 qui suit, on commande le basculement vers le mode « RAFRAÎCHISSEMENT QUATRE » qui est nécessaire pour augmenter la capacité de rafraîchissement, en assurant un rafraîchissement poussé par la mise en oeuvre du procédé de dessiccation.

Pour basculer dans le mode « RAFRAÎCHISSEMENT QUATRE », on réalise les étapes J9 et J10 suivantes.

Dans l'étape J9, pour basculer dans le mode « RAFRAÎCHISSEMENT QUATRE », on établit la commande « Mise en marche de la batterie chauffante de régénération 24R » pour mettre en marche cette batterie 24R, avec une régulation de la température en sortie de la batterie chauffante de régénération 24R autour d'une température de consigne fixe, par exemple à 70 °C, grâce au premier système de régulation 41.

Puis, dans l'étape J10 qui suit, on établit la commande « Mise en marche de la roue dessiccante 21 » pour mettre en marche cette roue dessiccante 21. Et on termine par l'étape J17 de fin.

Suite à l'étape J3, si par contre l'humidificateur de soufflage 25S n'a pas atteint sa capacité maximale de fonctionnement, alors on reste dans le mode « RAFRAÎCHISSEMENT TROIS » avec un ajustement pour l'humidificateur de soufflage 25S.

Pour rester dans le mode « RAFRAÎCHISSEMENT TROIS », on réalise les étapes J11, J12 et J13 suivantes.

Dans l'étape J11, on établit la commande « Maintien en marche de l'humidificateur de reprise 25R » pour maintenir en marche cet humidificateur 25R, sans modifier la température de régulation en sortie de cet humidificateur 25R.

Puis, dans l'étape J12 qui suit, on établit la commande « Maintien en marche de l'échangeur 22 » pour maintenir en marche cet échangeur 22.

Puis, dans l'étape J13 qui suit, on procède à l'ajustement: on établit la commande « Maintien en marche de l'humidificateur de soufflage 25S » pour maintenir en marche cet humidificateur 25S, et on diminue la température de régulation en sortie de l'humidificateur de soufflage 25S, par exemple de 1°C, tout en vérifiant que cette nouvelle température de régulation reste supérieure ou égale à la température TSupplyMin. Et on termine par l'étape J17 de fin.

Suite à l'étape J2, si par contre l'humidificateur de reprise 25R n'a pas atteint sa capacité maximale de fonctionnement, alors on reste dans le mode « RAFRAÎCHISSEMENT TROIS » avec un ajustement pour l'humidificateur de reprise 25R.

Pour rester dans le mode « RAFRAÎCHISSEMENT TROIS », on réalise les étapes J14, J15 et J16 suivantes.

Dans l'étape J14, on procède à l'ajustement : on établit la commande « Maintien en marche de l'humidificateur de reprise 25R » pour maintenir en marche cet humidificateur 25R, et on diminue la température de régulation en sortie de l'humidificateur de reprise 25R, par exemple de 1°C, tout en vérifiant que cette nouvelle température de régulation reste supérieure ou égale à la température TSupplyMin.

Puis, dans l'étape J15 qui suit, on établit la commande « Maintien en marche de l'échangeur 22 » pour maintenir en marche cet échangeur 22.

Puis, dans l'étape J16 qui suit, on établit la commande « Maintien en marche de l'humidificateur de soufflage 25S » pour maintenir en marche cet humidificateur 25S, sans modifier la température de régulation en sortie de cet humidificateur 25S.

Enfin, on conclut la séquence « SEQ.J » par l'étape J17 de fin.

En référence à la figure 15, la séquence « SEQ.K » a pour objectif d'augmenter la capacité de rafraîchissement de l'installation 1 à partir du mode « RAFRAÎCHISSEMENT QUATRE ».

La séquence « SEQ.K » commence par une étape K1 de départ, suivie d'une étape K2 de test sur la capacité de l'humidificateur de reprise 25R. On vérifie lors de cette étape K2 si l'humidificateur de reprise 25R a atteint sa capacité maximale de fonctionnement, selon la même approche que développée ci-dessus à l'étape I2.

Si l'humidificateur de reprise 25R a atteint sa capacité maximale de fonctionnement, alors, dans une étape K3 qui suit, on réalise un test sur la capacité de l'humidificateur de soufflage 25S. On vérifie lors de cette étape K3 si l'humidificateur de soufflage 25S a atteint sa capacité maximale de fonctionnement, selon la même approche que développée ci-dessus à l'étape J3.

Si l'humidificateur de soufflage 25S a atteint sa capacité maximale de fonctionnement, alors on reste dans le mode « RAFRAÎCHISSEMENT QUATRE » avec un ajustement pour la batterie chauffante de régénération 24R.

Pour rester dans le mode « RAFRAÎCHISSEMENT QUATRE », on réalise les étapes K4 à K8 suivantes.

Dans l'étape K4, on établit la commande « Maintien en marche de l'humidificateur de reprise 25R » pour maintenir en marche cet humidificateur 25R, sans modifier la température de régulation en sortie de cet humidificateur 25R.

Puis, dans l'étape K5 qui suit, on établit la commande « Maintien en marche de l'échangeur 22 » pour maintenir en marche cet échangeur 22.

Puis, dans l'étape K6 qui suit, on établit la commande « Maintien en marche de l'humidificateur de soufflage 25S » pour maintenir en marche cet humidificateur 25S, sans modifier la température de régulation en sortie de cet humidificateur 25S.

Puis, dans l'étape K7, on procède à l'ajustement : on établit la commande « Maintien en marche de la batterie chauffante de régénération 24R » pour maintenir en marche cette batterie 24R, et on augmente la température de régulation en sortie de la batterie chauffante de régénération 24R, par exemple de 5 °C, afin d'augmenter le pouvoir dessiccant de la roue dessiccante 21.

Puis, dans l'étape K8, on établit la commande « Maintien en marche de la roue dessiccante 21 » pour maintenir en marche cette roue dessiccante 21. Et on conclut par l'étape K19 de fin.

Suite à l'étape K3, si par contre l'humidificateur de soufflage 25S n'a pas atteint sa capacité maximale de fonctionnement, alors on reste dans le mode « RAFRAÎCHISSEMENT QUATRE » avec un ajustement pour l'humidificateur de soufflage 25S.

Pour rester dans le mode « RAFRAÎCHISSEMENT QUATRE », on réalise les étapes K9 à K13 suivantes.

Dans l'étape K9 qui suit, on établit la commande « Maintien en marche de l'humidificateur de reprise 25R » pour maintenir en marche cet humidificateur 25R, sans modifier la température de régulation en sortie de cet humidificateur 25R.

Puis, dans l'étape K10 qui suit, on établit la commande « Maintien en marche de l'échangeur 22 » pour maintenir en marche cet échangeur 22.

Puis, dans l'étape K11 qui suit, on procède à l'ajustement: on établit la commande « Maintien en marche de l'humidificateur de soufflage 25S » pour maintenir en marche cet humidificateur 25S, et on diminue la température de régulation en sortie de l'humidificateur de soufflage 25S, par exemple de 1°C, tout en vérifiant que cette nouvelle température de régulation reste supérieure ou égale à la température TSupplyMin.

Puis, dans l'étape K12, on établit la commande « Maintien en marche de la batterie chauffante de régénération 24R », sans modifier la température de régulation en sortie de cette batterie 24R.

Puis, dans l'étape K13, on établit la commande « Maintien en marche de la roue dessiccante 21 » pour maintenir en marche cette roue dessiccante 21. Et on conclut par l'étape K19 de fin.

Suite à l'étape K2, si par contre l'humidificateur de reprise 25R n'a pas atteint sa capacité maximale de fonctionnement, alors on reste dans le mode « RAFRAÎCHISSEMENT QUATRE » avec un ajustement pour l'humidificateur de reprise 25R.

Pour rester dans le mode « RAFRAÎCHISSEMENT QUATRE », on réalise les étapes K14 à K18 suivantes.

Dans l'étape K14, on procède à l'ajustement: on établit la commande « Maintien en marche de l'humidificateur de reprise 25R » pour maintenir en marche cet humidificateur 25R, et on diminue la température de régulation en sortie de l'humidificateur de reprise 25R, par exemple de 1°C, tout en vérifiant que cette nouvelle température de régulation reste supérieure ou égale à la température TSupplyMin.

Puis, dans l'étape K15 qui suit, on établit la commande « Maintien en marche de l'échangeur 22 » pour maintenir en marche cet échangeur 22.

Puis, dans l'étape K16 qui suit, on établit la commande « Maintien en marche de l'humidificateur de soufflage 25S » pour maintenir en marche cet humidificateur 25S, sans modifier la température de régulation en sortie de cet humidificateur 25S.

Puis, dans l'étape K17, on établit la commande « Maintien en marche de la batterie chauffante de régénération 24R », sans modifier la température de régulation en sortie de cette batterie 24R.

Puis, dans l'étape K18, on établit la commande « Maintien en marche de la roue dessiccante 21 » pour maintenir en marche cette roue dessiccante 21.

Enfin, on conclut la séquence « SEQ.K » par l'étape K19 de fin.

En référence à la figure 16, la séquence « SEQ.L » a pour objectif de diminuer la capacité de rafraîchissement de l'installation 1 à partir du mode « RAFRAÎCHISSEMENT UN ».

La séquence « SEQ.L » commence par une étape L1 de départ, suivie d'une étape L2 de test sur le besoin en diminution du rafraîchissement sur les zones Zi. Autrement dit, on vérifie si la demande en diminution du rafraîchissement est requise pour toutes les zones.

Une première façon de réaliser le test de l'étape L2 est de procéder comme suit on vérifie, pour chaque zone Zi, si TZi < TCmini. Ainsi, si TZi < TCmini pour toutes les zones Zi, alors la demande en diminution du rafraîchissement est requise par toutes les zones. A l'inverse, si pour au moins une zone Zk, on a TZk ≥ TCmink, alors la demande en diminution du rafraîchissement n'est pas requise par toutes les zones.

Une seconde façon préférentielle de réaliser le test de l'étape L2 est de procéder comme suit : au début de la séquence principale « SEQ.A » (autrement à chaque début de cycle), on initialise un compteur à 0. Ce compteur est incrémenté d'une unité à chaque fois qu'une étape alloue la valeur 1 (vrai) à la donnée d'information « Diminuer le rafraîchissement », en l'occurrence lors de l'étape D9. Si le compteur a une valeur égale à N, avec pour rappel N le nombre de zones Zi, alors on conclut que la demande en diminution du rafraîchissement est requise par toutes les zones.

Si la demande en diminution du rafraîchissement est requise par toutes les zones, alors, dans une étape L3 qui suit, on réalise un autre test sur les débits d'air soufflé DZi dans les zones Zi. Pour ce test, on vérifie si le débit minimal de soufflage est mis en oeuvre pour toutes les zones Zi (ces débits de soufflage étant pour rappel gérés par les systèmes aérauliques $5_1$, $5_2$, ..., $5_N$). Ce test consiste à vérifier, pour chaque zone Zi, si DZi = DZmini, où DZmini est le débit minimal de soufflage pour la zone Zi. Autrement dit, on vérifie si l'ouverture minimale a été atteinte par le système aéraulique $5_i$.

Ainsi, si DZi = DZmini pour toutes les zones Zi, le débit minimal de soufflage est mis en oeuvre pour toutes les zones Zi. A l'inverse, si pour au moins une zone Zk, on a DZi > DZmini, alors le débit minimal de soufflage n'est pas mis en oeuvre pour toutes les zones Zi.

Si le débit minimal de soufflage est mis en oeuvre pour toutes les zones Zi, alors, dans une étape L4, on bascule dans le mode « VENTILATION », ce qui revient à éteindre la batterie chauffante de chauffage 24S. Et on conclut par l'étape L6 de fin.

Comme déjà indiqué, par défaut dans le procédé, si un composant de l'installation 1 n'est pas mis en marche par la commande « Mise en marche », ou n'est pas maintenu en marche par la commande « Maintien en marche », alors ce composant est considéré comme étant mis à l'arrêt. Ainsi, dans l'étape L4 il n'est pas nécessaire d'émettre une commande spécifique pour éteindre la batterie chauffante de chauffage 24S.

Par contre, si la demande en diminution du rafraîchissement n'est pas requise par toutes les zones (test négatif pour l'étape L2) ou si le débit minimal de soufflage n'est pas mis en oeuvre pour toutes les zones (test négatif pour l'étape L3), alors on reste dans le mode « RAFRAÎCHISSEMENT UN », et dans ce cas, dans une étape L5, on établit la commande « Maintien en marche de la batterie chauffante de chauffage 24S » pour maintenir en marche cette batterie 24S, sans modifier la température de régulation en sortie de cette batterie 24S (pour le deuxième système de régulation 42).

Enfin, on conclut la séquence « SEQ.L » par l'étape L6 de fin.

En référence à la figure 17, la séquence « SEQ.M » a pour objectif de diminuer la capacité de rafraîchissement de l'installation 1 à partir du mode « RAFRAÎCHISSEMENT DEUX ».

La séquence « SEQ.M » commence par une étape M1 de départ, suivie d'une étape M2 d'ajustement dans laquelle on commande l'augmentation de la température de régulation Treghrepr en sortie de l'humidificateur de reprise 25R (pour le troisième système de régulation 43), par exemple de 1°C.

Puis, lors de l'étape M3, on réalise un test sur le besoin en diminution du rafraîchissement sur les zones Zi, selon la même approche que pour l'étape L2 décrite ci-dessus.

Si la demande en diminution du rafraîchissement est requise par toutes les zones, alors, dans une étape M4 qui suit, on réalise un autre test sur la température de régulation (ou température de consigne) en sortie de l'humidificateur de reprise 25R. Ce test consiste à comparer la température de régulation Treghrepr en sortie de l'humidificateur de reprise 25R avec le maximum max(TZi) des températures TZi dans les zones Zi.

Si Treghrepr > max(TZi), alors dans une étape M5, on bascule dans le mode « VENTILATION », ce qui revient à éteindre l'humidificateur de reprise 25R et l'échangeur 22 : il n'est pour rappel pas nécessaire d'émettre une commande spécifique pour éteindre ces composants. Et on conclut par l'étape M8 de fin.

Par contre, si la demande en diminution du rafraîchissement n'est pas requise par toutes les zones (test négatif pour l'étape M3) ou si Treghrepr ≤ max(TZi), (test négatif pour l'étape L4), alors on reste dans le mode « RAFRAÎCHISSEMENT DEUX ».

Pour rester dans le mode « RAFRAÎCHISSEMENT DEUX », on réalise les deux étapes M6 et M7 suivantes.

Dans l'étape M6, on établit la commande « Maintien en marche de l'humidificateur de reprise 25R » pour maintenir en marche cet humidificateur 25R, sans modifier la température de régulation en sortie de cet humidificateur 25R.

Puis, dans une étape M7, on établit la commande « Maintien en marche de l'échangeur 22 » pour maintenir en marche cet échangeur 22.

Enfin, on conclut la séquence « SEQ.M » par l'étape M8 de fin.

En référence à la figure 18, la séquence « SEQ.N » a pour objectif de diminuer la capacité de rafraîchissement de l'installation 1 à partir du mode « RAFRAÎCHISSEMENT TROIS ».

La séquence « SEQ.N » commence par une étape N1 de départ, suivie d'une étape N2 d'ajustement dans laquelle on commande l'augmentation de la température de régulation (ou de consigne) Treghsouf en sortie de l'humidificateur de soufflage 25S (pour le quatrième système de régulation 44), par exemple de 1°C.

Puis, dans une étape N3, on réalise un test sur la température de régulation (ou de consigne) Treghsouf en sortie de l'humidificateur de soufflage 25S. Ce test consiste à comparer la température de régulation Treghsouf en sortie de l'humidificateur de soufflage 25S avec la température de régulation Treghrepr en sortie de l'humidificateur de reprise 25R.

Si Treghsouf > Treghrepr, alors dans une étape N4, on bascule dans le mode « RAFRAÎCHISSEMENT DEUX », ce qui revient à se passer de l'humidificateur de soufflage 25S.

Pour réaliser ce basculement dans le mode « RAFRAÎCHISSEMENT DEUX », on réalise les étapes N5 et N6 suivantes.

Dans l'étape N5, on établit la commande « Maintien en marche de l'humidificateur de reprise 25R » pour maintenir en marche cet humidificateur 25R, sans modifier la température de régulation en sortie de cet humidificateur 25R.

Puis, dans l'étape N6, on établit la commande « Maintien en marche de l'échangeur 22 » pour maintenir en marche cet échangeur 22. Et on conlue par l'étape N10 de fin.

Par contre, si Treghsouf ≤ Treghrepr, alors on reste dans le mode « RAFRAÎCHISSEMENT TROIS » et dans ce cas on réalise les étapes N7 à N9 suivantes.

Dans l'étape N7, on établit la commande « Maintien en marche de l'humidificateur de reprise 25R » pour maintenir en marche cet humidificateur 25R, sans modifier la température de régulation en sortie de cet humidificateur 25R.

Puis, dans l'étape N8, on établit la commande « Maintien en marche de l'échangeur 22 » pour maintenir en marche cet échangeur 22.

Puis, dans l'étape N9, on établit la commande « Maintien en marche de l'humidificateur de soufflage 25S » pour maintenir en marche cet humidificateur de soufflage 25S, sans modifier la température de régulation en sortie de cet humidificateur 25R.

Enfin, on conclut la séquence « SEQ.N » par l'étape N10 de fin.

En référence à la figure 19, la séquence « SEQ.O » a pour objectif de diminuer la capacité de rafraîchissement de l'installation 1 à partir du mode « RAFRAÎCHISSEMENT 4 ».

La séquence « SEQ.O » commence par une étape O1 de départ, suivie d'une étape 02 d'estimation d'une température théorique de soufflage Ttheorsoufl si la roue dessiccante 21 n'était pas activée.

Une telle température théorique de soufflage Ttheorsoufl peut se calculer selon l'équation (EQU1) suivante :

$$Ttheorsoufl = Tdry - Rhumsouf \times (Tdry - Twet) \quad (EQU1)$$

où :

- Tdry = $T_{C1}$ - Rech.$(T_{C1} - T_{C4})$ ;
- Twet = $f(Tdry, RH_{C1}, P_{C1})$ ;
- $T_{C1}$ est la température mesurée par le premier système de mesure C1 ;
- $T_{C4}$ est la température mesurée par le quatrième système de mesure C4 ;
- Rech correspond à l'efficacité de l'échangeur 22 ;
- $RH_{C1}$ est l'humidité relative mesurée par le premier système de mesure C1 ;
- $P_{C1}$ est la pression mesurée par le premier système de mesure C1 ;
- f(T,RH,P) est une fonction psychométrique qui calcule une température humide à partir des paramètres T, RH et P ; et
- Rhumsouf correspond à l'efficacité de l'humidificateur de soufflage 25S.

Puis, dans une étape O3, on réalise un test sur cette température théorique de soufflage Ttheorsoufl en la comparant la température de régulation (ou de consigne) Treghsouf en sortie de l'humidificateur de soufflage 25S.

Si Ttheorsoufl < Treghsouf, alors dans une étape O4, on bascule dans le mode « RAFRAÎCHISSEMENT TROIS ». En effet, si le test de l'étape O3 est positif (soit Ttheorsoufl < Treghsouf), cela veut dire que l'on peut fournir le froid (ou rafraîchissement) demandé sans avoir recours au mode « RAFRAÎCHISSEMENT QUATRE » et donc au générateur thermique 3. Le but est d'économiser ce générateur thermique 3 (en particulier quand il s'agit d'un générateur solaire thermique ou d'une source de chaleur intermittente) et donc de sortir du mode « RAFRAÎCHISSEMENT QUATRE » dès que cela est possible.

Pour réaliser ce basculement dans le mode « RAFRAÎCHISSEMENT TROIS », on réalise les étapes O5 à O7 suivantes.

Dans l'étape O5, on établit la commande « Maintien en marche de l'humidificateur de reprise 25R » pour maintenir en marche cet humidificateur 25R, sans modifier la température de régulation en sortie de cet humidificateur 25R.

Puis, dans l'étape O6, on établit la commande « Maintien en marche de l'échangeur 22 » pour maintenir en marche cet échangeur 22.

Puis, dans l'étape O7, on établit la commande « Maintien en marche de l'humidificateur de soufflage 25S » pour maintenir en marche cet humidificateur de soufflage 25S, et on augmente la température de régulation (ou de consigne) en sortie de l'humidificateur de soufflage 25S, par exemple de 1°C. Et on conclut par l'étape O13 de fin.

Par contre, à la suite de l'étape O3, si Ttheorsoufl ≥ Treghsouf, alors on reste dans le mode « RAFRAÎCHISSEMENT QUATRE » avec un ajustement sur l'humidificateur de soufflage 25S ».

Pour rester dans le mode « RAFRAÎCHISSEMENT QUATRE », on réalise les étapes O8 à O12 suivantes.

Dans l'étape O8, on établit la commande « Maintien en marche de l'humidificateur de reprise 25R » pour maintenir en marche cet humidificateur 25R, sans modifier la température de régulation en sortie de cet humidificateur 25R.

Puis, dans l'étape O9, on établit la commande « Maintien en marche de l'échangeur 22 » pour maintenir en marche cet échangeur 22.

Puis, dans l'étape O10, on procède à l'ajustement: on établit la commande « Maintien en marche de l'humidificateur de soufflage 25S » pour maintenir en marche cet humidificateur de soufflage 25S, et on augmente la température de régulation (ou de consigne) en sortie de l'humidificateur de soufflage 25S, par exemple de 1°C.

Puis, dans l'étape O11, on établit la commande « Maintien en marche de la batterie chauffante de régénération 24R », sans modifier la température de régulation en sortie de cette batterie 24R.

Puis, dans une étape O12, on établit la commande « Maintien en marche de la roue dessiccante 21 » pour maintenir en marche cette roue dessiccante 21.

Enfin, on conclut la séquence « SEQ.O » par l'étape O13 de fin.

En référence à la figure 20, la séquence « SEQ.P » a pour objectif d'augmenter la capacité de chauffage de l'installation 1 à partir du mode « VENTILATION ».

La séquence « SEQ.P » commence par une étape P1 de départ, suivie d'une étape P2 de basculement dans le mode « CHAUFFAGE ».

Pour basculer dans le mode « CHAUFFAGE », on réalise les étapes P3 et P4 suivantes.

Dans l'étape P3, on établit la commande « Mise en marche de l'échangeur 22 » pour mettre en marche cet échangeur 22.

Puis, dans l'étape P4 qui suit, on établit la commande « Mise en marche de la batterie chauffante de chauffage 24S » pour mettre en marche cette batterie 24S, et on fixe la température de régulation (ou de consigne) Tregchauf en sortie de cette batterie 24S (pour le deuxième système de régulation 42) à une valeur prédéterminée TheatingInit, soit Tregchauf = TheatingInit.

La température de consigne THeatingInit, utilisée dans cette séquence « SEQ.P », est une valeur d'initialisation qui doit être choisie de manière judicieuse en tenant compte des températures de consigne (ou de confort) à respecter dans chaque zone Zi. Par exemple, si les températures minimales de confort TCmini acceptées sont similaires entre toutes les zones Zi, on peut prendre 4°C de plus que la température minimale pour définir THeatingInit, autrement dit THeatingInit = min(TCmini) + 4°C. De manière générale THeatingInit est placée dans les plages de confort PTCi.

De plus, la température seuil maximale de l'air soufflée TSupplyMax utilisée ultérieurement correspond à une valeur seuil prédéterminée maximale pour l'air soufflé dans les zones Zi. Cette température seuil maximale TSupplyMax peut par exemple être fixée à 30°C pour respecter le confort des occupants, car une température de soufflage supérieure à 30°C serait en effet inconfortable.

Enfin, on conclut la séquence « SEQ.P » par l'étape P5 de fin.

En référence à la figure 21, la séquence « SEQ.Q » a pour objectif d'augmenter la capacité de chauffage de l'installation 1 à partir du mode « CHAUFFAGE ».

La séquence « SEQ.Q » commence par une étape Q1 de départ, suivie des étape Q2 et Q3 nécessaires pour rester dans le mode « CHAUFFAGE » tout en procédant à un ajustement.

Dans l'étape Q2, on établit la commande « Maintien en marche de l'échangeur 22 » pour maintenir en marche cet échangeur 22.

Puis, dans l'étape Q3 qui suit, on procède à l'ajustement : on établit la commande « Maintien en marche de la batterie chauffante de chauffage 24S » pour maintenir en marche cette batterie 24S, et on augmente la température de régulation (ou de consigne) Tregchauf en sortie de cette batterie 24S d'une valeur prédéterminée, par exemple de 1°C, tout en vérifiant que cette nouvelle température de régulation reste inférieure ou égale à la température seuil maximale TSupplyMax.

Enfin, on conclut la séquence « SEQ.Q » par l'étape Q4 de fin.

En référence à la figure 22, la séquence « SEQ.R » a pour objectif de diminuer la capacité de chauffage de l'installation 1 à partir du mode « CHAUFFAGE ».

La séquence « SEQ.R » commence par une étape R1 de départ, suivie d'une étape R2 d'ajustement dans laquelle on commande la diminution de la température de régulation (ou de consigne) en sortie de la batterie chauffante de chauffage 24S (pour le deuxième système de régulation 42), par exemple de 1°C, tout en vérifiant que cette nouvelle température de régulation reste supérieure ou égale à la température seuil minimale TSupplyMin.

Ensuite, on réalise une étape R3 de test sur le besoin en diminution de chauffage sur les zones Zi. Autrement dit, on vérifie si la demande en diminution de chauffage est requise pour toutes les zones.

Le test de l'étape R3 est réalisé comme suit : au début de la séquence principale « SEQ.A » (autrement à chaque début de cycle), on initialise un compteur à 0. Ce compteur est incrémenté d'une unité à chaque fois qu'une étape alloue la valeur 1 (vrai) à la donnée d'information « Diminuer le chauffage », en l'occurrence lors de l'étape E5.

Si le compteur a une valeur égale à N, avec pour rappel N le nombre de zones Zi, alors on conclut que la demande en diminution du chauffage est requise par toutes les zones.

Si la demande en diminution de chauffage est requise par toutes les zones (test positif pour l'étape R3), alors, dans une étape R4 qui suit, on réalise un autre test sur la température de régulation (ou de consigne) Tregchauf en sortie de la batterie chauffante de chauffage 24S. Ce test consiste à comparer la température de régulation Tregchauf en sortie de la batterie 24S avec le minimum des températures TZi dans les zones Zi (min(TZi)).

Si Tregchauf > min(TZi), alors, dans une étape R5 qui suit, on poursuit avec un nouveau test pour vérifier si la température maximale de confort TCmaxi a été atteinte par au moins une zone Zi. Autrement dit, on vérifie si TZk > TCmaxk pour au moins une zone Zk.

Si le test de l'étape R5 est positif (soit TZk > TCmaxk pour au moins une zone Zk), alors, dans une étape R6, on bascule dans le mode « RAFRAÎCHISSEMENT TROIS », car il est nécessaire de fournir du rafraîchissement pour faire redescendre les températures TZi dans les zones Zi.

Pour basculer dans le mode « RAFRAÎCHISSEMENT TROIS », on réalise les étapes R7, R8 et R9 suivantes, avec deux ajustements.

Dans l'étape R7, on établit la commande « Mise en marche de l'humidificateur de reprise 25R » pour mettre en marche cet humidificateur 25R, en fixant la température de régulation (ou de consigne) Treghrepr en sortie de cet humidificateur 25R à la valeur de la température de régulation Tregchauf en sortie de la batterie chauffante de chauffage 24S, soit Treghrepr = Tregchauf.

Puis, dans l'étape R8 qui suit, on établit la commande « Maintien en marche de l'échangeur 22 » pour maintenir en marche cet échangeur 22.

Puis, dans l'étape R9 qui suit, on établit la commande « Mise en marche de l'humidificateur de soufflage 25S » pour mettre en marche cet humidificateur 25S, en fixant la température de régulation (ou de consigne) Treghsouf en sortie de cet humidificateur 25S à la valeur de la température de régulation Tregchauf en sortie de la batterie chauffante de chauffage 24S, soit Treghsouf = Tregchauf. Et on conclut par l'étape R13 de fin.

Si le test de l'étape R5 est négatif (soit TZi ≤ TCmaxi pour toutes les zones Zi), alors, dans une étape R6, on bascule dans le mode « VENTILATION », suffisant pour abaisser la capacité de chauffage, ce qui revient à éteindre la batterie chauffante de chauffage 24S et le générateur 22. Pour rappel, il n'est pas nécessaire d'émettre de commande spécifique pour éteindre ces composants. Et on conclut par l'étape R13 de fin.

Par contre si la demande en diminution de chauffage n'est pas requise par toutes les zones (test négatif pour l'étape R3) ou si Tregchauf ≤ min(TZi) (test négatif pour l'étape R4), alors on reste dans le mode « CHAUFFAGE » sans procéder à d'ajustement.

Pour rester dans le mode « CHAUFFAGE », on réalise les étapes R11 et R12 suivantes.

Dans l'étape R11, on établit la commande « Maintien en marche de l'échangeur 22 » pour maintenir en marche cet échangeur 22.

Puis, dans l'étape R12 qui suit, on établit la commande « Maintien en marche de la batterie chauffante de chauffage 24S » pour maintenir en marche cette batterie 24S, sans modifier la température de régulation (ou de consigne) Tregchauf en sortie de cette batterie 24S.

Et on conclut par l'étape R13 de fin.

En référence à la figure 23, la séquence « SEQ.S » a pour objectif de diminuer l'humidité relative dans les zones Zi. Autrement dit, cette séquence « SEQ.S » a pour but de corriger (diminuer) l'humidité relative $RH_{C3}$ de l'air soufflé en sortie de la centrale 2 afin de faire décroître l'humidité relative RHZi des zones Zi.

La température TGenconf utilisée dans cette séquence « SEQ.S » correspond à une température générale de confort préalablement fixé, qui est par exemple établie entre 20 et 25°C tel qu'à 24 °C.

La séquence « SEQ.S » commence par une étape S1 de départ, suivie d'une étape S2 dans laquelle on établit la commande « Mise en marche de l'échangeur 22 » pour mettre en marche cet échangeur 22.

Puis, dans une étape S3, on établit la commande « Mise en marche de la roue dessiccante 21 » pour mettre en marche cette roue dessiccante 21.

Ensuite, on réalise une étape S4 de vérification du mode « VENTILATION », « CHAUFFAGE », « RAFRAÎCHISSEMENT UN », « RAFRAÎCHISSEMENT DEUX », « RAFRAÎCHISSEMENT TROIS » ou « RAFRAÎCHISSEMENT QUATRE » qui est cours de fonctionnement.

Si c'est le mode « VENTILATION » ou « RAFRAÎCHISSEMENT UN » qui est en cours de fonctionnement, alors on poursuit avec une première série comprenant les étapes S5 à S8. Si c'est le mode « RAFRAÎCHISSEMENT DEUX » qui est en cours de fonctionnement, alors on poursuit avec une deuxième série comprenant les étapes S9 à S11. Si c'est le mode « RAFRAÎCHISSEMENT TROIS » qui est en cours de fonctionnement, alors on poursuit avec une troisième série comprenant les étapes S12 à S14. Si c'est le mode « RAFRAÎCHISSEMENT QUATRE » qui est en cours de fonctionnement, alors on poursuit avec une quatrième série comprenant les étapes S15 à S17. Si c'est le mode « CHAUFFAGE » qui est en cours de fonctionnement, alors on poursuit avec une cinquième série comprenant les étapes S18 à S21. Chaque série est conclut par une étape S22 de fin.

La première série (mode « VENTILATION » ou « RAFRAÎCHISSEMENT UN ») commence par une étape S5 dans laquelle on établit la commande « Mise en marche de l'humidificateur de soufflage 25S » pour mettre en marche cet humidificateur 25S, en fixant la température de régulation (ou de consigne) Treghsouf en sortie de l'humidificateur 25S autour de la température générale de confort TGenconf.

Puis, dans l'étape S6, on établit la commande « Mise en marche de la batterie chauffante de régénération 24R », pour mettre en marche cette batterie 24R, avec une régulation de la température en sortie de la batterie chauffante de régénération 24R autour d'une température de consigne fixe, par exemple à 70 °C, grâce au premier système de régulation 41.

Si c'est le mode « RAFRAÎCHISSEMENT UN » qui fonctionne, on réalise l'étape S7 dans laquelle on établit la commande « Maintien en marche de la batterie chauffante de chauffage 24S » pour maintenir en marche cette batterie 24S, sans modifier la température de régulation (ou de consigne) Tregchauf en sortie de cette batterie 24S. Par contre, si c'est le mode « VENTILATION » qui fonctionne, on ne réalise pas cette étape S7.

On termine cette première série avec l'étape S8 dans laquelle on établit la commande « Mise en marche de l'humidificateur de reprise 25R » pour mettre en marche cet humidificateur 25R, en fixant l'humidité relative de consigne pour cet humidificateur 25R à une valeur fixe élevée, par exemple à 100 %. Pour remarque, l'air de reprise peut être poussé à une humidité très élevée, notament de 100 %, car cet air en sortie de l'humidificateur 25R est ensuite rejeté à l'extérieur. C'est pourquoi on peut ici donner une valeur fixe de 100% pour l'humidité relative en sortie de l'humidificateur de reprise 25R. On note cependant que cette valeur de 100% n'est jamais atteinte pour des raisons de limite de rendement de l'humidificateur 25R,

La deuxième série (mode « RAFRAÎCHISSEMENT DEUX ») commence par une étape S9 dans laquelle on établit la commande « Mise en marche de l'humidificateur de soufflage 25S » pour mettre en marche cet humidificateur 25S, avec une régulation de la température de régulation (ou de consigne) Treghsouf en sortie de l'humidificateur 25S autour de la même température de régulation Treghrepr que pour l'humidificateur de reprise 25R, soit Treghsouf = Treghrepr.

Puis, dans l'étape S10, on établit la commande « Mise en marche de la batterie chauffante de régénération 24R », pour mettre en marche cette batterie 24R, avec une régulation de la température en sortie de la batterie chauffante de régénération 24R autour d'une température de consigne fixe, par exemple à 70 °C.

On termine cette deuxième série avec l'étape S11 dans laquelle on établit la commande « Maintien en marche de l'humidificateur de reprise 25R » pour maintenir en marche cet humidificateur 25R, en fixant l'humidité relative de consigne pour cet humidificateur 25R à une valeur fixe élevée, par exemple à 100%.

La troisième série (mode « RAFRAÎCHISSEMENT TROIS ») commence par une étape S12 dans laquelle on établit la commande « Maintien en marche de l'humidificateur de soufflage 25S » pour maintenir en marche cet humidificateur 25S, sans modifier la température de régulation (ou de consigne) Treghsouf en sortie de cet humidificateur 25S.

Puis, dans l'étape S13, on établit la commande « Mise en marche de la batterie chauffante de régénération 24R », pour mettre en marche cette batterie 24R, avec une régulation de la température en sortie de la batterie chauffante de régénération 24R autour d'une température de consigne fixe, par exemple à 70 °C.

On termine cette troisième série avec l'étape S14 dans laquelle on établit la commande « Maintien en marche de l'humidificateur de reprise 25R » pour maintenir en marche cet humidificateur 25R, en fixant l'humidité relative de consigne pour cet humidificateur 25R à une valeur fixe élevée, par exemple à 100%.

La quatrième série (mode « RAFRAÎCHISSEMENT QUATRE ») commence par une étape S15 dans laquelle on établit la commande « Maintien en marche de l'humidificateur de soufflage 25S » pour maintenir en marche cet humidificateur 25S, sans modifier la température de régulation (ou de consigne) Treghsouf en sortie de cet humidificateur 25S.

Puis, dans l'étape S16, on établit la commande « Maintien en marche de la batterie chauffante de régénération 24R », pour maintenir en marche cette batterie 24R, sans modifier la température de régulation (ou de consigne) en sortie de cette batterie 24R.

On termine cette quatrième série avec l'étape S17 dans laquelle on établit la commande « Maintien en marche de l'humidificateur de reprise 25R » pour maintenir en marche cet humidificateur 25R, en fixant l'humidité relative de consigne pour cet humidificateur 25R à une valeur fixe élevée, par exemple à 100%.

La cinquième série (mode « CHAUFFAGE ») commence par une étape S18 dans laquelle on établit la commande « Mise en marche de l'humidificateur de soufflage 25S » pour mettre en marche cet humidificateur 25S, en fixant la température de régulation (ou de consigne) Treghsouf en sortie de cet humidificateur 25S à la valeur de la température de régulation (ou de consigne) Tregchauf en sortie de la batterie chauffante de chauffage 24S, soit Treghsouf = Tregchauf.

Puis, dans l'étape S19, on établit la commande « Mise en marche de la batterie chauffante de régénération 24R », pour mettre en marche cette batterie 24R, avec une régulation de la température en sortie de la batterie chauffante de régénération 24R autour d'une température de consigne fixe, par exemple à 70 °C.

Puis, dans l'étape S20, on établit la commande « Maintien en marche de la batterie chauffante de chauffage 24S » pour maintenir en marche cette batterie 24S, sans modifier la température de régulation (ou de consigne) Tregchauf en sortie de cette batterie 24S.

On termine cette cinquième série avec l'étape S21 dans laquelle on établit la commande « Mise en marche de l'humidificateur de reprise 25R » pour mettre en marche cet humidificateur 25R, en fixant l'humidité relative de consigne pour cet humidificateur 25R à une valeur fixe élevée, par exemple à 100 %.

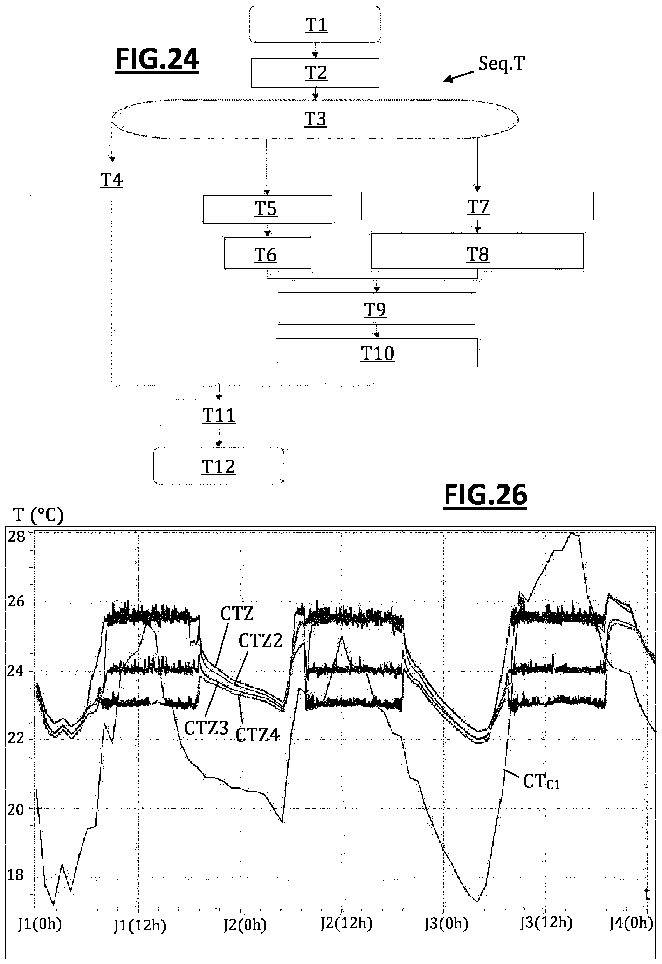

En référence à la figure 24, la séquence « SEQ.T » a pour objectif d'augmenter l'humidité relative dans les zones Zi. Autrement dit, cette séquence « SEQ.T » a pour but de corriger (augmenter) l'humidité relative $RH_{C3}$ de l'air soufflé en sortie de la centrale 2 afin de faire croitre l'humidité relative RHZi des zones Zi.

La séquence « SEQ.T » commence par une étape T1 de départ, suivie d'une étape T2 dans laquelle on établit la commande « Mise en marche de l'échangeur 22 » pour mettre en marche cet échangeur 22.

Ensuite, on réalise une étape T3 de vérification du mode « VENTILATION », « CHAUFFAGE », « RAFRAÎCHISSEMENT UN », « RAFRAÎCHISSEMENT DEUX », « RAFRAÎCHISSEMENT TROIS » ou « RAFRAÎCHISSEMENT QUATRE » qui est cours de fonctionnement.

Si c'est le mode « CHAUFFAGE » qui est en cours de fonctionnement, alors on poursuit avec une étape T4, dans laquelle on établit la commande « Maintien en marche de la batterie chauffante de chauffage 24S » pour maintenir en marche cette batterie 24S, sans modifier la température de régulation (ou de consigne) Tregchauf en sortie de cette batterie 24S.

Puis, on poursuit par une étape T11 dans laquelle on établit la commande « Mise en marche de l'humidificateur de soufflage 25S » pour mettre en marche cet humidificateur 25S, en fixant l'humidité relative de consigne pour cet humidificateur 25S à une valeur fixe élevée mais inférieure à 100%, par exemple à fixée à 90 %. Pour remarque, la valeur fixe notamment de 90% correspond à un maximum à ne pas dépasser pour des raisons de confort, car l'air en sortie de l'humidificateur de soufflage 25S est soufflé dans les zones Zi, donc cette valeur ne peut être fixée à 100 %. Et on conclut par l'étape T12 de fin.

Si c'est le mode « VENTILATION », « RAFRAÎCHISSEMENT UN » ou « RAFRAÎCHISSEMENT DEUX » qui est en cours de fonctionnement, alors on poursuit avec une étape T5, dans laquelle on établit la commande « Mise en marche de la batterie chauffante de chauffage 24S » pour mettre en marche cette batterie 24S, et on fixe la température de régulation (ou de consigne) Tregchauf en sortie de cette batterie 24S à la valeur de la température seuil minimale TSupplyMin, soit Tregchauf = TSupplyMin. Ensuite, dans une étape T6, on établit une température de référence Tref (qui servira pour un calcul ultérieur) que l'on fixe à la valeur de la température seuil minimale TSupplyMin, soit Tref = TSupplyMin.

Si c'est le mode « RAFRAÎCHISSEMENT TROIS » ou « RAFRAÎCHISSEMENT QUATRE » qui est en cours de fonctionnement, alors on poursuit avec une étape T7, dans laquelle on établit la commande « Mise en marche de la batterie chauffante de chauffage 24S » pour mettre en marche cette batterie 24S, et on fixe la température de régulation (ou de consigne) Tregchauf en sortie de cette batterie 24S à la valeur de la température de régulation (ou de consigne) Treghsouf en sortie de l'humidificateur de soufflage 25S, soit Tregchauf = Treghsouf. Ensuite, dans une étape T8, on établit une température de référence Tref (qui servira pour un calcul ultérieur) que l'on fixe à la valeur de température de régulation Treghsouf en sortie de l'humidificateur de soufflage 25S, soit Tref = Treghsouf.

A la suite des étapes T6 et T8, on poursuit par une étape commune T9 d'estimation d'une température de régulation (ou de consigne) optimale Treghrepopt pour l'humidificateur de reprise 25R. Cette température de régulation optimale Treghrepopt est calculée notamment à partir de la température de référence Tref issue des étapes T6 ou T8, selon l'équation (EQU2) suivante :

$$\text{Treghrepopt} = T_{C2} + \text{kemp.delta/Rech} \quad (EQU2)$$

où :

- delta = Tref - Twet ;
- Twet = $f(T_{C2}, RH_{C2}, P_{C1})$ ;
- $T_{C2}$ est la température mesurée par le deuxième système de mesure C2 ;
- Rech correspond à l'efficacité de l'échangeur 22 ;
- $RH_{C2}$ est l'humidité relative mesurée par le deuxième système de mesure C2 ;
- $P_{C1}$ est la pression mesurée par le premier système de mesure C1 ;
- f(T,RH,P) est une fonction psychométrique qui calcule une température humide à partir des paramètres T, RH et P ; et
- kemp correspond à une coefficient empirique qui intègre une marge d'erreur dans le calcul de la fonction psychométrique f, avec par exemple kemp = 3.

Puis, dans une étape T10, on établit la commande « Maintien en marche de l'humidificateur de reprise 25R » pour maintenir en marche cet humidificateur 25R, en fixant la température de régulation (ou de consigne) Treghrepr en sortie de cet humidificateur 25R à la valeur de la température de régulation optimale Treghrepopt, soit Treghrepr = Treghrepopt.

Puis, on poursuit avec l'étape T11 déjà décrite ci-dessus et enfin on conclut par l'étape T12 de fin.

La mise en oeuvre du procédé décrit ci-dessus permet de réguler simultanément la température ainsi que l'humidité relative de plusieurs zones. Un bâtiment peut ainsi être divisé en plusieurs zones Zi thermiques dont les besoins sont différents. Le procédé de régulation conforme à l'invention permet de maintenir chaque zone Zi thermique dans leur plage de confort en température et en humidité relative.

Les figures 25 et 26 illustrent les résultats, sur un simulateur thermique et dynamique de bâtiment, de la mise en oeuvre du procédé de régulation conforme à l'invention, dans une installation 1, pour la régulation de quatre zones Z1, Z2, Z3, Z4 d'un bâtiment, sur trois jours de simulation entre le premier jour J1 à minuit (0 h) et le dernier jour J4 à minuit (0 h), en période estivale avec donc un besoin en rafraîchissement.

Sur les deux figures 25 et 26, la courbe $CT_{C1}$ illustre la variation de la température TC1 en fonction du temps t, TC1 correspondant pour rappel à la température de l'air extérieur, et les courbes CTZ1, CTZ2, CTZ3 et CTZ4 illustrent les variations des températures TZ1, TZ2, TZ3 et TZ4 dans les zones Z1 à Z4 en fonction du temps t.

Pour la première simulation de la figure 25, la plage de température de confort PTCi pour chaque zone Zi est fixée à [24°C ; 25,5°C] de 8h à 18h pour les trois jours J1, J2, J3 représentés, ce qui revient sensiblement à fixer une température de consigne pour chaque zone Zi à 25,5°C, car on travaille en mode de rafraîchissement où la régulation se cale sur la température maximale de confort. En dehors de cette plage horaire, le procédé met en oeuvre un mode « Rafraîchissement par l'air extérieur dans chaque zone Zi » dont l'utilisation est pertinente car elle permet de rafraichir les zones pendant la nuit.

Pour la seconde simulation de la figure 26, on a les plages suivantes :

- les zones Z1 et Z2 ont chacun une plage de température de confort fixée à [24°C ; 25,5°C] de 8h à 18h (soit une température de consigne de 25,5°C de 8h à 18h) ;
- la zone Z3 a une plage de température de confort fixée à [22,5°C ; 24°C] de 8h à 18h (soit une température de consigne de 24°C de 8h à 18h) ; et
- la zone Z4 a une plage de température de confort fixée à [21,5°C ; 23°C] de 8h à 18h (soit une température de consigne de 23°C de 8h à 18h).

Cette seconde simulation démontre bien que le procédé et l'installation conformes à l'invention permettent de maintenir des consignes différentes en température dans plusieurs zones distinctes.

Bien entendu l'exemple de mise en oeuvre évoqué ci-dessus ne présente aucun caractère limitatif et d'autres améliorations et détails peuvent être apportés à l'installation selon l'invention, sans pour autant sortir du cadre de l'invention où d'autres organes peuvent par exemple compléter l'installation.

## Revendications

1. Installation (1) de régulation thermique comprenant une centrale d'air à dessiccation (2) comportant deux voies de circulation d'air dites de reprise (20R) et de soufflage (20S), une roue dessicante (21) interposée sur les deux voies (20R, 20S), au moins un échangeur thermique (22), un ventilateur dit de soufflage (23S) placé sur la voie de soufflage (20S), un humidificateur dit de soufflage (23S) placé sur la voie de soufflage (20S) en aval de l'échangeur thermique (22),

   ladite installation (1) étant **caractérisée** en qu'elle constitue une installation (1) de régulation thermique multizone (Zi) pour la régulation thermique sur plusieurs zones (Zi) distinctes à réguler, ladite installation (1) intégrant :

   - la centrale d'air à dessiccation (2) comportant les deux voies de circulation d'air dites de reprise (20R) et de soufflage (20S) entre les zones (Zi) et l'extérieur (EXT), la roue dessiccante (21) et un échangeur thermique (22) interposés sur les deux voies (20R, 20S), un ventilateur de reprise (23R) placé sur la voie de reprise (20R) pour rejeter l'air vers l'extérieur, une batterie chauffante dite de régénération (24R) placée sur la voie de reprise (20R) en amont de la roue dessiccante (21) et en aval de l'échangeur thermique (22), un humidificateur dit de reprise (25R) placé sur la voie de reprise (20R) en amont de l'échangeur thermique (22), le ventilateur de soufflage (23S) placé sur la voie de soufflage (20S) pour souffler l'air dans les zones (Zi), l'humidificateur de soufflage (23S) et une batterie chauffante dite de chauffage (24S) placée sur la voie de soufflage (20S) en aval de l'humidificateur de soufflage (25S) ;
   - une canalisation de soufflage (CS) présentant une entrée connectée en sortie (SS) de la voie de soufflage (20S) et des sorties dans les différentes zones (Zi) ;

- une canalisation de reprise (CR) présentant des entrées dans les différentes zones (Zi) et une sortie connectée en entrée (ER) de la voie de reprise (20R) ;
- un générateur thermique (3) en liaison avec les batteries chauffantes de régénération et de chauffage (24R, 24S) via un ballon tampon (30) ;
- un premier système de mesure (C1) de la température ($T_{C1}$), de la pression ($P_{C1}$) et de l'humidité relative ($RH_{C1}$) dans la voie de soufflage (20S), à son entrée (ES) en amont de la roue dessiccante (21) ;
- un deuxième système de mesure (C2) de la température ($T_{C2}$) et de l'humidité relative ($RH_{C2}$) dans la voie de soufflage (20S), en aval de la roue dessiccante (21) et en amont de l'échangeur thermique (22) ;
- un troisième système de mesure (C4) de la température ($T_{C3}$) et de l'humidité relative ($RH_{C3}$) dans la voie de soufflage (20S), à sa sortie (SS) en aval du ventilateur de soufflage (23S) et de l'humidificateur de soufflage (25S) ;
- un quatrième système de mesure (C4) de la température ($T_{C4}$) et de l'humidité relative ($RH_{C4}$) dans la voie de reprise (20R), en aval de l'humidificateur de reprise (25R) et en amont de l'échangeur thermique (22) ;
- un cinquième système de mesure (C5) de la température ($T_{C5}$) dans le ballon tampon (30) ;
- un sixième système de mesure ($C6_i$) de la température (TZi) et de l'humidité relative (RHZi) pour chacune des zones (Zi) ;
- un premier système de régulation (41) de la température en sortie de la batterie chauffante de régénération (24R) ;
- un deuxième système de régulation (42) de la température en sortie de la batterie chauffante de chauffage (24S) ;
- un troisième système de régulation (43) de la température en sortie de l'humidificateur de reprise (25R) ;
- un quatrième système de régulation (44) de la température en sortie de l'humidificateur de soufflage (25S) ;
- un système aéraulique ($5_i$) de réglage du débit d'air (Dzi) à chaque sortie de la canalisation de soufflage (CS), pour régler de manière indépendante le débit d'air soufflé (Dzi) dans chacune des zones (Zi) ;
- un dispositif d'entrée (6) d'une plage de température de confort (PTCi) et d'une plage d'humidité relative de confort (PRHCi) pour chacune des zones (Zi) ;
- une unité de pilotage (6) reliée :

  - aux systèmes de mesure (C1, C2, C3, C4, C5, $C6_i$) pour recevoir leurs données de mesure ;
  - aux ventilateurs de reprise et de soufflage (23R, 23S) pour contrôler leurs débits respectifs de ventilation ;
  - à la roue dessiccante (21) pour commander sa mise en marche/arrêt ;
  - à l'échangeur thermique (22) pour commander sa mise en marche/arrêt ;
  - aux systèmes de régulation (41, 42, 43, 44) pour contrôler les températures de sortie correspondantes ;
  - aux systèmes aérauliques ($5_i$) pour contrôler de manière indépendante les débits d'air soufflé (DZi) dans les différentes zones (Zi) ;
  - au dispositif d'entrée (6) pour recevoir les plages de température et d'humidité relative de confort (PTCi, PRHCi) dans les différentes zones (Zi) ;

ladite unité de pilotage (6) étant conçue pour piloter de manière dynamique, à intervalles de temps déterminés et/ou réguliers, en fonction des données de mesure et des plages de température et d'humidité relative de confort :

- les composants de la centrale d'air à dessiccation (2), à savoir la roue dessiccante (21), l'échangeur thermique (22), les systèmes de régulation (41, 42, 43, 44), les humidificateurs (25R, 25S) et les batteries de chauffage (24R, 24S), pour que la centrale d'air à dessiccation (2) délivre, en sortie (SS) de sa voie de soufflage (20S), de l'air à une température ($T_{C3}$) et une humidité relative ($RH_{C3}$) dites de soufflage prédéterminées ; et
- les ventilateurs (23R, 23S) et les systèmes aérauliques ($5_i$) pour que les systèmes aérauliques ($5_i$) soufflent chacun de l'air à ladite température de soufflage ($T_{C3}$), à ladite humidité relative de soufflage ($RH_{C3}$) et à un débit dit de soufflage (DZi) propre à chacune des zones (Zi).

2. Procédé de régulation thermique pour la régulation thermique sur au moins une zone (Zi) à réguler en pilotant une installation (1) de régulation thermique comprenant une centrale d'air à dessiccation (2), ledit procédé étant caractérisé en qu'il s'agit d'un procédé de régulation thermique multizone (Zi) pour la régulation thermique sur plusieurs zones (Zi) distinctes à réguler, ledit procédé consistant à piloter une installation (1) conforme à la revendication 1 par la mise en oeuvre des étapes suivantes :

- établissement d'une première mesure de la température ($T_{C1}$), de la pression ($P_{C1}$) et de l'humidité relative ($RH_{C1}$) dans la voie de soufflage (20S) en amont de la roue dessiccante (21) ;
- établissement d'une deuxième mesure de la température ($T_{C2}$) et de l'humidité relative ($RH_{C2}$) dans la voie de soufflage (20S) en aval de la roue dessiccante (21) et en amont de l'échangeur thermique (22) ;
- établissement d'une troisième mesure de la température ($T_{C3}$) et de l'humidité relative ($RH_{C3}$) dans la voie de soufflage (20S) en aval du ventilateur de soufflage (23S) et en amont des zones (Zi) ;
- établissement d'une quatrième mesure de la température ($T_{C4}$) et de l'humidité relative ($RH_{C4}$) dans la voie de reprise (20R) en aval de l'humidificateur de reprise (25R) et en amont de l'échangeur thermique (22) ;
- établissement d'une cinquième mesure de la température ($T_{C5}$) dans le ballon tampon (30) ;
- établissement d'une sixième mesure de la température (TZi) et de l'humidité relative (RHZi) pour chacune des zones (Zi) ;
- entrée d'une plage de température de confort (PTCi) et d'une plage d'humidité relative de confort (PRHCi) pour chacune des zones (Zi) ;
- pilotage dynamique, à intervalles de temps déterminés et/ou réguliers, en fonction des données de mesure et des plages de température et d'humidité relative de confort :

- d'une part et selon un pilotage principal, des composants de la centrale d'air à dessiccation (2), à savoir la roue dessiccante (21), l'échangeur thermique (22), les systèmes de régulation (41, 42, 43, 44), les humidificateurs (25R, 25S) et les batteries de chauffage (24R, 24S), pour que la centrale d'air à dessiccation (2) délivre, en sortie (SS) de sa voie de soufflage (20S), de l'air à une température ($T_{C3}$) et une humidité relative ($RH_{C3}$) dites de soufflage prédéterminées ; et
- d'autre part et selon un pilotage secondaire, les ventilateurs (23R, 23S) et les systèmes aérauliques ($5_i$) pour que les systèmes aérauliques ($5_i$) soufflent chacun de l'air à ladite température de soufflage ($T_{C3}$), à ladite humidité relative de soufflage ($RH_{C3}$) et à un débit dit de soufflage (DZi) propre à chacune des zones (Zi).

3. Procédé selon la revendication 2, dans lequel, dans le pilotage principal, on pilote les composants de la centrale d'air à dessiccation (2) selon l'un des modes de fonctionnement suivants :

- un mode dit de ventilation qui consiste à assurer une ventilation libre des zones (Zi), où la roue dessiccante (21), l'échangeur thermique (22), les humidificateurs (25R, 25S) et les batteries de chauffage (24R, 24S) sont inactifs, et les ventilateurs (23R, 23S) sont actifs ;
- un mode dit de chauffage qui consiste à assurer le chauffage des zones (Zi) où l'échangeur thermique (22), la batterie chauffante de chauffage (24S) et les deux ventilateurs (23R, 23S) sont actifs, tandis que la roue dessiccante (21), la batterie chauffante de régénération (24R) et les deux humidificateurs (25R, 25S) sont inactifs ;
- un premier mode de rafraîchissement où la batterie chauffante de chauffage (24S) et les deux ventilateurs (23R, 23S) sont actifs, tandis que la roue dessiccante (21), l'échangeur thermique (22), la batterie chauffante de régénération (24R) et les deux humidificateurs (25R, 25S) sont inactifs ;
- un deuxième mode de rafraîchissement où l'échangeur thermique (22), l'humidificateur de reprise (25R) et les deux ventilateurs (23R, 23S) sont actifs, tandis que la roue dessiccante (21), les batteries de chauffage (24R, 24S) et l'humidificateur de soufflage (25S) sont inactifs ;
- un troisième mode de rafraîchissement où l'échangeur thermique (22), les deux humidificateurs (25R, 25S) et les deux ventilateurs (23R, 23S) sont actifs, tandis que la roue dessiccante (21) et les batteries de chauffage (24R, 24S) sont inactives ;
- un quatrième mode de rafraîchissement où l'échangeur thermique (22), les deux humidificateurs (25R, 25S), la roue dessiccante (21), la batterie chauffante de régénération (24R) et les deux ventilateurs (23R, 23S) sont actifs, tandis que la batterie chauffante de chauffage (24S) est inactive.

4. Procédé selon la revendication 3, dans lequel on exécute, à intervalles de temps déterminés et/ou réguliers, une séquence principale (« SEQ.A »), qui comporte successivement :

- une séquence dite de contrôle des conditions (« SEQ.B ») de chacune des zones (Zi) qui consiste à comparer, pour chaque zone (Zi), les sixièmes mesures de la température (TZi) et de l'humidité relative (RHZi) dans ladite zone (Zi) avec la plage de température de confort (PTCi) et la plage d'humidité relative de confort (PRHCi) de ladite zone (Zi), pour mettre à jour des données d'information qui traduisent un besoin général en augmentation ou en diminution du chauffage (« Augmenter le chauffage », « Diminuer le chauffage »), un besoin général en augmentation ou en diminution du rafraîchissement (« Augmenter le rafraîchissement », « Diminuer le rafraîchissement »), des besoins propres à chaque zone (Zi) en diminution ou en augmentation du débit (DZi) de soufflage (« Diminuer le débit de l'air soufflé dans la zone Zi », « Augmenter le débit de l'air soufflé dans la zone Zi »), et des besoins propres à chaque zone (Zi) en diminution ou en augmentation de l'humidité relative (« Diminuer l'humidité dans la zone Zi », « Augmenter l'humidité dans la zone Zi ») ;
- une séquence dite de pilotage (« SEQ.F ») des composants de l'installation (1) qui consiste à traduire lesdites données d'information relevées à la séquence de contrôle des conditions (« SEQ.B ») en des consignes de fonctionnement pour chacun des composants de l'installation (1) pour un fonctionnement dans l'un des modes de fonctionnement.

5. Procédé selon la revendication 4, dans lequel, dans la séquence de contrôle des conditions (« SEQ.B »), on réalise une étape (B7) de vérification du mode de fonctionnement qui est cours de fonctionnement, puis :

- si c'est le mode de ventilation qui est en fonctionnement, on enchaine par une séquence de contrôle de ce mode de ventilation (« SEQ.C ») pour mettre à jour les données d'information qui traduisent un besoin général en augmentation du chauffage (« Augmenter le chauffage »), un besoin général en augmentation du rafraîchissement (« Augmenter le rafraîchissement ») et des besoins propres à chaque zone (Zi) en augmentation du débit de soufflage (« Augmenter le débit de l'air soufflé dans la zone Zi ») ;
- si c'est l'un des quatre modes de rafraîchissement qui est en fonctionnement, on enchaine par une séquence de contrôle du mode de rafraîchissement (« SEQ.D ») pour mettre à jour les données d'information qui traduisent un besoin général en diminution ou en augmentation du rafraîchissement (« Diminuer le rafraîchissement », « Augmenter le rafraîchissement »), et des besoins propres à chaque zone (Zi) en diminution et en augmentation du débit de soufflage (« Diminuer le débit de l'air soufflé dans la zone Zi », « Augmenter le débit de l'air soufflé dans la zone Zi ») ;
- si c'est le mode de chauffage qui est en fonctionnement, on enchaine par une séquence de contrôle de ce mode de chauffage (« SEQ.E ») pour mettre à jour les données d'information qui traduisent un besoin général en diminution ou en augmentation du chauffage (« Diminuer le chauffage », « Augmenter le chauffage »), et des besoins propres à chaque zone (Zi) en diminution et en augmentation du débit de soufflage (« Diminuer le débit de l'air soufflé dans la zone Zi », « Augmenter le débit de l'air soufflé dans la zone Zi »).

6. Procédé selon la revendication 5, dans lequel lors de la séquence de contrôle du mode de rafraîchissement (« SEQ.D »), on étudie, pour chaque zone (Zi), les trois paramètres suivants pour la mise à jour des données d'information :

- Prafri = TZi - TCmaxi, où TCmaxi est la valeur maximale de la plage température de confort (PTCi) ;
- MOYrafri = TZimoy - TCmaxi, où TZimoy est une moyenne des températures TZi mesurées sur des intervalles de temps précédents ;
- TENDi = TZi mesurée sur l'intervalle de temps présent - Tzi mesurée sur l'intervalle de temps précédent.

7. Procédé selon les revendications 5 ou 6, dans lequel lors de la séquence de contrôle du mode de chauffage (« SEQ.E »), on étudie, pour chaque zone (Zi), les trois paramètres suivants pour la mise à jour des données d'information :

- Pchaufi = TZi - TCmini, où TCmini est la valeur minimale de la plage de température de confort (PTCi) ;
- MOYchaufi = TZimoy - Tcmini, où TZimoy est une moyenne des températures TZi mesurées sur des intervalles de temps précédents ;
- TENDi = TZi mesurée sur l'intervalle de temps présent - Tzi mesurée sur l'intervalle de temps précédent.

8. Procédé selon l'une quelconque des revendications 4 à 7, dans lequel, dans la séquence de pilotage (« SEQ.F »), on réalise :

- une première phase d'arbitrage entre les données d'information sur les besoins généraux en diminution ou en augmentation du rafraîchissement (« Diminuer le rafraîchissement », « Augmenter le rafraîchissement ») et sur les besoins généraux en diminution ou en augmentation du chauffage (« Diminuer le chauffage », « Augmenter le chauffage »), en comparant les températures (TZi) mesurées dans les zones (Zi) avec leurs plages de température de confort (PTCi) respectives ; puis
- une seconde phase dans laquelle on met en oeuvre l'une des séquences suivantes en fonction de l'arbitrage réalisé dans la première phase :

- une séquence (« SEQ.G ») d'augmentation du rafraîchissement à partir du mode de ventilation ;
- une séquence (« SEQ.H ») d'augmentation du rafraîchissement à partir du premier mode de rafraîchissement ;

- une séquence (« SEQ.I ») d'augmentation du rafraîchissement à partir du deuxième mode de rafraîchissement ;
- une séquence (« SEQ.J ») d'augmentation du rafraîchissement à partir du troisième mode de rafraîchissement ;
- une séquence (« SEQ.K ») d'augmentation du rafraîchissement à partir du quatrième mode de rafraîchissement ;
- une séquence (« SEQ.L ») de diminution du rafraîchissement à partir du premier mode de rafraîchissement ;
- une séquence (« SEQ.M ») de diminution du rafraîchissement à partir du deuxième mode de rafraîchissement ;
- une séquence (« SEQ.N ») de diminution du rafraîchissement à partir du troisième mode de rafraîchissement ;
- une séquence (« SEQ.O ») de diminution du rafraîchissement à partir du quatrième mode de rafraîchissement ;
- une séquence (« SEQ.P ») d'augmentation du chauffage à partir du mode de ventilation ;
- une séquence (« SEQ.Q ») d'augmentation du chauffage à partir du mode de chauffage ;
- une séquence (« SEQ.R ») de diminution du chauffage à partir du mode de chauffage ;

- puis on poursuit la seconde phase avec l'une des deux séquences suivantes :

- une séquence (« SEQ.S ») de diminution de l'humidité relative ;
- une séquence (« SEQ.T ») d'augmentation de l'humidité relative.

9. Procédé selon la revendication 8, dans lequel, dans la seconde phase de la séquence de pilotage (« SEQ.F »), on met en oeuvre l'une des séquences suivantes pour l'augmentation du rafraîchissement :

- la séquence (« SEQ.G ») d'augmentation du rafraîchissement à partir du mode de ventilation, dans laquelle on compare la température (TC1) mesurée par le premier système de mesure (C1) avec une température seuil minimale de l'air soufflée (TSupplyMin) pour établir si on bascule dans le premier mode de rafraîchissement ou dans le deuxième mode de rafraîchissement ;
- la séquence (« SEQ.H ») d'augmentation du rafraîchissement à partir du premier mode de rafraîchissement, dans laquelle on bascule dans le troisième mode de rafraîchissement avec une régulation de la température en sortie de l'humidificateur de reprise (25R) autour d'une température seuil minimale de l'air soufflée (TSupplyMin) ;
- la séquence (« SEQ.I ») d'augmentation du rafraîchissement à partir du deuxième mode de rafraîchissement, dans laquelle on teste la capacité de l'humidificateur de reprise (25R) pour établir si on bascule dans le troisième mode de rafraîchissement ou si on reste dans le deuxième mode de rafraîchissement avec une diminution de la température de régulation (Treghrepr) en sortie de l'humidificateur de reprise (25R) ;
- la séquence (« SEQ.J ») d'augmentation du rafraîchissement à partir du troisième mode de rafraîchissement, dans laquelle on teste la capacité de l'humidificateur de reprise (25R) et la capacité de l'humidificateur de soufflage (25S), pour établir si on bascule dans le quatrième mode de rafraîchissement ou si on reste dans le troisième mode de rafraîchissement, avec éventuellement une diminution de la température de régulation (Treghrepr ; Treghsouf) en sortie de l'un des humidificateurs (25R ; 25S) ;
- la séquence (« SEQ.K ») d'augmentation du rafraîchissement à partir du quatrième mode de rafraîchissement, dans laquelle on teste la capacité de l'humidificateur de reprise (25R) et la capacité de l'humidificateur de soufflage (25S), pour établir un ajustement dans le quatrième mode de rafraîchissement qui consiste à : soit diminuer la température de régulation en sortie (Treghrepr) de l'humidificateur de reprise (25R), soit diminuer la température de régulation (Treghsouf) en sortie de l'humidificateur de soufflage (25S), soit augmenter la température de régulation en sortie de la batterie chauffante de régénération (24R).

10. Procédé selon la revendication 8, dans lequel, dans la seconde phase de la séquence de pilotage (« SEQ.F »), on met en oeuvre l'une des séquences suivantes pour la diminution du rafraîchissement :

- la séquence (« SEQ.L ») de diminution du rafraîchissement à partir du premier mode de rafraîchissement, dans laquelle on vérifie si la demande en diminution du rafraîchissement est requise pour toutes les zones (Zi) et si un débit minimal de soufflage (DZmini) est mis en oeuvre pour toutes les zones (Zi), pour établir si on bascule dans le mode de ventilation ou si on reste dans le premier mode de rafraîchissement sans ajustement ;
- la séquence (« SEQ.M ») de diminution du rafraîchissement à partir du deuxième mode de rafraîchissement, dans laquelle on commande l'augmentation de la température de régulation (Treghrepr) en sortie de l'humidificateur de reprise (25R), puis on vérifie si la demande en diminution du rafraîchissement est requise pour toutes les zones (Zi) et on compare la température de régulation (Treghrepr) en sortie de l'humidificateur de reprise (25R) avec le maximum (max(TZi)) des températures (TZi) mesurées dans les zones (Zi), pour établir si on bascule dans le mode de ventilation ou si on reste dans le deuxième mode de rafraîchissement ;
- la séquence (« SEQ.N ») de diminution du rafraîchissement à partir du troisième mode de rafraîchissement, dans laquelle on commande l'augmentation de la température de régulation (Treghsouf) en sortie de l'humidificateur de soufflage (25S), puis on compare la température de régulation (Treghsouf) en sortie de l'humidificateur de soufflage (25S) avec la température de régulation (Treghrepr) en sortie de l'humidificateur de reprise (25R), pour établir si on bascule dans le deuxième mode de rafraîchissement ou si on reste dans le troisième mode de rafraîchissement.
- la séquence (« SEQ.O ») de diminution du rafraîchissement à partir du quatrième mode de rafraîchissement, dans laquelle on calcule une température théorique de soufflage (Ttheorsoufl) si la roue dessiccante (21) n'était pas activée, puis on compare cette température théorique de soufflage (Ttheorsoufl) avec la température de régulation (Treghsouf) en sortie de l'humidificateur de soufflage (25S) pour établir si on bascule dans le troisième mode de rafraîchissement ou si on reste dans le quatrième mode de rafraîchissement avec une augmentation de la température de régulation (Treghsouf) en sortie de l'humidificateur de soufflage (25S) ;

**11.** Procédé selon la revendication 8, dans lequel, dans la seconde phase de la séquence de pilotage (« SEQ.F »), on met en oeuvre l'une des séquences suivantes pour l'augmentation du chauffage :

- la séquence (« SEQ.P ») d'augmentation du chauffage à partir du mode de ventilation, dans laquelle on bascule en mode de chauffage en fixant la température de régulation (Tregchauf) en sortie de la batterie chauffante de chauffage (24S) à une valeur prédéterminée d'initialisation (TheatingInit).
- la séquence (« SEQ.Q ») d'augmentation du chauffage à partir du mode de chauffage, dans laquelle on reste dans le mode de chauffage en augmentant la température de régulation (Tregchauf) en sortie de la batterie chauffante de chauffage (24S).

**12.** Procédé selon la revendication 8, dans lequel, dans la séquence (« SEQ.R ») de diminution du chauffage à partir du mode de chauffage, on diminue la température de régulation (Tregchauf) en sortie de la batterie chauffante de chauffage (24S), puis on vérifie si la demande en diminution de chauffage est requise pour toutes les zones (Zi), on compare la température de régulation (Tregchauf) en sortie de la batterie chauffante de chauffage (24S) avec le minimum (min(TZi)) des températures (TZi) dans les zones (Zi), et on vérifie si la température maximale de confort (TCmaxi) a été atteinte par au moins une zone (Zi), pour établir si on bascule dans le troisième mode de rafraîchissement, ou si on bascule dans le mode de ventilation ou si on reste dans le mode de chauffage.

**13.** Procédé selon la revendication 8, dans lequel, dans la séquence (« SEQ.S ») de diminution de l'humidité relative, on met en marche l'échangeur thermique (22) et la roue dessiccante (21), puis on vérifie quel mode de fonctionnement est en cours de fonctionnement, afin de piloter les autres composants de la centrale d'air à dessiccation (2).

**14.** Procédé selon la revendication 8, dans lequel, dans la séquence (« SEQ.T ») d'augmentation de l'humidité relative, on met en marche l'échangeur thermique (22), puis on vérifie quel mode de fonctionnement est en cours de fonctionnement, afin de piloter les autres composants de la centrale d'air à dessiccation (2).

**Patentansprüche**

**1.** Wärmeregulierungsanlage (1), umfassend eine Trockenluftzentrale (2), welche zwei Rücklauf (20R) und Einblasung (20S) genannte Luftzirkulationswege, ein auf den zwei Wegen (20R, 20S) zwischengeschaltetes Trockenrad (21), mindestens einen Wärmetauscher (22), einen auf dem Einblasweg (20S) platzierten sogenannten Einblaslüfter (23S), einen auf dem Einblasweg (20S) platzierten sogenannten Einblasluftbefeuchter (23S) stromabwärts des Wärmetauschers (22) umfasst, wobei die Anlage (1) **dadurch gekennzeichnet ist, dass** sie eine Mehrzonen- (Zi) Wärmeregulierungsanlage (1) für die Wärmeregulierung auf mehreren getrennt zu regulierenden Zonen (Zi) darstellt, wobei die Anlage (1) beinhaltet:

- die Trockenluftzentrale (2), welche die zwei Rücklauf (20R) und Einblasung (20S) genannten Luftzirkulationswege zwischen den Zonen (Zi) und der Außenseite (EXT), das Trockenrad (21) und einen Wärmetauscher (22), die auf den zwei Wegen (20R, 20S) zwischengeschaltet sind, einen auf dem Rücklaufweg (20R) platzierten Rücklauflüfter (23R), um die Luft zur Außenseite hin auszustoßen, eine sogenannte Regenerations-Heizbatterie (24R), die auf dem Rücklaufweg (20R) stromaufwärts des Trockenrads (21) und stromabwärts des Wärmetauschers (22) platziert ist, einen sogenannten Rücklaufluftbefeuchter (25R), der auf dem Rücklaufweg (20R) stromaufwärts des Wärmetauschers (22) platziert ist, den Einblaslüfter (23S), der auf dem Einblasweg (20S) platziert ist, um Luft in die Zonen (Zi) einzublasen, den Einblasluftbefeuchter (23S) und eine sogenannte Heizungs-Heizbatterie (24S) umfasst, die auf dem Einblasweg (20S) stromabwärts des Einblasluftbefeuchters (25S) platziert ist;

- eine Einblaskanalisation (CS), die einen am Auslass (SS) des Einblasweges (20S) verbundenen Einlass und Auslässe in den verschiedenen Zonen (Zi) aufweist;

- eine Rücklaufkanalisation (CR), die Einlässe in den verschiedenen Zonen (Zi) und einen am Einlass (ER) des Rücklaufweges (20R) verbundenen Auslass aufweist;

- einen Wärmeerzeuger (3), der über einen Pufferballon (30) mit der Regenerations- und Heizungs-Heizbatterie (24R, 24S) in Verbindung steht;

- ein erstes Messsystem (C1) der Temperatur ($T_{C1}$), des Drucks ($P_{C1}$) und der relativen Luftfeuchtigkeit ($RH_{C1}$) im Einblasweg (20S) an seinem Einlass (ES) stromaufwärts des Trockenrads (21);

- ein zweites Messsystem (C2) der Temperatur ($T_{C2}$) und der relativen Luftfeuchtigkeit ($RH_{C2}$) im Einblasweg (20S) stromabwärts des Trockenrads (21) und stromaufwärts des Wärmetauschers (22);

- ein drittes Messsystem (C4) der Temperatur ($T_{C3}$) und der relativen Luftfeuchtigkeit ($RH_{C3}$) im Einblasweg (20S) an seinem Auslass (SS) stromabwärts des Einblaslüfters (23S) und des Einblasluftbefeuchters (25S);

- ein viertes Messsystem (C4) der Temperatur ($T_{C4}$) und der relativen Luftfeuchtigkeit ($RH_{C4}$) im Rücklaufweg (20R) stromabwärts des Rücklaufluftbefeuchters (25R) und stromaufwärts des Wärmetauschers (22);

- ein fünftes Messsystem (C5) der Temperatur ($T_{C5}$) im Pufferballon (30);

- ein sechstes Messsystem ($C6_i$) der Temperatur (TZi) und der relativen Luftfeuchtigkeit (RHZi) für jede der Zonen (Zi);

- ein erstes Regulierungssystem (41) der Temperatur am Auslass der Regenerations-Heizbatterie (24R);

- ein zweites Regulierungssystem (42) der Temperatur am Auslass der Heizungs-Heizbatterie (24S);

- ein drittes Regulierungssystem (43) der Temperatur am Auslass des Rücklaufluftbefeuchters (25R);

- ein viertes Regulierungssystem (44) der Temperatur am Auslass des Einblasluftbefeuchters (25S);

- ein Aerauliksystem ($5_i$) zum Regeln des Luftstroms (Dzi) an jedem Auslass der Einblaskanalisation (CS), um den in jede der Zonen (Zi) eingeblasenen Luftstrom (Dzi) unabhängig zu regeln;

- eine Vorrichtung zum Eingeben (6) eines Komforttemperaturbereichs (PTCi) und eines Komfortbereichs der relativen Luftfeuchtigkeit (PRHCi) für jede der Zonen (Zi);

- eine Ansteuereinheit (6), die angeschlossen ist:

- an die Messsysteme (C1, C2, C3, C4, C5, $C6_i$), um ihre Messdaten zu empfangen;
- an den Rücklauf- und Einblaslüfter (23R, 23S), um ihre jeweiligen Lüftungsströme zu steuern;
- an das Trockenrad (21), um sein Ein-/Ausschalten zu befehlen;
- an den Wärmetauscher (22), um sein Ein-/Ausschalten zu befehlen;
- an die Regulierungssysteme (41, 42, 43, 44), um die entsprechenden Auslasstemperaturen zu steuern;
- an die Aerauliksysteme ($5_i$), um die in die verschiedenen Zonen (Zi) eingeblasenen Luftströme (DZi) unabhängig zu steuern;
- an die Eingabevorrichtung (6), um den Komfortbereich der Temperatur und der relativen Luftfeuchtigkeit (PTCi, PRHCi) in den verschiedenen Zonen (Zi) zu empfangen;

wobei die Ansteuereinheit (6) dafür konzipiert ist, in bestimmten und/oder regelmäßigen Zeitintervallen in Abhängigkeit von den Messdaten und den Komfortbereichen der Temperatur und der relativen Luftfeuchtigkeit dynamisch anzusteuern:

- die Komponenten der Trockenluftzentrale (2), das heißt das Trockenrad (21), den Wärmetauscher (22), die Regulierungssysteme (41, 42, 43, 44), die Luftbefeuchter (25R, 25S) und die Heizungsbatterien (24R, 24S), damit die Trockenluftzentrale (2) am Auslass (SS) ihres Einblasweges (20S) Luft mit einer vorbestimmten, sogenannten Einblastemperatur ($T_{C3}$) und relativen Luftfeuchtigkeit ($RH_{C3}$) liefert; und
- die Lüfter (23R, 23S) und die Aerauliksysteme ($5_i$), damit die Aerauliksysteme ($5_i$) jedes Luft mit der Einblastemperatur ($T_{C3}$), mit der relativen Einblasluftfeuchtigkeit ($RH_{C3}$) und mit einem sogenannten Einblasstrom (DZi), der für jede der Zonen (Zi) eigen ist, einblasen.

2. Wärmeregulierungsverfahren für die Wärmeregulierung auf mindestens einer zu regulierenden Zone (Zi) durch Ansteuern einer Wärmeregulierungsanlage (1), die eine Trockenluftzentrale (2) umfasst, wobei das Verfahren **dadurch gekennzeichnet ist, dass** es sich um ein Mehrzonen- (Zi) Wärmeregulierungsverfahren für die Wärmeregulierung auf mehreren getrennt zu regulierenden Zonen (Zi) handelt, wobei das Verfahren darin besteht, eine Anlage (1) nach Anspruch 1 durch das Umsetzen der folgenden Schritte anzusteuern:

- Ermitteln einer ersten Messung der Temperatur ($T_{C1}$), des Drucks ($P_{C1}$) und der relativen Luftfeuchtigkeit ($RH_{C1}$) im Einblasweg (20S) stromaufwärts des Trockenrads (21);
- Ermitteln einer zweiten Messung der Temperatur ($T_{C2}$) und der relativen Luftfeuchtigkeit ($RH_{C2}$) im Einblasweg (20S) stromabwärts des Trockenrads (21) und stromaufwärts des Wärmetauschers (22);
- Ermitteln einer dritten Messung der Temperatur ($T_{C3}$) und der relativen Luftfeuchtigkeit ($RH_{C3}$) im Einblasweg (20S) stromabwärts des Einblaslüfters (23S) und stromaufwärts der Zonen (Zi);
- Ermitteln einer vierten Messung der Temperatur ($T_{C4}$) und der relativen Luftfeuchtigkeit ($RH_{C4}$) im Rücklaufweg (20R) stromabwärts des Rücklaufluftbefeuchters (25R) und stromaufwärts des Wärmetauschers (22);
- Ermitteln einer fünften Messung der Temperatur ($T_{C5}$) im Pufferballon (30);
- Ermitteln einer sechsten Messung der Temperatur (TZi) und der relativen Luftfeuchtigkeit (RHZi) für jede der Zonen (Zi);
- Eingeben eines Komforttemperaturbereichs (PTCi) und eines Komfortbereichs der relativen Luftfeuchtigkeit (PRHCi) für jede der Zonen (Zi);
- dynamisches Ansteuern, in bestimmen und/oder regelmäßigen Zeitintervallen in Abhängigkeit von den Messdaten und den Komfortbereichen der Temperatur und der relativen Luftfeuchtigkeit:

- von einerseits und einer Hauptansteuerung nach, den Komponenten der Trockenluftzentrale (2), das heißt dem Trockenrad (21), dem Wärmetauscher (22), den Regulierungssystemen (41, 42, 43, 44), den Luftbefeuchtern (25R, 25S) und den Heizungsbatterien (24R, 24S), damit die Trockenluftzentrale (2) am Auslass (SS) ihres Einblasweges (20S) Luft mit einer vorbestimmten, sogenannten Einblastemperatur ($T_{C3}$) und einer relativen Luftfeuchtigkeit ($RH_{C3}$) liefert; und
- von andererseits und einer Sekundäransteuerung nach, den Lüftern (23R, 23S) und den Aerauliksystemen ($5_i$), damit die Aerauliksysteme ($5_i$) jedes Luft mit der Einblastemperatur ($T_{C3}$), mit der relativen Einblasluftfeuchtigkeit ($RH_{C3}$) und mit einem sogenannten Einblasstrom (DZi), der für jede der Zonen (Zi) eigen ist, einblasen.

3. Verfahren nach Anspruch 2, wobei in der Hauptansteuerung die Komponenten der Trockenluftzentrale (2) nach einem der folgenden Betriebsmodi angesteuert werden:

- einem sogenannten Lüftungsmodus, der darin besteht, eine freie Lüftung der Zonen (Zi) sicherzustellen, wobei das Trockenrad (21), der Wärmetauscher (22), die Luftbefeuchter (25R, 25S) und die Heizungsbatterien (24R, 24S) inaktiv sind, und die Lüfter (23R, 23S) aktiv sind;
- einem sogenannten Heizungsmodus, der darin besteht, die Heizung der Zonen (Zi) sicherzustellen, wobei der Wärmetauscher (22), die Heizungs-Heizbatterie (24S) und die zwei Lüfter (23R, 23S) aktiv sind, während das Trockenrad (21), die Regenerations-Heizbatterie (24R) und die zwei Luftbefeuchter (25R, 25S) inaktiv sind;
- einem ersten Auffrischungsmodus, wobei die Heizungs-Heizbatterie (24S) und die zwei Lüfter (23R, 23S) aktiv sind, während das Trockenrad (21), der Wärmetauscher (22), die Regenerations-Heizbatterie (24R) und die zwei Luftbefeuchter (25R, 25S) inaktiv sind;
- einem zweiten Auffrischungsmodus, wobei der Wärmetauscher (22), der Rücklaufluftbefeuchter (25R) und die zwei Lüfter (23R, 23S) aktiv sind, während das Trockenrad (21), die Heizungsbatterien (24R, 24S) und der Einblasluftbefeuchter (25S) inaktiv sind;
- einem dritten Auffrischungsmodus, wobei der Wärmetauscher (22), die zwei Luftbefeuchter (25R, 25S) und die zwei Lüfter (23R, 23S) aktiv sind, während das Trockenrad (21) und die Heizungsbatterien (24R, 24S) inaktiv sind;
- einem vierten Auffrischungsmodus, wobei der Wärmetauscher (22), die zwei Luftbefeuchter (25R, 25S), das Trockenrad (21), die Regenerations-Heizbatterie (24R) und die zwei Lüfter (23R, 23S) aktiv sind, während die Heizungs-Heizbatterie (24S) inaktiv ist.

4. Verfahren nach Anspruch 3, wobei in vorbestimmten und/oder regelmäßigen Zeitintervallen eine Hauptsequenz ("SEQ.A") ausgeführt wird, die nacheinander umfasst:

- eine sogenannte Steuersequenz der Bedingungen ("SEQ.B") jeder der Zonen (Zi), die darin besteht, für jede Zone (Zi) die sechsten Messungen der Temperatur (TZi) und der relativen Luftfeuchtigkeit (RHZi) in der Zone (Zi) mit dem Komforttemperaturbereich (PTCi) und dem Komfortbereich der relativen Luftfeuchtigkeit (PRHCi) der Zone (Zi) zu vergleichen, um Informationsdaten zu aktualisieren, die einen allgemeinen Bedarf an Erhöhung oder an Verringerung der Heizung ("Heizung erhöhen", "Heizung verringern"), einen allgemeinen Bedarf an Erhöhung oder an Verringerung der Auffrischung ("Auffrischung erhöhen", "Auffrischung verringern"), jeder Zone (Zi) eigene Bedarfe an Verringerung oder an Erhöhung des Einblasstroms (DZi) ("Strom der in die Zone Zi eingeblasenen Luft verringern", "Strom der in die Zone Zi eingeblasenen Luft erhöhen"), und jeder Zone (Zi) eigene Bedarfe an Verringerung oder an Erhöhung der relativen Luftfeuchtigkeit ("Luftfeuchtigkeit in der Zone Zi verringern", "Luftfeuchtigkeit in der Zone Zi erhöhen") ausdrücken;
- eine sogenannte Ansteuersequenz ("SEQ.F") der Komponenten der Anlage (1), die darin besteht, die bei der Steuersequenz der Bedingungen ("SEQ.B") erhobenen Informationsdaten in Betriebssollwerte für jede der Komponenten der Anlage (1) für einen Betrieb in einem der Betriebsmodi zu übertragen.

5. Verfahren nach Anspruch 4, wobei in der Steuersequenz der Bedingungen ("SEQ.B") ein Schritt (B7) des Überprüfens des in Betrieb befindlichen Betriebsmodus ausgeführt wird, und anschließend:

- wenn es der Lüftungsmodus ist, der in Betrieb ist, über eine Steuersequenz dieses Lüftungsmodus ("SEQ.C") verkettet wird, um die Informationsdaten zu aktualisieren, die einen allgemeinen Bedarf an Erhöhung der Heizung ("Heizung erhöhen"), einen allgemeinen Bedarf an Erhöhung der Auffrischung ("Auffrischung erhöhen"), und jeder Zone (Zi) eigene Bedarfe an Erhöhung des Einblasstroms ("Strom der in die Zone Zi eingeblasenen Luft erhöhen") ausdrücken;
- wenn es einer der vier Auffrischungsmodi ist, der in Betrieb ist, über eine Steuerfrequenz des Auffrischungsmodus ("SEQ.D") verkettet wird, um die Informationsdaten zu aktualisieren, die einen allgemeinen Bedarf an Verringerung oder an Erhöhung der Auffrischung ("Auffrischung verringern", "Auffrischung erhöhen"), und jeder Zone (Zi) eigene Bedarfe an Verringerung und an Erhöhung des Einblasstroms ("Strom der in die Zone Zi eingeblasenen Luft verringern", "Strom der in die Zone Zi eingeblasenen Luft erhöhen") ausdrücken;
- wenn es der Heizungsmodus ist, der in Betrieb ist, über eine Steuersequenz dieses Heizungsmodus ("SEQ.E") verkettet wird, um die Informationsdaten zu aktualisieren, die einen allgemeinen Bedarf an Verringerung oder an Erhöhung der Heizung ("Heizung verringern", "Heizung erhöhen"), und jeder Zone (Zi) eigene Bedarfe an Verringerung und an Erhöhung des Einblasstroms ("Strom der in die Zone Zi eingeblasenen Luft verringern", "Strom der in die Zone Zi eingeblasenen Luft erhöhen") ausdrücken.

6. Verfahren nach Anspruch 5, wobei bei der Steuersequenz des Auffrischungsmodus ("SEQ.D") für jede Zone (Zi) die drei folgenden Parameter für die Aktualisierung der Informationsdaten untersucht werden:

- Prafri = TZi - TCmaxi, wobei TCmaxi der Maximalwert des Komforttemperaturbereichs (PTCi) ist;
- MOYrafri = TZimoy - TCmaxi, wobei TZimoy ein Durchschnitt der über vorhergehende Zeitintervalle gemessenen Temperaturen TZi ist;
- TENDi = über das aktuelle Zeitintervall gemessene TZi - über das vorhergehende Zeitintervall gemessene Tzi.

7. Verfahren nach den Ansprüchen 5 oder 6, wobei bei der Steuersequenz des Heizungsmodus ("SEQ.E") für jede Zone (Zi) die folgenden drei Parameter für die Aktualisierung der Informationsdaten untersucht werden:

- Pchaufi = TZi - TCmini, wobei TCmini der Minimalwert des Komforttemperaturbereichs (PTCi) ist;
- MOYchaufi = TZimoy - Tcmini, wobei TZimoy ein Durchschnitt der über vorhergehende Zeitintervalle gemessenen Temperaturen TZi ist;
- TENDi = über das aktuelle Zeitintervall gemessene TZi - über das vorhergehende Zeitintervall gemessene Tzi.

8. Verfahren nach einem der Ansprüche 4 bis 7, wobei in der Ansteuersequenz ("SEQ.F") ausgeführt werden:

- eine erste Phase der Arbitrierung zwischen den Informationsdaten über die allgemeinen Bedarfe an Verringerung oder an Erhöhung der Auffrischung ("Auffrischung verringern", "Auffrischung erhöhen") und über die allgemeinen Bedarfe an Verringerung oder an Erhöhung der Heizung ("Heizung verringern", "Heizung erhöhen") durch Vergleichen der in den Zonen (Zi) gemessenen Temperaturen (TZi) mit ihren jeweiligen Komforttemperaturbereichen (PTCi); und anschließend
- eine zweite Phase, in der in Abhängigkeit von der in der ersten Phase ausgeführten Arbitrierung eine der folgenden Sequenzen umgesetzt wird:

- eine Sequenz ("SEQ.G") des Erhöhens der Auffrischung ausgehend vom Lüftungsmodus;

- eine Sequenz ("SEQ.H") des Erhöhens der Auffrischung ausgehend vom ersten Auffrischungsmodus;
- eine Sequenz ("SEQ.I") des Erhöhens der Auffrischung ausgehend vom zweiten Auffrischungsmodus;
- eine Sequenz ("SEQ.J") des Erhöhens der Auffrischung ausgehend vom dritten Auffrischungsmodus;
- eine Sequenz ("SEQ.K") des Erhöhens der Auffrischung ausgehend vom vierten Auffrischungsmodus;
- eine Sequenz ("SEQ.L") des Verringerns der Auffrischung ausgehend vom ersten Auffrischungsmodus;
- eine Sequenz ("SEQ.M") des Verringerns der Auffrischung ausgehend vom zweiten Auffrischungsmodus;
- eine Sequenz ("SEQ.N") des Verringerns der Auffrischung ausgehend vom dritten Auffrischungsmodus;
- eine Sequenz ("SEQ.O") des Verringerns der Auffrischung ausgehend vom vierten Auffrischungsmodus;
- eine Sequenz ("SEQ.P") des Erhöhens der Heizung ausgehend vom Lüftungsmodus;
- eine Sequenz ("SEQ.Q") des Erhöhens der Heizung ausgehend vom Heizungsmodus;
- eine Sequenz ("SEQ.R") des Verringerns der Heizung ausgehend vom Heizungsmodus;
- und anschließend die zweite Phase mit einer der zwei folgenden Sequenzen fortgesetzt wird:

- einer Sequenz ("SEQ.S") des Verringerns der relativen Luftfeuchtigkeit;
- einer Sequenz ("SEQ.T") des Erhöhens der relativen Luftfeuchtigkeit.

9. Verfahren nach Anspruch 8, wobei in der zweiten Phase der Ansteuersequenz ("SEQ.F") eine der folgenden Sequenzen für das Erhöhen der Auffrischung umgesetzt wird:

- die Sequenz ("SEQ.G") des Erhöhens der Auffrischung ausgehend vom Lüftungsmodus, wobei die vom ersten Messsystem (C1) gemessene Temperatur (TC1) mit einer minimalen Grenztemperatur der eingeblasenen Luft (TSupplyMin) verglichen wird, um zu ermitteln, ob in den ersten Auffrischungsmodus oder in den zweiten Auffrischungsmodus umgeschaltet wird;
- die Sequenz ("SEQ.H") des Erhöhens der Auffrischung ausgehend vom ersten Auffrischungsmodus, wobei in den dritten Auffrischungsmodus mit einer Regulierung der Temperatur am Auslass des Rücklaufluftbefeuchters (25R) um eine minimale Grenztemperatur der eingeblasenen Luft (TSupplyMin) herum umgeschaltet wird;
- die Sequenz ("SEQ.I") des Erhöhens der Auffrischung ausgehend vom zweiten Auffrischungsmodus, wobei die Kapazität des Rücklaufluftbefeuchters (25R) geprüft wird, um zu ermitteln, ob in den dritten Auffrischungsmodus umgeschaltet wird, oder ob im zweiten Auffrischungsmodus geblieben wird, mit einer Verringerung der Regulierungstemperatur (Treghrepr) am Auslass des Rücklaufluftbefeuchters (25R);
- die Sequenz ("SEQ.J") des Erhöhens der Auffrischung ausgehend vom dritten Auffrischungsmodus, wobei die Kapazität des Rücklaufluftbefeuchters (25R) und die Kapazität des Einblasluftbefeuchters (25S) geprüft werden, um zu ermitteln, ob in den vierten Auffrischungsmodus umgeschaltet wird, oder ob im dritten Auffrischungsmodus geblieben wird, mit gegebenenfalls einer Verringerung der Regulierungstemperatur (Treghrepr; Treghsouf) am Auslass von einem der Luftbefeuchter (25R; 25S);
- die Sequenz ("SEQ.K") des Erhöhens der Auffrischung ausgehend vom vierten Auffrischungsmodus, wobei die Kapazität des Rücklaufluftbefeuchters (25R) und die Kapazität des Einblasluftbefeuchters (25S) geprüft werden, um eine Anpassung im vierten Auffrischungsmodus zu ermitteln, welche darin besteht: entweder die Regulierungstemperatur am Auslass (Treghrepr) des Rücklaufluftbefeuchters (25R) zu verringern, oder die Regulierungstemperatur (Treghsouf) am Auslass des Einblasluftbefeuchters (25S) zu verringern, oder die Regulierungstemperatur am Auslass der Regenerations-Heizbatterie (24R) zu erhöhen.

10. Verfahren nach Anspruch 8, wobei in der zweiten Phase der Ansteuersequenz ("SEQ.F") eine der folgenden Sequenzen für das Verringern der Auffrischung umgesetzt wird:

- die Sequenz ("SEQ.L") des Verringerns der Auffrischung ausgehend vom ersten Auffrischungsmodus, wobei überprüft wird, ob die Anforderung an Verringerung der Auffrischung für alle der Zonen (Zi) besteht, und um, wenn ein minimaler Einblasstrom (DZmini) für alle der Zonen (Zi) umgesetzt wird, zu ermitteln, ob in den Lüftungsmodus umgeschaltet wird oder ob ohne Anpassung im ersten Auffrischungsmodus geblieben wird;
- die Sequenz ("SEQ.M") des Verringerns der Auffrischung ausgehend vom zweiten Auffrischungsmodus, wobei das Erhöhen der Regulierungstemperatur (Treghrepr) am Auslass des Rücklaufluftbefeuchters (25R) befohlen wird, und anschließend überprüft wird, ob die Anforderung an Verringerung der Auffrischung für alle der Zonen (Zi) besteht, und die Regulierungstemperatur (Treghrepr) am Auslass des Rücklaufluftbefeuchters (25R) mit dem Maximum (max(TZi)) der in den Zonen (Zi) gemessenen Temperaturen (TZi) verglichen wird, um zu ermitteln, ob in den Lüftungsmodus umgeschaltet wird, oder ob im zweiten Auffrischungsmodus geblieben wird;
- die Sequenz ("SEQ.N") des Verringerns der Auffrischung ausgehend vom dritten Auffrischungsmodus, wobei das Erhöhen der Regulierungstemperatur (Treghsouf) am Auslass des Einblasluftbefeuchters (25S) befohlen wird, und anschließend die Regulierungstemperatur (Treghsouf) am Auslass des Einblasluftbefeuchters (25S) mit der Regulierungstemperatur (Treghrepr) am Auslass des Rücklaufluftbefeuchters (25R) verglichen wird, um zu ermitteln, ob in den zweiten Auffrischungsmodus umgeschaltet wird, ober ob im dritten Auffrischungsmodus geblieben wird;

- die Sequenz ("SEQ.O) des Verringerns der Auffrischung ausgehend vom vierten Auffrischungsmodus, wobei eine theoretische Einblastemperatur (Ttheorsoufl), wenn das Trockenrad (21) nicht aktiviert wäre, berechnet wird, und anschließend diese theoretische Einblastemperatur (Ttheorsoufl) mit der Regulierungstemperatur (Treghsouf) am Auslass des Einblasluftbefeuchters (25S) verglichen wird, um zu ermitteln, ob in den dritten Auffrischungsmodus umgeschaltet wird, oder ob im vierten Auffrischungsmodus geblieben wird, mit einer Erhöhung der Regulierungstemperatur (Treghsouf) am Auslass des Einblasluftbefeuchters (25S).

**11.** Verfahren nach Anspruch 8, wobei in der zweiten Phase der Ansteuersequenz ("SEQ.F") eine der folgenden Sequenzen für das Erhöhen der Heizung umgesetzt wird:

- die Sequenz ("SEQ.P") des Erhöhens der Heizung ausgehend vom Lüftungsmodus, wobei in Heizungsmodus umgeschaltet wird, indem die Regulierungstemperatur (Tregchauf) am Auslass der Heizungs-Heizbatterie (24S) auf einen vorbestimmten Initialisierungswert (Theatinglnit) festgelegt wird;

- die Sequenz ("SEQ.Q") des Erhöhens der Heizung ausgehend vom Heizungsmodus, wobei im Heizungsmodus geblieben wird, indem die Regulierungstemperatur (Tregchauf) am Auslass der Heizungs-Heizbatterie (24S) erhöht wird.

**12.** Verfahren nach Anspruch 8, wobei in der Sequenz ("SEQ.R") des Verringerns der Heizung ausgehend vom Heizungsmodus die Regulierungstemperatur (Tregchauf) am Auslass der Heizungs-Heizbatterie (24S) verringert wird, und anschließend überprüft wird, ob die Anforderung an Verringerung der Heizung für alle der Zonen (Zi) besteht, die Regulierungstemperatur (Tregchauf) am Auslass der Heizungs-Heizbatterie (24S) mit dem Minimum (min(TZi)) der Temperaturen (TZi) in den Zonen (Zi) verglichen wird, und überprüft wird, ob die maximale Komforttemperatur (TCmaxi) von mindestens einer Zone (Zi) erreicht worden ist, um zu ermitteln, ob in den dritten Auffrischungsmodus umgeschaltet wird, oder ob in den Lüftungsmodus umgeschaltet wird, oder ob im Heizungsmodus geblieben wird.

**13.** Verfahren nach Anspruch 8, wobei in der Sequenz ("SEQ.S") des Verringerns der relativen Luftfeuchtigkeit der Wärmetauscher (22) und das Trockenrad (21) eingeschaltet werden, und anschließend überprüft wird, welcher Betriebsmodus sich in Betrieb befindet, um die anderen Komponenten der Trockenluftzentrale (2) anzusteuern.

**14.** Verfahren nach Anspruch 8, wobei in der Sequenz ("SEQ.T") des Erhöhens der relativen Luftfeuchtigkeit der Wärmetauscher (22) eingeschaltet wird, und anschließend überprüft wird, welcher Betriebsmodus sich in Betrieb befindet, um die anderen Komponenten der Trockenluftzentrale (2) anzusteuern.

**Claims**

**1.** A thermal regulation installation (1) comprising an air dryer unit (2) including two air flow paths called return (20R) and blowing (20S) air flow paths, a desiccant wheel (21) interposed on the two paths (20R, 20S), at least one heat exchanger (22), a fan called blowing fan (23S) placed on the blowing path (20S), a humidifier called blowing humidifier (23S) placed on the blowing path (20S) downstream of the heat exchanger (22),

said installation (1) being **characterized in that** it constitutes a multizone (Zi) thermal regulation installation (1) for thermal regulation over several distinct zones (Zi) to be regulated, said installation (1) integrating:

- the air dryer unit (2) including the two air flow paths called return (20R) and blowing (20S) air flow paths between the zones (Zi) and the outside (EXT), the desiccant wheel (21) and a heat exchanger (22) interposed on the two paths (20R, 20S), a return fan (23R) placed on the return path (20R) to discharge air to the outside, a heat battery called regeneration heat battery (24R) placed on the return path (20R) upstream of the desiccant wheel (21) and downstream of the heat exchanger (22), a humidifier called return humidifier (25R) placed on the return path (20R) upstream of the heat exchanger (22), the blowing fan (23S) placed on the blowing path (20S) to blow air in the zones (Zi), the blowing humidifier (23S) and a heat battery called heating heat battery (24S) placed on the blowing path (20S) downstream of the blowing humidifier (25S):

- a blowing duct (CS) having an inlet connected to the outlet (SS) of the blowing path (20S) and outlets in the different zones (Zi);

- a return duct (CR) having inlets in the different zones (Zi) and an outlet connected to the inlet (ER) of the return path (20R);

- a heat generator (3) in connection with the regeneration and heating heat batteries (24R, 24S) via a buffer tank (30);
- a first system (C1) for measuring the temperature ($T_{C1}$), the pressure ($P_{C1}$) and the relative humidity ($RH_{C1}$) in the blowing path (20S), at its inlet (ES) upstream of the desiccant wheel (21);
- a second system (C2) for measuring the temperature ($T_{C2}$) and the relative humidity ($RH_{C2}$) in the blowing path (20S), downstream of the desiccant wheel (21) and upstream of the heat exchanger (22);
- a third system (C4) for measuring the temperature ($T_{C3}$) and the relative humidity ($RH_{C3}$) in the blowing path (20S), at its outlet (SS) downstream of the blowing fan (23S) and the blowing humidifier (25S);
- a fourth system (C4) for measuring the temperature ($T_{C4}$) and the relative humidity ($RH_{C4}$) in the return path (20R), downstream of the return humidifier (25R) and upstream of the heat exchanger (22);
- a fifth system (C5) for measuring the temperature ($T_{C5}$) in the buffer tank (30);
- a sixth system ($C6_i$) for measuring the temperature (TZi) and the relative humidity (RHZi) for each of the zones (Zi);
- a first system (41) for regulating the temperature at the outlet of the regeneration heat battery (24R);
- a second system (42) for regulating the temperature at the outlet of the heating heat battery (24S);
- a third system (43) for regulating the temperature at the outlet of the return humidifier (25R);
- a fourth system (44) for regulating the temperature at the outlet of the blowing humidifier (25S);
- an aeraulic system ($5_i$) for setting the air flow rate (Dzi) at each outlet of the blowing duct (CS), to independently set the blown air flow rate (Dzi) in each of the zones (Zi);
- a device (6) for inputting a comfort temperature range (PTCi) and a comfort relative humidity range (PRHCi) for each of the zones (Zi);
- a controller (6) connected to:

> - the measuring systems (C1, C2, C3, C4, C5, $C6_i$) to receive their measurement data;
> - the return and blowing fans (23R, 23S) to monitor their respective ventilation flow rates;
> - the desiccant wheel (21) to control its switching on/off;
> - the heat exchanger (22) to control its switching on/off;
> - the regulation systems (41, 42, 43, 44) to monitor the corresponding outlet temperatures;
> - the aeraulic systems ($5_i$) to independently monitor the blown air flow rates (DZi) in the different zones (Zi);
> - the input device (6) to receive the comfort temperature and relative humidity ranges (PTCi, PRHCi) in the different zones (Zi);

said controller (6) being designed to dynamically pilot, at determined and/or regular time intervals, depending on the measurement data and the comfort temperature and relative humidity ranges:

> - the components of the air dryer unit (2), namely the desiccant wheel (21), the heat exchanger (22), the regulation systems (41, 42, 43, 44), the humidifiers (25R, 25S) and the heating batteries (24R, 24S), so that the air dryer unit (2) delivers, at the outlet (SS) of its blowing duct (20S), air at predetermined temperature ($T_{C3}$) and relative humidity ($RH_{C3}$) called blowing temperature and relative humidity; and
> - the fans (23R, 23S) and the aeraulic systems ($5_i$) so that each of the aeraulic systems ($5_i$) blows air at said blowing temperature ($T_{C3}$), at said blowing relative humidity ($RH_{C3}$) and at a flow rate called blowing flow rate (DZi) specific to each of the zones (Zi).

**2.** A thermal regulation method for thermal regulation over at least one zone (Zi) to be regulated by piloting a thermal regulation installation (1) comprising an air dryer unit (2), said method being **characterized in that** it consists of a multizone thermal regulation method (Zi) for thermal regulation over several distinct zones (Zi) to be regulated, said method consisting in piloting an installation (1) in accordance with claim 1 through the implementation of the following steps:

> - establishment of a first measurement of the temperature ($T_{C1}$), the pressure ($P_{C1}$) and the relative humidity ($RH_{C1}$) in the blowing path (20S) upstream of the desiccant wheel (21);
> - establishment of a second measurement of the temperature ($T_{C2}$) and the relative humidity ($RH_{C2}$) in the blowing path (20S) downstream of the desiccant wheel (21) and upstream of the heat exchanger (22);
> - establishment of a third measurement of the temperature ($T_{C3}$) and the relative humidity ($RH_{C3}$) in the blowing path (20S) downstream of the blowing fan (23S) and upstream of the zones (Zi);
> - establishment of a fourth measurement of the temperature ($T_{C4}$) and the relative humidity ($RH_{C4}$) in the return path (20R) downstream of the return humidifier (25R) and upstream of the heat exchanger (22);

- establishment of a fifth measurement of the temperature ($T_{C4}$) in the buffer tank (30);
- establishment of a sixth measurement of the temperature (TZi) and the relative humidity (RHZi) for each of the zones (Zi);
- input of a comfort temperature range (PTCi) and a comfort relative humidity range (PRHCi) for each of the zones (Zi);
- dynamic piloting, at determined and/or regular time intervals, depending on the measurement data and the comfort temperature and relative humidity ranges:

- on the one hand and according to a main piloting, components of the air dryer unit (2), namely the desiccant wheel (21), the heat exchanger (22), the regulation systems (41,42,43,44), the humidifiers (25R, 25S) and the heat batteries (24R, 24S), so that the air dryer unit (2) delivers, at the outlet (SS) of its blowing path (20S), air at predetermined temperature ($T_{C3}$) and relative humidity ($RH_{C3}$) called blowing temperature and relative humidity; and

- on the other hand and according to a secondary piloting, the fans (23R, 23S) and the aeraulic systems ($5_i$) so that each of the aeraulic systems ($5_i$) blows air at said blowing temperature ($T_{C3}$), at said blowing relative humidity ($RH_{C3}$) and at a flow rate called blowing flow rate (DZi) specific to each of the zones (Zi).

3. The method according to claim 2, wherein, in the main piloting, the components of the air dryer unit (2) are piloted according to any of the following operating modes:

- a mode called ventilation mode which consists in ensuring a free ventilation of the zones (Zi), where the desiccant wheel (21), the heat exchanger (22), the humidifiers (25R, 25S) and the heating batteries (24R, 24S) are inactive, and the fans (23R, 23S) are active;
- a mode called heating mode which consists in ensuring the heating of the zones (Zi) where the heat exchanger (22), the heating heat battery (24S) and the two fans (23R, 23S) are active, whereas the desiccant wheel (21), the regeneration heat battery (24R) and the two humidifiers (25R, 25S) are inactive;
- a first cooling mode where the heating heat battery (24S) and the two fans (23R, 23S) are active, whereas the desiccant wheel (21), the heat exchanger (22), the regeneration heat battery (24R) and the two humidifiers (25R, 25S) are inactive;
- a second cooling mode where the heat exchanger (22), the return humidifier (25R) and the two fans (23R, 23S) are active, whereas the desiccant wheel (21), the heating batteries (24R, 24S) and the blowing humidifier (25S) are inactive;
- a third cooling mode where the heat exchanger (22), the two humidifiers (25R, 25S) and the two fans (23R, 23S) are active, whereas the desiccant wheel (21) and the heating batteries (24R, 24S) are inactive;
- a fourth cooling mode where the heat exchanger (22), the two humidifiers (25R, 25S), the desiccant wheel (21), the regeneration heat battery (24R) and the two fans (23R, 23S) are active, whereas the heating heat battery (24S) is inactive.

4. The method according to claim 3, wherein a main sequence (« SEQ.A ») is executed, at determined and/or regular time intervals, which successively includes:

- a sequence (« SEQ.B ») called condition monitoring sequence for monitoring the conditions of each of the zones (Zi) which consists in comparing, for each zone (Zi), the sixth measurements of the temperature (TZi) and the relative humidity (RHZi) in said zone (Zi) with the comfort temperature range (PTCi) and the comfort relative humidity range (PRHCi) of said zone (Zi), to update information data which reflect a general need for increasing or decreasing the heating (« Increase the heating », « Decrease the heating »), a general need for increasing or decreasing the cooling (« Increase the cooling », « Decrease the cooling »), specific needs of each zone (Zi) for decreasing or increasing the blowing flow rate (DZi) (« Decrease the flow rate of the air blown in the zone Zi », « Increase the flow rate of the air blown in the zone Zi »), and specific needs of each zone (Zi) for decreasing or increasing the relative humidity (« Decrease the humidity in the zone Zi », « Increase the humidity in the zone Zi »);
- a sequence (« SEQ.F ») called piloting sequence for piloting the components of the installation (1) which consists in translating said information data collected at the condition monitoring sequence (« SEQ.B ») into operating instructions for each of the components of the installation (1) for an operation in one of the operating modes.

5. The method according to claim 4, wherein, in the condition monitoring sequence (« SEQ.B »), a step (B7) of checking the current operating mode is carried out, then:

- if it is the ventilation mode which is in operation, it is proceeded to a monitoring sequence of this ventilation mode (« SEQ.C ») to update the information data which reflect a general need for increasing the heating (« Increase the heating »), a general need for increasing the cooling (« Increase the cooling ») and specific needs of each zone (Zi) for increasing the blowing flow rate (« Increase the flow rate of the air blown in the zone Zi »);
- if it is one of the four cooling modes which is in operation, it is proceeded to a monitoring sequence of the cooling mode (« SEQ.D ») to update the information data which reflect a general need for decreasing or increasing the cooling (« Decrease the cooling », « Increase the cooling »), and specific needs of each zone (Zi) for decreasing and increasing the blowing flow rate (« Decrease the flow rate of the air blown in the zone Zi », « Increase the flow rate of the air blown in the zone Zi »);
- if it is the heating mode which is in operation, it is proceeded to a monitoring sequence of this heating mode (« SEQ.E ») to update information data which reflect a general need for decreasing or increasing the heating (« Decrease the heating », « Increase the heating »), and specific needs of each zone (Zi) for decreasing and increasing the blowing flow rate (« Decrease the flow rate of the air blown in the zone Zi », « Increase the flow rate of the air blown in the zone Zi »).

6. The method according to claim 5, wherein during the sequence of monitoring the cooling mode (« SEQ.D »), for each zone (Zi), the following three parameters are studied for updating the information data:

- $Prafri = TZi - TCmaxi$, where TCmaxi is the maximum value of the comfort temperature range (PTCi);
- $MOYrafri = TZimoy - TCmaxi$, where TZimoy is an average of the temperatures TZi measured over previous time intervals;
- $TENDi = TZi$ measured over the present time interval - Tzi measured over the previous time interval.

7. The method according to claims 5 or 6, wherein during the sequence of monitoring the heating mode (« SEQ.E »), for each zone (Zi), the following three parameters are studied for updating the information data:

- $Pchaufi = TZi - TCmini$, where TCmini is the minimum value of the comfort temperature range (PTCi);
- $MOYchaufi = TZimoy - Tcmini$, where TZimoy is an average of the temperatures TZi measured over previous time intervals;
- $TENDi = TZi$ measured over the current time interval - Tzi measured over the previous time interval.

8. The method according to any one of claims 4 to 7, wherein, in the piloting sequence (« SEQ.F »), are carried out:

- a first phase of arbitrating between the information data on the general needs for decreasing or increasing the cooling (« Decrease the cooling », « Increase the cooling »), and on the general needs for decreasing or increasing the heating (« Decrease the heating », « Increase the heating »), by comparing the temperatures (TZi) measured in the zones (Zi) with their respective comfort temperature ranges (PTCi); then
- a second phase in which one of the following sequences is implemented depending on the arbitration carried out in the first phase:

  - a sequence (« SEQ.G ») of increasing the cooling from the ventilation mode;
  - a sequence (« SEQ.H ») of increasing the cooling from the first cooling mode;
  - a sequence (« SEQ.I ») of increasing the cooling from the second cooling mode;
  - a sequence (« SEQ.J ») of increasing the cooling from the third cooling mode;
  - a sequence (« SEQ.K ») of increasing the cooling from the fourth cooling mode;
  - a sequence (« SEQ.L ») of decreasing the cooling from the first cooling mode;
  - a sequence (« SEQ.M ») of decreasing the cooling from the second cooling mode;
  - a sequence (« SEQ.N ») of decreasing the cooling from the third cooling mode;
  - a sequence (« SEQ.O ») of decreasing the cooling from the fourth cooling mode;
  - a sequence (« SEQ.P ») of increasing the heating from the ventilation mode;
  - a sequence (« SEQ.Q ») of increasing the heating from the heating mode;
  - a sequence (« SEQ.R ») of decreasing the heating from the heating mode;

- then the second phase is resumed with one of the following two sequences:

- a sequence (« SEQ.S ») of decreasing the relative humidity;
- a sequence (« SEQ.T ») of increasing the relative humidity.

9.  The method according to claim 8, wherein, in the second phase of the piloting sequence (« SEQ.F »), one of the following sequences is implemented for increasing the cooling:

- the sequence (« SEQ.G ») of increasing the cooling from the ventilation mode, in which the temperature (TC1) measured by the first measuring system (C1) is compared with a minimum threshold temperature of the blown air (TSupplyMin) in order to establish whether to switch into the first cooling mode or the second cooling mode;
- the sequence (« SEQ.H ») of increasing the cooling from the first cooling mode, in which switching is made into the third cooling mode with a regulation of the temperature at the outlet of the return humidifier (25R) around a minimum threshold temperature of the blown air (TSupplyMin);
- the sequence (« SEQ.I ») of increasing the cooling from the second cooling mode, in which the capacity of the return humidifier (25R) is tested in order to establish whether to switch into the third refreshing mode or remain in the second cooling mode with a decrease in the regulation temperature (Treghrepr) at the outlet of the return humidifier (25R);
- the sequence (« SEQ.J ») of increasing the cooling from the third refreshing mode, in which the capacity of the return humidifier (25R) and the capacity of the blowing humidifier (25S) are tested, in order to establish whether to switch into the fourth cooling mode or remain in the third cooling mode, possibly with a decrease in the regulation temperature (Treghrepr; Treghsouf) at the outlet of one of the humidifiers (25R; 25S);
- the sequence (« SEQ.K ») of increasing the cooling from the fourth cooling mode, in which the capacity of the return humidifier (25R) and the capacity of the blowing humidifier (25S) are tested, in order to establish an adjustment in the fourth cooling mode which consists in: either decreasing the regulation temperature at the outlet (Treghrepr) of the return humidifier (25R), or decreasing the regulation temperature (Treghsouf) at the outlet of the blowing humidifier (25S), or increasing the regulation temperature at the outlet of the regeneration heat battery (24R).

10. The method according to claim 8, wherein, in the second phase of the piloting sequence (« SEQ.L »), one of the following sequences is implemented for decreasing the cooling:

- the sequence (« SEQ.L ») of decreasing the cooling from the first cooling mode, in which it is checked whether the cooling decrease request is required for all zones (Zi) and whether a minimum blowing flow rate (DZmini) is implemented for all zones (Zi), in order to establish whether to switch into the ventilation mode or remain in the first cooling mode without adjustment;
- the sequence (« SEQ.M ») of decreasing the cooling from the second cooling mode, in which the increase in the regulation temperature (Treghrepr) at the outlet of the return humidifier (25R) is controlled, then it is checked whether the cooling decrease request is required for all zones (Zi) and the regulation temperature (Treghrepr) at the outlet of the return humidifier (25R) is compared with the maximum (max(TZi)) of the temperatures (TZi) measured in the zones (Zi), in order to establish whether to switch into the ventilation mode or remain in the second cooling mode;
- the sequence (« SEQ.N ») of decreasing the cooling from the third cooling mode, in which the increase in the regulation temperature (Treghsouf) is controlled at the outlet of the blowing humidifier (25S), then the regulation temperature (Treghsouf) at the outlet of the blowing humidifier (25S) is compared with the regulation temperature (Treghrepr) at the outlet of the return humidifier (25R), in order to establish whether to switch into the second cooling mode or remain in the third cooling mode.
- the sequence (« SEQ.O ») of decreasing the cooling from the fourth cooling mode, in which a theoretical blowing temperature (Ttheorsoufl) is calculated if the desiccant wheel (21) was not activated, then this theoretical blowing temperature (Ttheorsoufl) is compared with the regulation temperature (Treghsouf) at the outlet of the blowing humidifier (25S) in order to establish whether to switch into the third cooling mode or remain in the fourth cooling mode with an increase in the regulation temperature (Treghsouf) at the outlet of the blowing humidifier (25S);

11. The method according to claim 8, wherein in the second phase of the piloting sequence (« SEQ.F »), one of the following sequences is implemented for increasing the heating:

- the sequence (« SEQ.P ») of increasing the heating from the ventilation mode, in which switching is made into the heating mode by setting the regulation temperature (Tregchauf) at the outlet of the heating heat battery (24S) at a predetermined initialization value (TheatingInit).

- the sequence (« SEQ.Q ») of increasing the heating from the heating mode, in which we remain in the heating mode by increasing the regulation temperature (Tregchauf) at the outlet of the heating heat battery (24S).

12. The method according to claim 8, wherein, in the sequence (« SEQ.R ») of decreasing the heating from the heating mode, the regulation temperature (Tregchauf) at the outlet of the heating heat battery (24S) is decreased, then it is checked whether the heating decrease request is required for all zones (Zi), the regulation temperature (Tregchauf) at the outlet of the heating heat battery (24S) is compared with the minimum (min(TZi)) of the temperatures (TZi) in the zones (Zi), and it is checked whether the maximum comfort temperature (TCmaxi) has been reached by at least one zone (Zi), in order to establish whether to switch into the third cooling mode, or switch into the ventilation mode or remain in the heating mode.

13. The method according to claim 8, wherein in the sequence (« SEQ.S ») of decreasing relative humidity, the heat exchanger (22) and the desiccant wheel (21) are switched on, then it is checked which operating mode is operating, in order to pilot the other components of the air dryer unit (2).

14. The method according to claim 8, wherein, in the sequence (« SEQ.T ») of increasing the relative humidity, the heat exchanger (22) is switched on, then it is checked which operating mode is in operation, in order to pilot the other components of the air dryer unit (2).

GT

BT

IN

# FIG.1

VR VER

VS

RD

BR

ET

HR

HS

BC

VES

CA

Z

---

41  412        432        43

31        32        27R

33R        28R

411        431

410        24R        C4        25R        FR        ER

26R  23R

20R

SR

ES  20S  FS

C1  26S        29        210        C2        220        BPR        21        22        25S  440  24S  420  23S  C3  SS

441        33S        421

28S

27S        422

44  442  31 32  42

# FIG.3

**FIG.2**

A1

Seq.A

Seq.B

Seq.F

**FIG.4**

B1

Seq.B

**FIG.5**

B2

B3

B5

B4

B6

B7

Seq.C          Seq.D          Seq.E

B8

**FIG.6**

**FIG.7**

E1

E2

Seq.E

E3

E7

E4

E8

E5

E9

E6

E10

E11

**FIG.8**

G1

Seq.G

G2

G3

G5

G4

G6

G7

G8

**FIG.11**

**FIG.9**

FIG.10

F9

F10 ── Seq.F

F11

Seq.G

Seq.H

Seq.I

Seq.J

Seq.K

F12

F13

Seq.L

Seq.M

Seq.N

Seq.O

F14

F15

Seq.P

Seq.Q

F16

Seq.R

F17

Seq.S

F18

Seq.T

F19

H1

H2 ── Seq.H

H3

H4

H5

H6

FIG.12

EP 2 787 294 B1

**FIG.13**

I1

Seq.I

I2

I3

I4

I5

I6

I7

I8

I9

**FIG.14**

J1

Seq.J

J2

J3

J4

J5

J6

J7

J8

J9

J10

J11

J12

J13

J14

J15

J16

J17

52

**FIG.15**

```
        ┌─────────┐
        │   K1    │
        └────┬────┘
             │           ← Seq.K
             ▼
          ◇ K2 ◇ ─────────────────────────────┐
             │                                 ▼
             ▼                            ┌─────────┐
          ◇ K3 ◇ ──────────┐            │   K14   │
             │              ▼            └────┬────┘
    ┌────────────┐   ┌─────────┐         ┌────┴────┐
    │    K4      │   │   K9    │         │   K15   │
    └─────┬──────┘   └────┬────┘         └────┬────┘
    ┌─────┴──────┐   ┌────┴────┐         ┌────┴────┐
    │    K5      │   │   K10   │         │   K16   │
    └─────┬──────┘   └────┬────┘         └────┬────┘
    ┌─────┴──────┐   ┌────┴────┐         ┌────┴────┐
    │    K6      │   │   K11   │         │   K17   │
    └─────┬──────┘   └────┬────┘         └────┬────┘
    ┌─────┴──────┐   ┌────┴────┐         ┌────┴────┐
    │    K7      │   │   K12   │         │   K18   │
    └─────┬──────┘   └────┬────┘         └────┬────┘
    ┌─────┴──────┐   ┌────┴────┐              │
    │    K8      │   │   K13   │              │
    └─────┬──────┘   └────┬────┘              │
          │               │                   │
          └───────────────┼───────────────────┘
                          ▼
                    ┌─────────┐
                    │   K19   │
                    └─────────┘
```

**FIG.16**

```
        ┌─────────┐
        │   L1    │
        └────┬────┘
             │           ← Seq.L
             ▼
          ◇ L2 ◇ ───────────────┐
             │                   │
             ▼                   │
          ◇ L3 ◇ ──────┐        │
             │          ▼        ▼
             │     ┌──────────────┐
             │     │     L5       │
             │     └──────┬───────┘
        ┌────┴───┐        │
        │   L4   │        │
        └────┬───┘        │
             │            │
             └─────┬──────┘
                   ▼
             ┌─────────┐
             │   L6    │
             └─────────┘
```

M1

M2 ← Seq.M

M3

M4

M6

M5

M7

M8

**FIG.17**

N1

N2 ← Seq.N

N3

**FIG.18**

N7

N4

N8

N5

N9

N6

N10

**FIG.19**

Seq.O

```
        O1
        │
        ▼
        O2
        │
        ▼
        O3 ──────────────┐
        │                ▼
        ▼               O8
        O4               │
        │                ▼
        ▼               O9
        O5               │
        │                ▼
        ▼              O10
        O6               │
        │                ▼
        ▼              O11
        O7               │
        │                ▼
        └──────┐        O12
               │         │
               ▼─────────┘
              O13
```

Seq.P

```
   P1
   │
   ▼
   P2
   │
   ▼
   P3
   │
   ▼
   P4
   │
   ▼
   P5
```

**FIG.20**

**FIG.21**

Q1 → Seq.Q

Q1
↓
Q2
↓
Q3
↓
Q4

**FIG.22**

R1
↓
R2
↓
R3 → Seq.R

R1
↓
R2
↓
R3 ──────────────→
↓
R4 ──────→
↓           ↓
R5 ──→    R11
↓    ↓     ↓
R6  R10   R12
↓
R7
↓
R8
↓
R9
↓
R13

**FIG.23**

Seq.S

S1

S2

S3

S4

S5

S6

S7

S8

S12

S13

S14

S18

S19

S20

S21

S9

S10

S11

S15

S16

S17

S22

**FIG.25**

T (°C)

CTZ1
CTZ2

CTZ3
CTZ4

CT$_{C1}$

28

26

24

22

20

18

J1(0h)    J1(12h)    J2(0h)    J2(12h)    J3(0h)    J3(12h)    J4(0h)

t

## FIG.24

## FIG.26

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 0034719 A